# FASCICULE DE BREVET EUROPEEN

(11) **EP 2 507 252 B1**
(45) Date de publication et mention de la délivrance du brevet: **17.02.2016**
(21) Numéro de dépôt: 10792990.3
(22) Date de dépôt: 10.11.2010
(51) Int. Cl.: C07F 13/00, C07F 15/02, C07F 3/08, C07F 15/04, C09K 11/06, C09K 11/08, G01N 21/29, G01N 21/84

(54) **MATERIAUX A TRANSITION DE SPIN THERMOCHROMES DOPES PAR UN OU PLUSIEURS AGENTS FLUORESCENTS**
WÄRMEEMPFINDLICHE, MIT EINEM ODER MEHREREN LEUCHTSTOFFEN DOTIERTE SPINÜBERGANGSMATERIALIEN
HEAT-SENSITIVE SPIN-TRANSITION MATERIALS DOPED WITH ONE OR MORE FLUORESCENT AGENTS

(30) Priorité: 12.11.2009 FR 0957964
(43) Date de publication de la demande: 10.10.2012
(73) Titulaire: Centre National de la Recherche Scientifique (CNRS), 75016 Paris (FR)
(72) Inventeur: BOUSSEKSOU, Azzedine, F-31100 Toulouse (FR); SALMON, Lionel, F-11600 Villegailhenc (FR); MOLNAR, Gabor, F-31400 Toulouse (FR); COBO, Saioa, F-38340 Voreppe (FR)
(74) Mandataire: Domenego, Bertrand
(86) Numéro de dépôt international: PCT/FR2010/052413
(87) Numéro de publication internationale: WO 2011/058277

(56) Documents cités:
- CANTIN CHRISTOPHE ET AL: "Coexistence of anisotropic and motionally averaged EPR spectra in a Jahn-Teller system: Cu<2+> ion in [Fe(NH2trz)3(NO3)2 compound", 19 août 1998 (1998-08-19), SOLID STATE COMMUNICATIONS 1998 AUG 19 ELSEVIER SCI LTD, VOL. 108, NR. 1, PAGE(S) 17 - 22, XP002587243, le document en entier
- CANTIN C ET AL: "Variable temperature EPR Study of Fe<2+> spin transition in Cu<2+> doped [Fe(trz)(Htrz)2](BF4)", APPLIED MAGNETIC RESONANCE SPRINGER-VERLAG AUSTRIA, vol. 12, no. 1, 1997, pages 87-93, XP002587244, ISSN: 0937-9347

## Description

Le phénomène de transition de spin s'accompagne d'un changement de propriétés, entre autres magnétiques et optiques, permettant, dans le cas de matériaux thermochromes, un changement de couleur significatif, instantané et réversible, à une température donnée. Ces matériaux présentent donc un potentiel d'applications extrêmement variées.

Néanmoins, ces utilisations sont actuellement limitées par la détection optique de ce changement de couleur, qui nécessite une bonne visibilité. Ainsi, pour élargir le champ d'utilisations possibles, il serait désirable de mettre à disposition de nouveaux matériaux à base de composés à transition de spin pouvant être utilisés dans des conditions de faible visibilité ou de nuit.

Cantin et al. (Solid State Comm., 1998, 108(1), 17-22 et Appl. Magn. Resor., 1997, 12(1), 87-93) décrivent des matériaux à transition de spin dopés, dans lesquels l'agent dopant n'est pas fluorescent.

De façon tout à fait originale, les inventeurs ont ainsi envisagé la possibilité de visualiser la transition de température par fluorescence.

Par ailleurs, la faisabilité de compositions comprenant des composés à transition de spin éventuellement dopés par un agent fluorescent, ainsi que leur longévité, notamment dans des conditions extérieures, n'avaient pas encore été suggérées. En effet, les propriétés de transition de spin ont jusqu'alors été mises en évidence avec des matériaux sous forme de poudre, et rien ne laissait penser que ces propriétés de transition de spin pouvaient être maintenues lors d'un mélange avec un agent dopant et/ou dans une composition de type polymérique par exemple. Rien ne laissait penser non plus que la fluorescence pouvait être stoppée (quentchée) par le changement d'état de spin.

Hasegawa et al décrivent dans Chemical Physics 277 (2002), 21-30 un matériau à transition de spin présentrant des propriétés de fluorescence. Ledit matériau fluorescent est un complexe résultant de liaisons de coordination entre le centre fer et un ligand benzimidazole. La fluorescence est une caractéristique intrinsèque et inhérente du composé chimique ainsi formé et ne peut être modulée ni en fonction de la température, ni en fonction de la longueur d'onde d'exitation ; d'autre part, la fluorescence obtenue, mesurée par spéctrophotométrie n'est pas visualisable.

Les présents inventeurs ont maintenant mis au point, et c'est un des objets de la présente invention, de nouveaux matériaux à transition de spin thermochromes, dopés par un ou plusieurs agents fluorescents présentant une longueur d'onde d'excitation correspondante à la longueur d'onde d'absorption du matériau à transition de spin dans un de ses états (bas spin ou haut spin) et non dans l'autre de ses états (respectivement haut spin ou bas spin), le mélange résultant présentant :
- une transition de spin, et
   une émission de fluorescence distincte dans chacun des états de spin, tel que l'agent dopant fluorescent est choisi parmi les molécules organiques, un élément des terres rares ou de transition, ainsi que leurs sels,
   et les molécules organiques sont choisies parmi :
   BM-Terphenyl (λ_{exc}= 251 nm; λₑₘᵢ= 335 nm); p-Terphenyl (λ_{exc}= 275 nm; λₑₘᵢ= 339 nm); TMQ (λ_{exc}= 266 nm; λₑₘᵢ= );BQM (λ_{exc}= 275 nm; λₑₘᵢ=); DMQ (λ_{exc}= 285 nm; λₑₘᵢ=); Butyl-PBD (λ_{exc}= 302 nm; λₑₘᵢ= 368 nm);PBD (λ_{exc}= 302 nm; λₑₘᵢ= 360); TMI (λ_{exc}= 295 nm; λₑₘᵢ=); QUI (λ_{exc}= 310 nm; λₑₘᵢ=); PPO (λ_{exc}= 303 nm; λₑₘᵢ= 365 nm); PPF (λ_{exc}= 324 nm; λₑₘᵢ= 368 nm); p-quaterphenyl (λ_{exc}= 297 nm; λₑₘᵢ=374 nm); BBD (λ_{exc}= 314 nm; λₑₘᵢ= 373 nm); Polyphenyl 1 (λ_{exc}= 308 nm; λₑₘᵢ=); Polyphenyl 2 (λ_{exc}= 308 nm; λₑₘᵢ=); BiBuQ (λ_{exc}= 313 nm; λₑₘᵢ=); Quinolon 390 (λ_{exc}= 355 nm; λₑₘᵢ=); TBS (λ_{exc}= 320 nm; λₑₘᵢ=); α-NPO (λ_{exc}= 333 nm; λₑₘᵢ= 396 nm); Furan 2 (λ_{exc}= 330 nm; λₑₘᵢ= 396 nm); PBBO (λ_{exc}= 327 nm; λₑₘᵢ= 403 nm); DPS (λ_{exc}= 340 nm; λₑₘᵢ=); Stilbene 1 (λ_{exc}= 350 nm; λₑₘᵢ=); BBO (λ_{exc}= 340 nm; λₑₘᵢ= 412 nm); Stilbene 3 (λ_{exc}= 350 nm; λₑₘᵢ=); Carbostyryl 7 (λ_{exc}= 350 nm; λₑₘᵢ= 400 nm); POPOP (λ_{exc}= 358 nm; λₑₘᵢ= 425 nm); Coumarin 4 (λ_{exc}= 372 nm; λₑₘᵢ=445 nm); Bis-MSB (λ_{exc}= 350 nm; λₑₘᵢ= 418 nm); Furan 1 (λ_{exc}= 355 nm; λₑₘᵢ=); Carbostyryl 3 (λ_{exc}= 360 nm; λₑₘᵢ= 425 nm); Coumarin 120 (λ_{exc}= 354 nm; λₑₘᵢ=435 nm); Coumarin 2 (λ_{exc}= 366 nm; λₑₘᵢ= 443 nm); DASPI (λ_{exc}= 472 nm; λₑₘᵢ=); Coumarin 466 (λ_{exc}= 380 nm; λₑₘᵢ=); Coumarin 47 (λ_{exc}= 373 nm; λₑₘᵢ= 450 nm); Coumarin 102 (λ_{exc}= 389 nm; λₑₘᵢ= 465 nm); Coumarin 152A (λ_{exc}= 405 nm; λₑₘᵢ= 510 nm); Coumarin 152 (λ_{exc}= 397 nm; λₑₘᵢ= 510 nm); Coumarin 151 (λ_{exc}= 382 nm; λₑₘᵢ= 480 nm); Coumarin 6H (λ_{exc}= 396 nm; λₑₘᵢ=); Coumarin 307 (λ_{exc}= 395 nm; λₑₘᵢ= 490 nm); Coumarin 500 (λ_{exc}= 395 nm; λₑₘᵢ=); Coumarin 314 (λ_{exc}= 436 nm; λₑₘᵢ= 480 nm); Coumarin 510 (λ_{exc}= 425 nm; λₑₘᵢ=); Coumarin 30 (λ_{exc}= 412 nm; λₑₘᵢ= 488 nm); Coumarin 334 (λ_{exc}= 450 nm; λₑₘᵢ= 495 nm); Coumarin 522 (λ_{exc}= 410 nm; λₑₘᵢ= 522 nm); DASBTI (λ_{exc}= 530 nm; λₑₘᵢ=); Coumarin 7 (λ_{exc}= 433 nm; λₑₘᵢ=493); Brillantsulfaflavin (λ_{exc}= 423 nm; λₑₘᵢ= 517 nm); Coumarin 6 (λ_{exc}= 458 nm; λₑₘᵢ=505 nm); Coumarin 153 (λ_{exc}= 423 nm; λₑₘᵢ= 530 nm); DOCI (λ_{exc}= 485 nm; λₑₘᵢ=); Pyrromethene 546 (λ_{exc}= 494 nm; λₑₘᵢ= 519 nm); DMETCI (λ_{exc}= 540 nm; λₑₘᵢ=); Uranin (λ_{exc}= 500 nm; λₑₘᵢ= 521 nm); Fluorescein 27 (λ_{exc}= 512 nm; λₑₘᵢ= 530 nm); Fluorol 7GA (λ_{exc}= 440 nm; λₑₘᵢ=); Pyrromethene 556 (λ_{exc}= 498 nm; λₑₘᵢ= 533 nm); Pyrromethene 567 (λ_{exc}= 518 nm; λₑₘᵢ= 547 nm); Rhodamine 19 (λ_{exc}= 528 nm; λₑₘᵢ= 544 nm); Pyrromethene 580 (λ_{exc}=519 nm; λₑₘᵢ= 550 nm); DQOCI (λ_{exc}= 592 nm; λₑₘᵢ=); DCI-2 (λ_{exc}= 606 nm; λₑₘᵢ=); Pyrromethene 597 (λ_{exc}= 524 nm; λₑₘᵢ= 557 nm); Sulforhodamine B (λ_{exc}= 556 nm; λₑₘᵢ= 575 nm); Malachit Green (λ_{exc}= 622 nm; λₑₘᵢ= 530 nm); DTCI (λ_{exc}= 557 nm; λₑₘᵢ=); DQTCI (λ_{exc}= 629 nm; λₑₘᵢ=); Rhodamine 101 (methanol) (λ_{exc}= 560 nm; λₑₘᵢ= 589 nm);DCM (λ_{exc}= 472 nm; λₑₘᵢ= 644 nm); Pyrromethene 650 (λ_{exc}= 590 nm; λₑₘᵢ= 612 nm); DODCI (λ_{exc}= 582 nm; λₑₘᵢ=); Sulforhodamine 101 (λ_{exc}= 578 nm; λₑₘᵢ=); Cresyl Violet (λ_{exc}= 601 nm; λₑₘᵢ= 632 nm); Phenoxazone 9 (λ_{exc}= 550 nm; λₘᵢ= 650 nm); Nile Blue (λ_{exc}= 633 nm; λₑₘᵢ= 672 nm); Oxazine 4 (λ_{exc}= 615 nm; λₑₘᵢ=); Rhodamine 700 (λ_{exc}= 643 nm; λₑₘᵢ= 673 nm); Pyridine (λ_{exc}= 480 nm; λₑₘᵢ=); Carbazine 122 (λ_{exc}= 655 nm; λₑₘᵢ=); Oxazine 170 (λ_{exc}= 627 nm; λₑₘᵢ= 650 nm); Oxazine 1 (λ_{exc}= 646 nm; λₑₘᵢ= 670 nm); DTDCI (λ_{exc}= 653 nm; λₑₘᵢ=); Oxazine 750 (λ_{exc}= 667 nm; λₑₘᵢ=); Pyridine 2 (λ_{exc}= 500 nm; λₑₘᵢ=); HIDCI (λ_{exc}= 639 nm; λₑₘᵢ=); Cryptocyanine (λ_{exc}= 708 nm; λₑₘᵢ=720 nm); Styryl 6 (λ_{exc}= 615 nm; λₑₘᵢ=); Styryl 8 (λ_{exc}= 570 nm; λₑₘᵢ=); DDI (λ_{exc}= 710 nm; λₑₘᵢ= 745 nm); Pyridine 4 (λ_{exc}= 550 nm; λₑₘᵢ=); Methly-DOTCI (λ_{exc}= 682 nm; λₑₘᵢ= 718 nm); Styryl 11 (λ_{exc}= 575 nm; λₑₘᵢ=); Rhodamine 800 (methanol) (λ_{exc}= 682 nm; λₑₘᵢ= 700 nm); Styryl 9M (λ_{exc}= 585 nm; λₑₘᵢ=); HITCI (λ_{exc}= 741 nm; λₑₘᵢ= 778 nm); IR 125 (λ_{exc}= 795 nm; λₑₘᵢ= 838 nm); DTTCI (λ_{exc}= 760 nm; λₑₘᵢ= 815 nm); IR 144 (λ_{exc}= 750 nm; λₑₘᵢ= 848 nm); Styryl 15 (λ_{exc}= 648 nm; λₑₘᵢ=); DNTTCI (λ_{exc}= 765 nm; λₑₘᵢ=); HDITCI (λ_{exc}= 780 nm; λₑₘᵢ=); DDTTCI (λ_{exc}= 798 nm; λₑₘᵢ=); DDCI-4 (λ_{exc}= 815 nm; λₑₘᵢ= 850 nm); IR 140 (λ_{exc}= 810 nm; λₑₘᵢ= 860 nm); Styryl 14 (λ_{exc}*=* 588 nm; λₑₘᵢ=); IR 132 (λ_{exc=} 830 nm; λₑₘᵢ= 861 nm); Styryl 20 (λ_{exc}= 645 nm; λₑₘᵢ=); IR 26 (λ_{exc}= 1080 nm; λₑₘᵢ= 1180 nm); IR 5 (λ_{exc}= 1090 nm; λₑₘᵢ=); Aspirin (λ_{exc}=240 nm; λₑₘᵢ=380 nm), Biphenyl (λ_{exc}=270 nm; λₑₘᵢ=385 nm), Ephedrine (λ_{exc}=260 nm; λₑₘᵢ=390 nm), Epinephrine (λ_{exc}=260 nm; λₑₘᵢ=412 nm), Estradiol (λ_{exc}=292 nm; λₑₘᵢ=403 nm), , Ethyl-p-dimethylaminobenzoate (λ_{exc}=310 nm; λₑₘᵢ=330 nm), Lidocaine (λ_{exc}=265 nm; λₑₘᵢ=400 nm), Naphthalene (λ_{exc}=275 nm; λₑₘᵢ=322 nm), Nicotine (λ_{exc}=270 nm; λₑₘᵢ=390 nm), Purine (λ_{exc}=272 nm; λₑₘᵢ=405 nm), Tryptophan (λ_{exc}=295 nm; λₑₘᵢ=340 nm), Tryrosine (λ_{exc}=253 nm; λₑₘᵢ=394 nm), 1,8-ANS (λ_{exc}=372 nm; λₑₘᵢ=480 nm); 4-methylumbelliferone (λ_{exc}=360 nm; λₑₘᵢ=440 nm); 7-amino-4-methylcoumarin (AMC) (λ_{exc}=346 nm; λₑₘᵢ=442 nm); 7-hydroxy-4-methylcoumarin (λ_{exc}=360 nm; λₑₘᵢ=449 nm); ABQ (λ_{exc}=344 nm; λₑₘᵢ=445 nm); Acridine (λ_{exc}=362 nm; λₑₘᵢ=462 nm);Alexa Fluor 350™ (λ_{exc}=346 nm; λₑₘᵢ=442 nm); Alexa Fluor 405™ (λ_{exc}=402 nm; λₑₘᵢ=421 nm); AMCA (Aminomethylcoumarin) (λ_{exc}=350 nm; λₑₘᵢ=450 nm); AMCA-X (λ_{exc}=353 nm; λₑₘᵢ=442 nm); Aminocoumarin (λ_{exc}=350 nm; λₑₘᵢ=445 nm); Anthrocyl stearate (λ_{exc}=370 nm; λₑₘᵢ=446 nm); ATTO 390 (λ_{exc}=390 nm; λₑₘᵢ=479 nm); Beta lactamase (λ_{exc}=409 nm; λₑₘᵢ=450 nm); BFP (Blue Fluorescent Protein) (λ_{exc}=380 nm; λₑₘᵢ=435 nm); Bimane (λ_{exc}=380 nm; λₑₘᵢ=461 nm); Bisbenzimide (Hoechst) (λ_{exc}=360 nm; λₑₘᵢ=461 nm); Blancophor FFG (λ_{exc}=390 nm; λₑₘᵢ=470 nm); Blancophor SV (λ_{exc}=370 nm; λₑₘᵢ=435 nm); Calcein Blue (λ_{exc}=373 nm; λₑₘᵢ=440 nm); Calcofluor White (λ_{exc}=350 nm; λₑₘᵢ=440 nm); Cascade Blue™ (λ_{exc}=401 nm; λₑₘᵢ=420 nm); Catecholamine (λ_{exc}=410 nm; λₑₘᵢ=470 nm); Coumarin Phalloidin (λ_{exc}=548 nm; λₑₘᵢ=559 nm); CPM Methylcoumarin (λ_{exc}=548 nm; λₑₘᵢ=559 nm); DAPI (λ_{exc}=359 nm; λₑₘᵢ=461 nm); EBFP (λ_{exc}=380 nm; λₑₘᵢ=440 nm); Fast Blue (λ_{exc}=360 nm; λₑₘᵢ=440 nm); FIF (Formaldehyde Induced Fluorescence) (λ_{exc}=405 nm; λₑₘᵢ=483 nm); Gloxalic Acid (λ_{exc}=405 nm; λₑₘᵢ=460 nm); Granular Blue (λ_{exc}=355 nm; λₑₘᵢ=425 nm); Hoechst 33258 (λ_{exc}=352 nm; λₑₘᵢ=455 nm); Hoechst 33342 (λ_{exc}=352 nm; λₑₘᵢ=455 nm); Hoechst 34580 (λ_{exc}=392 nm; λₑₘᵢ=440 nm); HPTS (λ_{exc}=355 nm; λₑₘᵢ=465 nm); Indo-1 (λ_{exc}=346 nm; λₑₘᵢ=475 nm); Intrawhite Cf (λ_{exc}=360 nm; λₑₘᵢ=430 nm); Laurodan (λ_{exc}=355 nm; λₑₘᵢ=460 nm); Leucophor PAF, SF, WS (λ_{exc}=370 nm; λₑₘᵢ=430 nm); LysoSensor Blue (λ_{exc}=374 nm; λₑₘᵢ=424 nm); LysoSensor Blue DND-167 (λ_{exc}=374 nm; λₑₘᵢ=425 nm); Lysosensor Blue DND-192 (λ_{exc}=374 nm; λₑₘᵢ=424 nm); LysoTracker Blue (λ_{exc}=373 nm; λₑₘᵢ=422 nm); Mag-Indo-1 (λ_{exc}=349 nm; λₑₘᵢ=480 nm); Marina Blue (λ_{exc}=365 nm; λₑₘᵢ=460 nm); Methoxycoumarin (λ_{exc}=360 nm; λₑₘᵢ=410 nm); Monochlorobimane (λ_{exc}=380 nm; λₑₘᵢ=461 nm); Pacific Blue™ (λ_{exc}=410 nm; λₑₘᵢ=455 nm); PBFI (λ_{exc}=360 nm; λₑₘᵢ=420 nm); Phorwite AR (λ_{exc}=360 nm; λₑₘᵢ=430 nm); Phorwite BKL (λ_{exc}=370 nm; λₑₘᵢ=430 nm); Phorwite Rev (λ_{exc}=380 nm; λₑₘᵢ=430 nm); Phorwite RPA (λ_{exc}=375 nm; λₑₘᵢ=430 nm); SBFI (λ_{exc}=360 nm; λₑₘᵢ=420 nm); sgBFP™ (λ_{exc}=387 nm; λₑₘᵢ=450 nm); SITS (Primuline) (λ_{exc}=410 nm; λₑₘᵢ=450 nm); SITS (Stilbene Isothiosulphonic Acid) (λ_{exc}=365 nm; λₑₘᵢ=460 nm); SPQ (6-methoxy-N-(3-sulfopropyl)quinolinium) (λ_{exc}=344 nm; λₑₘᵢ=433 nm); TagBFP (λ_{exc}=402 nm; λₑₘᵢ=457 nm); Thioflavin TCN (λ_{exc}=350 nm; λₑₘᵢ=460 nm); Thiolyte (λ_{exc}=378 nm; λₑₘᵢ=483 nm); Tinopol CBS (Calcofluor White) (λ_{exc}=390 nm; λₑₘᵢ=430 nm); True Blue (λ_{exc}=365 nm; λₑₘᵢ=425 nm); Uvitex SFC (λ_{exc}=365 nm; λₑₘᵢ=435 nm); Y66H (λ_{exc}=360 nm; λₑₘᵢ=442 nm); ACMA (9-amino-6-chloro-2-methoxyacridine) (λ_{exc}=421 nm; λₑₘᵢ=473 nm); AmCyan (λ_{exc}=454 nm; λₑₘᵢ=488 nm); AmCyan1 (λ_{exc}=458 nm; λₑₘᵢ=489 nm); Astrazon Yellow 7 GLL (λ_{exc}=450 nm; λₑₘᵢ=480 nm); Atabrine (λ_{exc}=436 nm; λₑₘᵢ=490 nm); ATTO 425 (λ_{exc}=436 nm; λₑₘᵢ=484 nm); BOBO-1, BO-PRO-1 (λ_{exc}=462 nm; λₑₘᵢ=481 nm); Cerulean (λ_{exc}=434 nm; λₑₘᵢ=475 nm); CFP (cyan GFP) (λ_{exc}=434 nm; λₑₘᵢ=477 nm); Chromomycin A (λ_{exc}=448 nm; λₑₘᵢ=470 nm); Coelenterazine F (λ_{exc}=437 nm; λₑₘᵢ=473 nm); DEAC (λ_{exc}=432 nm; λₑₘᵢ=472 nm); ECFP (λ_{exc}=434 nm; λₑₘᵢ=477 nm); Genacryl Brilliant Yellow 10GF (λ_{exc}=430 nm; λₑₘᵢ=485 nm); Genacryl Yellow 5GF (λ_{exc}=430 nm; λₑₘᵢ=475 nm); Mitramycin (λ_{exc}=450 nm; λₑₘᵢ=470 nm); POPO-1, PO-PRO-1 (λ_{exc}=434 nm; λₑₘᵢ=456 nm); Sevron Yellow L (λ_{exc}=430 nm; λₑₘᵢ=490 nm); SpectrumAqua (λ_{exc}=433 nm; λₑₘᵢ=480 nm); SYTO Blue Fluorescent Nucleic Acid Stain 43 (λ_{exc}=436 nm; λₑₘᵢ=467 nm); SYTO Blue Fluorescent Nucleic Acid Stain 44 (λ_{exc}=446 nm; λₑₘᵢ=471 nm); SYTO Blue Fluorescent Nucleic Acid Stain 45 (λ_{exc}=452 nm; λₑₘᵢ=484 nm); SYTOX Blue (λ_{exc}=445 nm; λₑₘᵢ=470 nm); TagCFP (λ_{exc}=458 nm; λₑₘᵢ=480 nm); Thiozole Orange (λ_{exc}=453 nm; λₑₘᵢ=480 nm); Y66W (λ_{exc}=436 nm; λₑₘᵢ=485 nm); Cascade Yellow™ (λ_{exc}=402 nm; λₑₘᵢ=545 nm); EFL® 97 alcohol (λ_{exc}=345 nm; λₑₘᵢ=530 nm); ER-Tracker™ Blue-White DPX (λ_{exc}=372 nm; λₑₘᵢ=556 nm); Fura-2 363, 335 (λ_{exc}=512 nm; λₑₘᵢ=505 nm); LysoSensor Yellow/Blue (λ_{exc}=0 nm; λₑₘᵢ=0 nm); 2-dodecylresorufin-lipid (λ_{exc}=582 nm; λₑₘᵢ=595 nm); AcGFP1 (λ_{exc}=475 nm; λₑₘᵢ=505 nm); ATTO 465 (λ_{exc}=453 nm; λₑₘᵢ=508 nm); Aurophosphine (λ_{exc}=470 nm; λₑₘᵢ=515 nm); BCECF (low pH) (λ_{exc}=482 nm; λₑₘᵢ=520 nm); bis-BTC (λ_{exc}=455 nm; λₑₘᵢ=529 nm); CFP (cyan GFP) (λ_{exc}=434 nm; λₑₘᵢ=477 nm); Chromomycin A (λ_{exc}=448 nm; λₑₘᵢ=470 nm); Cy2™ (λ_{exc}=489 nm; λₑₘᵢ=506 nm); CyQuant Cell Proliferation Assay (λ_{exc}=480 nm; λₑₘᵢ=520 nm); DiO (λ_{exc}=475 nm; λₑₘᵢ=500 nm); DyLight 488 (λ_{exc}=491 nm; λₑₘᵢ=519 nm); EGFP (λ_{exc}=489 nm; λₑₘᵢ=508 nm); Emerald (λ_{exc}=490 nm; λₑₘᵢ=510 nm); GFP (EGFP) (λ_{exc}=489 nm; λₑₘᵢ=508 nm); NBD Amine (λ_{exc}=450 nm; λₑₘᵢ=530 nm); Nitrobenzoxadidole (λ_{exc}=465 nm; λₑₘᵢ=510 nm); Nylosan Brilliant Lavin E8G (λ_{exc}=460 nm; λₑₘᵢ=510 nm); S65C (λ_{exc}=479 nm; λₑₘᵢ=507 nm); S65L (λ_{exc}=484 nm; λₑₘᵢ=510 nm); S65T (λ_{exc}=488 nm; λₑₘᵢ=511 nm); sgGFP™ (super glow GFP) (λ_{exc}=474 nm; λₑₘᵢ=509 nm); SYTO Blue Fluorescent Nucleic Acid Stain 45 (λ_{exc}=452 nm; λₑₘᵢ=484 nm); SYTO Green Fluorescent Nucleic Acid Stains 12, 13, 16, 21, 23, 24 (λ_{exc}=494 nm; λₑₘᵢ=515 nm); SYTOX Blue (λ_{exc}=445 nm; λₑₘᵢ=470 nm); TagGFP2 (λ_{exc}=483 nm; λₑₘᵢ=506 nm); Thiozole Orange (λ_{exc}=453 nm; λₑₘᵢ=480 nm); TurboGFP (λ_{exc}=482 nm; λₑₘᵢ=502 nm); wtGFP (wild type GFP, non-UV excitation) (λ_{exc}=475 nm; λₑₘᵢ=509 nm); Y66W (λ_{exc}=436 nm; λₑₘᵢ=485 nm); YOYO-1, YO-PRO-1 (λ_{exc}=491 nm; λₑₘᵢ=509 nm); 2-dodecylresorufin-lipid (λ_{exc}=582 nm; λₑₘᵢ=595 nm); 5-carboxy-2,7-dichlorofluorescein (λ_{exc}=504 nm; λₑₘᵢ=529 nm); 5-FAM (5-carboxyfluorescein) (λ_{exc}=492 nm; λₑₘᵢ=518 nm); Acridine (λ_{exc}=362 nm; λₑₘᵢ=462 nm); Acridine Orange (λ_{exc}=500 nm; λₑₘᵢ=526 nm); Acridine Orange + DNA (λ_{exc}=500 nm; λₑₘᵢ=52675 nm); Acridine Yellow (λ_{exc}=470 nm; λₑₘᵢ=550 nm); Alexa Fluor 488™ (λ_{exc}=495 nm; λₑₘᵢ=519 nm); Alexa Fluor 500™ (λ_{exc}=503 nm; λₑₘᵢ=525 nm); Astrazon Orange R (λ_{exc}=470 nm; λₑₘᵢ=540 nm); ATTO 488 (λ_{exc}=501 nm; λₑₘᵢ=523 nm); ATTO 495 (λ_{exc}=495 nm; λₑₘᵢ=527 nm); ATTO-TAG™ CBQCA (λ_{exc}=465 nm; λₑₘᵢ=560 nm); Auramine (λ_{exc}=460 nm; λₑₘᵢ=550 nm); BCECF (high pH) (λ_{exc}=503 nm; λₑₘᵢ=528 nm); BCECF (low pH) (λ_{exc}=482 nm; λₑₘᵢ=520 nm); BODIPY (λ_{exc}=505 nm; λₑₘᵢ=513 nm); BODIPY 492/515 (λ_{exc}=490 nm; λₑₘᵢ=515 nm); BODIPY 505/515 (λ_{exc}=502 nm; λₑₘᵢ=510 nm); BODIPY FL (λ_{exc}=505 nm; λₑₘᵢ=513 nm); BTC (λ_{exc}=464 nm; λₑₘᵢ=530 nm); Calcein (λ_{exc}=494 nm; λₑₘᵢ=517 nm); CFDA (λ_{exc}=494 nm; λₑₘᵢ=520 nm); CMFDA (λ_{exc}=494 nm; λₑₘᵢ=520 nm); Cyclic AMP Fluorosensor (FiCRhR) (λ_{exc}=500 nm; λₑₘᵢ=517 nm); DCFDA (λ_{exc}=504 nm; λₑₘᵢ=529 nm); DTAF (λ_{exc}=494 nm; λₑₘᵢ=520 nm); DyLight 488 (λ_{exc}=491 nm; λₑₘᵢ=519 nm); Emerald (λ_{exc}=490 nm; λₑₘᵢ=510 nm); ER-Tracker™ Green (λ_{exc}=504 nm; λₑₘᵢ=511 nm); FAM (λ_{exc}=492 nm; λₑₘᵢ=518 nm); FDA (λ_{exc}=494 nm; λₑₘᵢ=520 nm); FITC (Fluorescein) (λ_{exc}=492 nm; λₑₘᵢ=520 nm); Fluo-4 (λ_{exc}=494 nm; λₑₘᵢ=516 nm); Fluoro-Emerald (λ_{exc}=495 nm; λₑₘᵢ=524 nm); FluorX (λ_{exc}=494 nm; λₑₘᵢ=520 nm); FluoSpheres Yellow-Green (λ_{exc}=503 nm; λₑₘᵢ=514 nm); HCS LipidTOX Green (λ_{exc}=504 nm; λₑₘᵢ=536 nm); HiLyte Fluor™ 488 (λ_{exc}=497 nm; λₑₘᵢ=525 nm); JC-1 (λ_{exc}=498 nm; λₑₘᵢ=525 nm); JC-9 (λ_{exc}=506 nm; λₑₘᵢ=525 nm); LIVE/DEAD Kit Animal Cells (λ_{exc}=494 nm; λₑₘᵢ=517 nm); LysoTracker Blue-White (λ_{exc}=466 nm; λₑₘᵢ=536 nm); LysoTracker Green (λ_{exc}=504 nm; λₑₘᵢ=511 nm); mHoneydew (λ_{exc}=478 nm; λₑₘᵢ=561 nm); MitoTracker™ Green (λ_{exc}=490 nm; λₑₘᵢ=516 nm); NBD (λ_{exc}=466 nm; λₑₘᵢ=539 nm); NBD-X (λ_{exc}=467 nm; λₑₘᵢ=538 nm); NeuroTrace 500/525 Green Fluorescent Nissl Stain (λ_{exc}=500 nm; λₑₘᵢ=525 nm); Nissl (λ_{exc}=497 nm; λₑₘᵢ=524 nm); Oregon Green™ (λ_{exc}=503 nm; λₑₘᵢ=522 nm); Oregon Green™ 488 (λ_{exc}=496 nm; λₑₘᵢ=524 nm); Oregon Green™ 500 (λ_{exc}=497 nm; λₑₘᵢ=517 nm); Oregon Green™ 514 (λ_{exc}=511 nm; λₑₘᵢ=530 nm); PicoGreen® (λ_{exc}=502 nm; λₑₘᵢ=522 nm); PKH67 (λ_{exc}=496 nm; λₑₘᵢ=520 nm); Rhod-123 (λ_{exc}=507 nm; λₑₘᵢ=529 nm); Rhodamine 110 (λ_{exc}=496 nm; λₑₘᵢ=520 nm); Rhodol Green (λ_{exc}=496 nm; λₑₘᵢ=523 nm); rsGFP (red shifted GFP, S65T) (λ_{exc}=498 nm; λₑₘᵢ=516 nm); Sodium Green (λ_{exc}=506 nm; λₑₘᵢ=532 nm); SYTO Green Fluorescent Nucleic Acid Stains 12,13,16,21,23,24 (λ_{exc}=494 nm; λₑₘᵢ=515 nm); SYTOX Green (λ_{exc}=504 nm; λₑₘᵢ=523 nm); TagGFP2 (λ_{exc}=483 nm; λₑₘᵢ=506 nm); TurboGFP (λ_{exc}=482 nm; λₑₘᵢ=502 nm); 6-Carboxyrhodamine 6G (λ_{exc}=525 nm; λₑₘᵢ=555 nm); Alexa Fluor 514™ (λ_{exc}=518 nm; λₑₘᵢ=543 nm); ATTO 488 (λ_{exc}=501 nm; λₑₘᵢ=523 nm); ATTO 495 (λ_{exc}=495 nm; λₑₘᵢ=527 nm); ATTO 520 (λ_{exc}=516 nm; λₑₘᵢ=538 nm); BCECF (high pH) (λ_{exc}=503 nm; λₑₘᵢ=528 nm); CAL Fluor® Gold 540 (λ_{exc}=522 nm; λₑₘᵢ=544 nm); Calcium Green-1 (λ_{exc}=506 nm; λₑₘᵢ=531 nm); Calcium Green-2 (including Ca2+) (λ_{exc}=506 nm; λₑₘᵢ=536 nm); Calcium Green-5N (including Ca2+) (λ_{exc}=506 nm; λₑₘᵢ=532 nm); CI-NERF, CL-NERF (λ_{exc}=509 nm; λₑₘᵢ=540 nm); DCFH (Dichlorodihydrofluorescein Diacetate) (λ_{exc}=505 nm; λₑₘᵢ=535 nm); DHR (Dihydrorhodamine 123) (λ_{exc}=505 nm; λₑₘᵢ=534 nm); DM-NERF (λ_{exc}=500 nm; λₑₘᵢ=540 nm); Eosin (λ_{exc}=525 nm; λₑₘᵢ=546 nm); EYFP (λ_{exc}=513 nm; λₑₘᵢ=527 nm); FlAsH-CCPFCC (λ_{exc}=511 nm; λₑₘᵢ=530 nm); Fluo-3 (λ_{exc}=506 nm; λₑₘᵢ=526 nm); HCS LipidTOX Green (λ_{exc}=504 nm; λₑₘᵢ=536 nm); JO-JO-1, JO-PRO-1 (λ_{exc}=530 nm; λₑₘᵢ=545 nm); Magnesium Green (λ_{exc}=506 nm; λₑₘᵢ=531 nm); mHoneydew (λ_{exc}=478 nm; λₑₘᵢ=561 nm); Rhodamine 123 (λ_{exc}=507 nm; λₑₘᵢ=529 nm); Rhodamine 6G (λ_{exc}=525 nm; λₑₘᵢ=555 nm); Rhodamine Green (λ_{exc}=502 nm; λₑₘᵢ=527 nm); SpectrumGreen (λ_{exc}=497 nm; λₑₘᵢ=538 nm); SYTO Green Fluorescent Nucleic Acid Stains 11,14,15,20,22,25 (λ_{exc}=515 nm; λₑₘᵢ=543 nm); SYTO Orange Fluorescent Nucleic Acid Stains 80,81,82,83 (λ_{exc}=537 nm; λₑₘᵢ=552 nm); TagYFP (λ_{exc}=508 nm; λₑₘᵢ=524 nm); TET (λ_{exc}=521 nm; λₑₘᵢ=536 nm); TOTO-1, TO-PRO-1 (λ_{exc}=509 nm; λₑₘᵢ=533 nm); TurboYFP (λ_{exc}=525 nm; λₑₘᵢ=538 nm); YFP (yellow GFP) (λ_{exc}=513 nm; λₑₘᵢ=527 nm); ZsYellow1 (λ_{exc}=529 nm; λₑₘᵢ=539 nm); 5-TAMRA (5-carboxytetramethylrhodamine, high pH) (λ_{exc}=542 nm; λₑₘᵢ=568 nm); Alexa Fluor 532™ (λ_{exc}=531 nm; λₑₘᵢ=554 nm); Alexa Fluor 546™ (λ_{exc}=556 nm; λₑₘᵢ=573 nm); Alizarin Red (λ_{exc}=540 nm; λₑₘᵢ=580 nm); Astrazon Brilliant Red 4G (λ_{exc}=500 nm; λₑₘᵢ=585 nm); BO-PRO™-3 (λ_{exc}=544 nm; λₑₘᵢ=570 nm); BODIPY 542/563 (λ_{exc}=543 nm; λₑₘᵢ=563 nm); BODIPY 558/568 (λ_{exc}=558 nm; λₑₘᵢ=569 nm); BODIPY TMR-X (λ_{exc}=542 nm; λₑₘᵢ=574 nm); CAL Fluor Orange 560 (λ_{exc}=464 nm; λₑₘᵢ=530 nm); DiI (λ_{exc}=551 nm; λₑₘᵢ=565 nm); Ethidium Bromide (λ_{exc}=518 nm; λₑₘᵢ=605 nm); Genacryl Brilliant Red B (λ_{exc}=520 nm; λₑₘᵢ=590 nm); HEX (λ_{exc}=535 nm; λₑₘᵢ=556 nm); HiLyte Fluor™ 555 (λ_{exc}=550 nm; λₑₘᵢ=566 nm); JOE (λ_{exc}=525 nm; λₑₘᵢ=555 nm); mOrange (λ_{exc}=548 nm; λₑₘᵢ=568 nm); mStrawberry (λ_{exc}=575 nm; λₑₘᵢ=596 nm); mTangerine (λ_{exc}=568 nm; λₑₘᵢ=585 nm); NED (λ_{exc}=546 nm; λₑₘᵢ=575 nm); Nile Red (λ_{exc}=549 nm; λₑₘᵢ=628 nm); OFP (λ_{exc}=547 nm; λₑₘᵢ=567 nm); pHrodo™ (λ_{exc}=560 nm; λₑₘᵢ=587 nm); PKH26 (Sigma) (λ_{exc}=551 nm; λₑₘᵢ=567 nm); PO-PRO-3 (λ_{exc}=539 nm; λₑₘᵢ=567 nm); POPO-3 (λ_{exc}=533 nm; λₑₘᵢ=574 nm); Pro-Q Diamond (λ_{exc}=556 nm; λₑₘᵢ=583 nm); Rhod-2 (λ_{exc}=552 nm; λₑₘᵢ=578 nm); Rhodamine (λ_{exc}=550 nm; λₑₘᵢ=573 nm); Rhodamine BB (λ_{exc}=540 nm; λₑₘᵢ=580 nm); Rhodamine BG (λ_{exc}=540 nm; λₑₘᵢ=572 nm); Rhodamine Phalloidine (λ_{exc}=542 nm; λₑₘᵢ=565 nm); Rose Bengal (λ_{exc}=533 nm; λₑₘᵢ=575 nm); Sevron Brilliant Red 2B (λ_{exc}=520 nm; λₑₘᵢ=595 nm); Sevron Brilliant Red B (λ_{exc}=530 nm; λₑₘᵢ=590 nm); SpectrumOrange (λ_{exc}=559 nm; λₑₘᵢ=588 nm); Sulphorhodamine B can C (λ_{exc}=520 nm; λₑₘᵢ=595 nm); SYTOX Orange (λ_{exc}=547 nm; λₑₘᵢ=510 nm); TagRFP (λ_{exc}=555 nm; λₑₘᵢ=584 nm); TMR (λ_{exc}=542 nm; λₑₘᵢ=574 nm); TRITC (Tetramethylrhodamine) (λ_{exc}=555 nm; λₑₘᵢ=580 nm); TurboRFP (λ_{exc}=553 nm; λₑₘᵢ=574 nm); Xylene Orange (λ_{exc}=546 nm; λₑₘᵢ=580 nm); Alexa Fluor 555™ (λ_{exc}=555 nm; λₑₘᵢ=565 nm); BOB0O™-3 (λ_{exc}=570 nm; λₑₘᵢ=602 nm); BODIPY 558/568 (λ_{exc}=558 nm; λₑₘᵢ=569 nm); BODIPY 564/570 (λ_{exc}=564 nm; λₑₘᵢ=570 nm); CAL Fluor Red 590 (λ_{exc}=569 nm; λₑₘᵢ=591 nm); Calcium Orange (λ_{exc}=579 nm; λₑₘᵢ=575 nm); Carboxy SNARF Indicators (λ_{exc}=548 nm; λₑₘᵢ=587 nm); CoralHue Kusabira Orange (mKO) (λ_{exc}=548 nm; λₑₘᵢ=559 nm); Cy3™ (λ_{exc}=552 nm; λₑₘᵢ=570 nm); (λ_{exc}=360 nm; λₑₘᵢ=442 nm); DsRed Monomer (λ_{exc}=556 nm; λₑₘᵢ=586 nm); DsRed-Express(λ_{exc}=557 nm; λₑₘᵢ=579 nm); DsRed2 (λ_{exc}=563 nm; λₑₘᵢ=582 nm); dTomato (λ_{exc}=554 nm; λₑₘᵢ=581 nm); DyLight 549 (λ_{exc}=553 nm; λₑₘᵢ=569 nm); Ethidium Homodimer-1 (EthD-1) (λ_{exc}=528 nm; λₑₘᵢ=617 nm); Fluor-Ruby (λ_{exc}=555 nm; λₑₘᵢ=582 nm); Haematoporphyrin (λ_{exc}=545 nm; λₑₘᵢ=580 nm); ssamine Rhodamine (λ_{exc}=572 nm; λₑₘᵢ=591 nm) ; LO-PRO-1 (λ_{exc}=568 nm; λₑₘᵢ=581 nm); LOLO-1 (λ_{exc}=566 nm; λₑₘᵢ=580 nm); LysoTracker Red (λ_{exc}=577 nm; λₑₘᵢ=592 nm); LysoTracker Yellow (λ_{exc}=551 nm; λₑₘᵢ=576 nm); Mag-Fura Red (λ_{exc}=483 nm; λₑₘᵢ=659 nm); Magdala Red (Phloxin B) (λ_{exc}=524 nm; λₑₘᵢ=600 nm); Magnesium Orange (λ_{exc}=550 nm; λₑₘᵢ=575 nm); Merocyanin (λ_{exc}=555 nm; λₑₘᵢ=578 nm); MitoTracker™ Orange (λ_{exc}=551 nm; λₑₘᵢ=576 nm); mOrange (λ_{exc}=548 nm; λₑₘᵢ=568 nm); mStrawberry (λ_{exc}=575 nm; λₑₘᵢ=596 nm); mTangerine (λ_{exc}=568 nm; λₑₘᵢ=585 nm); OFP (λ_{exc}=547 nm; λₑₘᵢ=567 nm); Phloxin B (Magdala Red) (λ_{exc}=524 nm; λₑₘᵢ=600 nm); Phycoerythrin (PE) (λ_{exc}=565 nm; λₑₘᵢ=575 nm); PKH26 (λ_{exc}=559 nm; λₑₘᵢ=575 nm); Pontochrome Blue Black (λ_{exc}=545 nm; λₑₘᵢ=605 nm); Pyronine B (λ_{exc}=565 nm; λₑₘᵢ=605 nm); Quasar 570 (λ_{exc}=547 nm; λₑₘᵢ=570 nm); R-phycoerythrin (PE) (λ_{exc}=565 nm; λₑₘᵢ=575 nm); Resorufin (λ_{exc}=571 nm; λₑₘᵢ=585 nm); Rhodamine B 200 (λ_{exc}=540 nm; λₑₘᵢ=595 nm) Rhodamine Phallicidine λ_{exc}=558 nm; λₑₘᵢ=575 nm); Rhodamine Red (λ_{exc}=560 nm; λₑₘᵢ=580 nm); ROX (λ_{exc}=568 nm; λₑₘᵢ=595 nm); SNARF (carboxy) 488 Excitation pH6 (λ_{exc}=549 nm; λₑₘᵢ=589 nm); SNARF (carboxy) 514 Excitation pH6 (λ_{exc}=549 nm; λₑₘᵢ=586 nm); SpectrumOrange (λ_{exc}=559 nm; λₑₘᵢ=588 nm); SYTO Orange Fluorescent Nucleic Acid Stains 84,85 (λ_{exc}=567 nm; λₑₘᵢ=583 nm); TAMRA (λ_{exc}=565 nm; λₑₘᵢ=580 nm); Tetramethylrhodamine, Rhodamine B (λ_{exc}=555 nm; λₑₘᵢ=580 nm); X-Rhodamine (λ_{exc}=570 nm; λₑₘᵢ=576 nm); 5-chloromethylfluorescein (λ_{exc}=491 nm; λₑₘᵢ=517 nm); 5-ROX (carboxy-X-rhodamine) (λ_{exc}=580 nm; λₑₘᵢ=605 nm); 7-AAD (λ_{exc}=546 nm; λₑₘᵢ=647 nm); 7-aminoactinomycin D (7-AAD) (λ_{exc}=546 nm; λₑₘᵢ=647 nm); Acid Fuchsin (λ_{exc}=540 nm; λₑₘᵢ=630 nm); Alexa Fluor 568™ (λ_{exc}=578 nm; λₑₘᵢ=603 nm); Alexa Fluor 594™ (λ_{exc}=590 nm; λₑₘᵢ=617 nm); Aminoactinomycin D (λ_{exc}=555 nm; λₑₘᵢ=655 nm); AsRed 2 (λ_{exc}=576 nm; λₑₘᵢ=592 nm); ATTO 565 (λ_{exc}=563 nm; λₑₘᵢ=592 nm); BODIPY TR (λ_{exc}=589 nm; λₑₘᵢ=617 nm); BODIPY TR ATP (λ_{exc}=591 nm; λₑₘᵢ=620 nm); BODIPY TR-X (λ_{exc}=589 nm; λₑₘᵢ=617 nm); BODIPY TR-X SE (λ_{exc}=588 nm; λₑₘᵢ=616 nm); CAL Fluor Red 610 (λ_{exc}=590 nm; λₑₘᵢ=610 nm); Calcium Crimson™ (λ_{exc}=588 nm; λₑₘᵢ=611 nm); Cy3.5™ (λ_{exc}=580 nm; λₑₘᵢ=591 nm); ER-Tracker™ Red (λ_{exc}=587 nm; λₑₘᵢ=615 nm); Feulgen (Pararosaniline) (λ_{exc}=570 nm; λₑₘᵢ=625 nm) FluoSpheres Red (λ_{exc}=656 nm; λₑₘᵢ=683 nm); Fura Red™ (high pH) (λ_{exc}=572 nm; λₑₘᵢ=657 nm); HcRed (λ_{exc}=590 nm; λₑₘᵢ=614 nm); HCS LipidTOX Red (λ_{exc}=582 nm; λₑₘᵢ=616 nm); LysoTracker Red DND-99 (L-7528) (λ_{exc}=577 nm; λₑₘᵢ=590 nm); mCherry (RFP) (λ_{exc}=587 nm; λₑₘᵢ=610 nm); MitoTracker™ Red (λ_{exc}=578 nm; λₑₘᵢ=599 nm); mKate2 (λ_{exc}=588 nm; λₑₘᵢ=633 nm); mPlum (λ_{exc}=594 nm; λₑₘᵢ=648 nm); Nile Red (λ_{exc}=549 nm; λₑₘᵢ=628 nm); Propidium Iodide (PI) (λ_{exc}=536 nm; λₑₘᵢ=617 nm); Rhodamine Red Dye (λ_{exc}=570 nm; λₑₘᵢ=590 nm); SNARF (carboxy) Excitation pH9 (λ_{exc}=576 nm; λₑₘᵢ=639 nm); SpectrumRed (λ_{exc}=587 nm; λₑₘᵢ=612 nm); SYTO 64 (λ_{exc}=599 nm; λₑₘᵢ=619 nm); SYTO Red Fluorescent Nucleic Acid Stain 64 (λ_{exc}=567 nm; λₑₘᵢ=583 nm); Texas Red-X® Conjugate (λ_{exc}=595 nm; λₑₘᵢ=615 nm); Texas Red® (λ_{exc}=595 nm; λₑₘᵢ=615 nm); Thiazine Red R (λ_{exc}=596 nm; λₑₘᵢ=615 nm); TRITC (Tetramethylrhodamine) (λ_{exc}=555 nm; λₑₘᵢ=580 nm); TurboFP602 (λ_{exc}=574 nm; λₑₘᵢ=620 nm); TurboFP635 (λ_{exc}=588 nm; λₑₘᵢ=635 nm); WW 781 (λ_{exc}=605 nm; λₑₘᵢ=639 nm); X-Rhod-1 Indicator (λ_{exc}=580 nm; λₑₘᵢ=602 nm); 5-carboxynapthofluorescein (pH 10) (λ_{exc}=555 nm; λₑₘᵢ=615 nm); 5-chloromethylfluorescein (λ_{exc}=491 nm; λₑₘᵢ=517 nm); ATTO 565 (λ_{exc}=563 nm; λₑₘᵢ=592 nm); FluoSpheres Red (λ_{exc}=656 nm; λₑₘᵢ=683 nm); HCS LipidTOX Red (λ_{exc}=582 nm; λₑₘᵢ=616 nm); mCherry (RFP) (λ_{exc}=587 nm; λₑₘᵢ=610 nm); mKate2 (λ_{exc}=588 nm; λₑₘᵢ=633 nm); TurboFP602 (λ_{exc}=574 nm; λₑₘᵢ=620 nm); TurboFP635 (λ_{exc}=588 nm; λₑₘᵢ=635 nm); 5-carboxynapthofluorescein (pH 10) (λ_{exc}=555 nm; λₑₘᵢ=615 nm); Alexa Fluor 647™ (λ_{exc}=650 nm; λₑₘᵢ=668 nm); Alexa Fluor 660™ (λ_{exc}=663 nm; λₑₘᵢ=690 nm); APC (Allophycocyanin) (λ_{exc}=651 nm; λₑₘᵢ=661 nm); ATTO 633 (λ_{exc}=629 nm; λₑₘᵢ=657 nm); ATTO 647 (λ_{exc}=645 nm; λₑₘᵢ=669 nm); BODIPY 650/665-X (λ_{exc}=650 nm; λₑₘᵢ=665 nm); Cy5™ (λ_{exc}=649 nm; λₑₘᵢ=666 nm); DiD (DiIC18(5)) - Lipophilic Tracer (λ_{exc}=644 nm; λₑₘᵢ=665 nm); DY-635-NHS (λ_{exc}=634 nm; λₑₘᵢ=664 nm); DyLight 649 (λ_{exc}=651 nm; λₑₘᵢ=673 nm); FluoSpheres Dark Red (λ_{exc}=656 nm; λₑₘᵢ=683 nm); HiLyte Fluor™ 647 (λ_{exc}=649 nm; λₑₘᵢ=672 nm); Indodicarbocyanine (DiD) (λ_{exc}=644 nm; λₑₘᵢ=665 nm); LIVE-DEAD Fixable Green (λ_{exc}=498 nm; λₑₘᵢ=526 nm); Quasar 670 (λ_{exc}=644 nm; λₑₘᵢ=670 nm); SpectrumFRed (Far Red) (λ_{exc}=655 nm; λₑₘᵢ=675 nm) SYTO Red Fluorescent Nucleic Acid Stains 60, 62, 63 (λ_{exc}=655 nm; λₑₘᵢ=675 nm); Thiadicarbocyanine (DiSC3) (λ_{exc}=651 nm; λₑₘᵢ=674 nm); TOTO-3, TO-PRO-3 (λ_{exc}=642 nm; λₑₘᵢ=661 nm); Ultralite (λ_{exc}=656 nm; λₑₘᵢ=678 nm); Alexa Fluor 680™ (λ_{exc}=679 nm; λₑₘᵢ=702 nm); ATTO 611X (λ_{exc}=611 nm; λₑₘᵢ=681 nm); ATTO 655 (λ_{exc}=663 nm; λₑₘᵢ=684 nm); ATTO 680 (λ_{exc}=680 nm; λₑₘᵢ=700 nm); Cy5.5™ (λ_{exc}=676 nm; λₑₘᵢ=690 nm); DyLight 680 (λ_{exc}=676 nm; λₑₘᵢ=705 nm); HiLyte Fluor™ 680 (λ_{exc}=688 nm; λₑₘᵢ=700 nm); Alexa Fluor 750™ (λ_{exc}=749 nm; λₑₘᵢ=775 nm); ATTO 725 (λ_{exc}=725 nm; λₑₘᵢ=752 nm); ATTO 740 λ_{exc}=740 nm; λₑₘᵢ=764 nm); Cy7™ (λ_{exc}=753 nm; λₑₘᵢ=775 nm); ICG (λ_{exc}=768 nm; λₑₘᵢ=807 nm) ; le chlorure de Nile Blue, la rhodamine 110, le chlorure de nitrobenzoxadiazole (NBD), et plus particulièrement l'acridine orange, l'alizarine red ;
- l'élément des terres rares est un lanthanide et notamment l'europium, le terbium, le dysprosium ;
- l'élément de transition est éventuellement sous forme de sel, tel que le ruthénium, le rhénium, l'osmium, l'iridium cadmium, manganese, chrome ;
et tel que ledit matériau à transition de spin dopé répond à la formule générale (III) ou (IV) suivante:

[(D)n%]{[Fe(L)₃](X)₂.xH₂O} (III)

dans laquelle :
- L représente un ligand tel que trz (1,2,4-triazole), NH₂trz (4-amino-triazole), Fatrz (4-formylamino-1,2,4-triazol), alkyltrz (4-alkyl-1,2,4-triazole) ;
- X représente un contre-ion anionique tel que OTf (triflate ou trifluorométhanesulfonate), p-tol ou tos (p-tolylsulfonate ou encore tosylate), tétrafluoroborate, nitrate, Br, Cl, etc. ;
- x est un entier compris entre 0 et 10 ;
- D est un agent dopant fluorescent tel que défini ci-dessus, de longueurs d'onde d'émission et d'excitation comprises entre 400 et 800 nm ; et
- n est le pourcentage en mole de dopant par rapport au nombre de mole d'atome de fer,
   Ou

   [(D)n%]{Fe_{y}M_{(1-y)}(L)[M'(CN)₄]} (IV)

   où
   M représente un métal tel que le Ni, Co ou Zn ;
   M' représente un métal, identique ou différent à M, choisi parmi Ni, Pd, Pt ;
   L représente le ligand pyrazine (pz) ou le ligand bis(4-pyridyl)acetylene (bpac) ou tout autre ligand azoté bidente ;
   D représente un agent dopant fluorescent tel que défini ci-dessus, de longueurs d'onde d'émission et d'excitation comprises entre 400 et 800 nm ; et
- y est compris entre 0 et 1.

Les matériaux selon l'invention présentent une transition de spin, accompagnée par une fluorescence, de sorte que la fluorescence émise est modulée sélectivement selon la température. L'allumage ou l'extinction de la fluorescence peut donc être commandé en fonction de la température par le choix du matériau à transition de spin.

Les matériaux dopés selon la présente invention sont particulièrement intéressants en ce que la différence d'absorption du matériau entre les deux états de spin (bas spin et haut spin) permet de moduler l'excitation et par conséquent l'émission de l'agent dopant. Ainsi, plus le matériau à transition de spin absorbe la longueur d'onde d'exitation du dopant, moins ce dernier absorbe et l'émission résultante de fluorescence en sera d'autant plus réduite.

Les matériaux à transition de spin convenant à l'invention pourront être choisis notamment en fonction de leur température de transition et de leurs spectres d'absorption. Ainsi, la température de transition devra correspondre au changement de température que l'on souhaite visualiser lors de l'application considérée.

Le choix adéquat de l'agent dopant en fonction du matériau à transition de spin à doper permet que, dans l'un de ses états, bas spin ou haut spin, le matériau à transition de spin absorbe la longueur d'onde d'excitation de l'agent dopant tandis que cela est impossible dans son autre état (respectivement haut spin ou bas spin). Ceci permet donc de moduler l'émission de fluorescence de façon sélective dans un des deux états de spin et de faire en sorte que la fluorescence soit visible ou non selon l'état dans lequel le matériau à transition de spin se trouve. Ainsi, si la longueur d'onde d'excitation de l'agent dopant correspond à la longueur d'onde d'absorption du matériau à transition dans son état de bas spin, la fluorescence sera diminuée, voire éteinte à l'état de bas spin, tandis qu'elle sera allumée, donc visible dans l'état de haut spin, car cette longueur d'onde ne correspond pas à la longueur d'onde d'absorption du matériau à transition de spin dans son état de haut spin.

De façon alternative ou cumulative, il est également possible de sélectionner l'agent dopant et le matériau à transition de spin de sorte que que l'agent dopant présente une longueur d'onde d'émission de fluorescence correspondante à la longueur d'onde d'absorption du matériau à transition de spin dans un de ses états (bas spin ou haut spin) et non dans l'autre de ses états (respectivement haut spin ou bas spin).

Ceci a notamment pour effet que le matériau de transition de spin absorbe une partie de la longueur d'onde d'émission de l'agent dopant, aboutissant à une émission de l'agent dopant moindre permettant et/ou favorisant d'autant plus le contraste on/off d'extinction et d'allumage de la fluorescence de l'agent dopant.

Ainsi, si la longueur d'onde d'excitation et/ou d'émission de l'agent dopant correspond à la longueur d'onde d'absorption du matériau à transition dans son état de bas spin, la fluorescence pourra être éteinte à l'état de bas spin, tandis qu'elle sera allumée, donc visible dans l'état de haut spin, si cette longueur d'onde d'excitation et/ou d'émission ne correspond pas à la longueur d'onde d'absorption du matériau à transition de spin dans son état de haut spin.

Ces choix adéquats de l'agent dopant en fonction du matériau à transition de spin à doper permettent que, dans l'un de ses états, bas spin ou haut spin, la fluorescence soit diminuée voire éteinte tandis que cela est impossible dans son autre état. Ceci permet donc de faire en sorte que la fluorescence soit visible ou non selon l'état dans lequel le matériau à transition de spin se trouve, et par conséquent selon la température de l'environnement.

Préférablement, lesdites longueurs d'onde d'excitation et/ou d'émission de l'agent dopant et du matériau à transition de spin sont dans le domaine visible mais peuvent aussi être dans le domaine de l'ultraviolet et de l'infrarouge pour certaines applications autres que la visualisation (thermométrie, instrumentation sous microscope ou spectromètre optique)

Le terme « longueur d'onde » utilisé ici désigne le maximum d'intensité de la bande de longueur d'ondes sur lequel le phénomène considéré (absorption, émission, excitation) a lieu

Le verbe « correspondre » utilisé ici désigne la similitude de longueur d'onde ou chevauchement au moins partiel des bandes de longueurs d'onde considérées.

Les termes « dopé » ou « dopant » utilisés ici font référence à un agent fluorescent présent à hauteur de sa concentration par rapport au centre métallique :
i) soit à titre de contre-ion partiel du complexe à transition de spin, notamment dans le cas d'un agent fluorescent chargé négativement, tel que l'alizarine red ;
ii) soit à titre de ligand partiel, notamment dans le cas d'un agent fluorescent comportant une fonction permettant la coordination au complexe à transition de spin, tel que l'acridine orange présentant une fonction azote pouvant coordiner le centre métallique ;
iii) soit sous forme de mélange physique de l'agent fluorescent et du matériau à transition de spin.

Généralement, l'agent fluorescent est présent dans le mélange dans une gamme comprise entre 0,000001% et 10% en mole par rapport au nombre de mole d'atome du centre métallique du complexe à transition de spin, ci-après désigné n%.

Plus précisément, dans les cas de substitution partielle i) et ii) ci-dessus, l'agent fluorescent est présent dans une gamme comprise entre 0,000001% et 2%, généralement inférieur à ou égal à 1%. Ainsi, seul ce très faible pourcentage du centre métallique peut perdre ses propriétés de transition de spin du fait de sa coordinationavec l'agent fluoresecent substituant partiellement le ligand ou le contre-ion.

Ainsi, dans chacun des trois cas ci-dessus, la transition de spin est essentiellement maintenue au sein du matériau de spin, sans préjudice de l'interaction de l'agent fluorescent à hauter de son pourcentage présent, tel que défini ci-dessus.

Ces termes excluent par conséquent les complexes fluorescents à transition de spin dont aucun des constituants (ligand, contre-ion, etc) n'est naturellement fluorescent ou encore les complexes fluorescents à transition de spin dont la transition de spin implique en totalité les ligands fluorescents dudits complexe, comme c'est le cas des complexes décrits par Hasega et al (*supra*)*.*

Généralement, le dopage selon l'invention est tel que l'agent fluorescent et le matériau à transition de spin intéragissent essentiellement optiquement mais n'intéragissent essentiellement pas électroniquement.

Il est à noter que les deux premiers cas dans lesquels l'agent fluorescent substitue partiellement soit le contre-ion du complexe à transition de spin, soit le ligand du complexe, donnent généralement lieu à des phénomoènes de plus grande intensité que dans le troisième cas du simple mélange physique.

A titre de matériaux à transition de spin dopés selon l'invention, sont également visés les matériaux répondant à la formule (III') ou (III") :

{[Fe(L)_{3-n%} (D)_{n%}] (X)₂. xH₂O} (III')

{[Fe(L)₃] (X)_{2-n%} (D)_{n%}.xH₂O} (III")

dans lesquelles :
- L représente un ligand tel que trz (1,2,4-triazole), NH₂trz (4-amino-1,2,4-triazole), Fatrz (4-formylamino-1,2,4-triazole), alkyltrz (4-alkyl-1,2,4-triazole), hptrz(heptyltriazole) ;
- X représente un contre-ion anionique tel que OTf (triflate ou trifluorométhanesulfonate), p-tol ou tos (p-tolylsulfonate ou encore tosylate), tétrafluoroborate, nitrate, Br, Cl, etc. ;
- x est un entier compris entre 0 et 10 ;
- D est un agent dopant fluorescent de longueurs d'onde d'émission et d'excitation comprises entre 400 et 800 nm; et
- n% est le pourcentage en mole de dopant par rapport au nombre de mole d'atome de fer, compris entre 0,000001% et 10%, généralement inférieur ou égal à 1%.

On peut notamment citer :
▪ ceux de formule (IIIa) :

   [(D)n%]{[Fe(NH₂trz)₃](p-tolyl)₂.xH₂O} (IIIa)

   où NH₂trz représente le ligand 4-amino-1,2,4-triazole, D représente un agent dopant fluorescent et n représente son pourcentage en mole par rapport au nombre de mole d'atome de fer,
▪ ceux de formule (IIIb) :

   [(D)n%]{[Fe(trz)₃](NO₃)₂] (IIIb)

   où trz représente le ligand 1,2,4-triazole ;
▪ ceux de formule (IIIc) :

   [(D)n%]{[Fe(NH₂trz)₃](NO₃)₂] (IIIc)

   où trz représente le ligand 1,2,4-triazole ;
▪ ceux de formule (IIId) :

   [Fe(hptrz)_{3-n%} (D)_{n%}](tos)₂ (IIId)
▪ ou encore ceux de formule (IIIe) :

   [Fe(hptrz)₃](tos)_{2-n%} (D)_{n%} (IIIe)

A titre d'exemple de matériaux à transition de spin dopés selon l'invention, sont également visés ceux répondant à la formule (IVa) : [(D)n%]{Fe_{0.5}Ni_{0.5}(pz)[Pt(CN)₄]} (IVa)
où D représente par exemple le chlorure de Nile Blue.

Généralement, les matériaux dopés selon l'invention comprennent de 0,000001% à 10% en mole par rapport au nombre de mole d'atome de fer d'agent dopant. Les concentrations des différents constituants du matériau à transition de spin obéissent de préférence à la stoechiométrie déterminée par la structure du matériau à transition de spin. La concentration de l'agent fluorescent dépend de sa nature et par conséquent des valeurs de ses longueurs d'ondes d'exitation et d'émission et de l'application visée (possibilité de faire disparaitre la fluorescence dans un des deux états de spin ou possibilité d'amplifier l'intensité de fluorescence en passant d'un état à un autre).

L'utilisation d'un matériau à transition de spin est particulièrement avantageuse en ce que ledit matériau peut se présenter sous forme de poudre, par exemple, et peut être ainsi mélangé à toute base, tels que la peinture ou le polymère plastique. Par ailleurs, le phénomène de transition de spin étant intramoléculaire et, de ce fait, spontané et parfaitement réversible, il ne fragilise aucunement la structure moléculaire du matériau. Ainsi, la durée de vie des matériaux selon l'invention est quasi illimitée.

Selon un autre objet, la présente invention concerne également le procédé de préparation des matériaux à transition de spin dopés selon l'invention.

Le procédé de préparation des composés dopés comprend l'étape consistant à mélanger en phase liquide une solution de l'agent fluorescent et une solution d'un ou plusieurs constituants dudit matériau à transition de spin.

Ainsi, le procédé selon l'invention comprend l'étape de mélange de l'agent dopant à au moins un des constituants des matériaux à transition de spin. En particulier, l'agent dopant peut être additionné en même temps que le sel de fer lorsque l'agent dopant est un ion (sel de cadmium, sel de rhuténium) ou bien en même temps que le ligand lorsque l'agent est une molécule organique (chlorure de Nile blue, rhodamine 110, NBD).

Le procédé de préparation des matériaux à transition de spin considérés est connu en soi, il peut notamment être réalisé par application de modes opératoires décrits, tels que Niel et al., Inorg. Chem. 2001, 40, 3838 et Lavrenova et al., Koord. Khim. 1986, 12, 207.

Ainsi, lorsque l'ajout d'agent dopant est une molécule organique, le procédé selon l'invention comprend :
- l'étape de préparation d'une solution de ligand L et d'agent dopant fluorescent dans un solvant ; et
- le mélange de la solution ainsi obtenue à une solution de sel de fer FeX₂ (ou FeX₂ en présence de K₂[M'(CN)₄] ou FeX₂ en présence de K₂[M'(CN)₄] et MX₂).

Lorsque l'agent dopant est un centre métallique (terre rare ou élément de transition), le procédé selon l'invention comprend les étapes :
- de préparation d'une solution de sel de fer FeX₂ (ou FeX2 en présence de K2[M'(CN)₄] ou FeX₂ en présence de K₂[M'(CN)₄] et MX₂) avec l'agent dopant, dans un solvant ; et
- le mélange de la solution ainsi obtenue à une solution de ligand L dans un solvant organique.

Le procédé peut également comprendre l'étape d'isolation du précipité ainsi obtenu.

De préférence, le procédé selon l'invention est réalisé en solution, à température ambiante.

Selon un aspect particulier, le matériau à transition de spin dopé selon l'invention peut être obtenu sous forme de solution, de poudre ou de nanoparticules. Le procédé de préparation des matériaux à transition de spin sous forme de nanoparticules est connu en soi, il peut notamment être réalisé par application adaptation de modes opératoires décrits, tels que Letard et al., Chem. Comm, 2008, 4327-4329 ; Coronado et al., Adv. Matter. 2007, 19,1359. Un système micellaire inverse peut être utilisé. Les micelles inverses sont des gouttelettes d'eau dans l'huile stabilisées par un tensioactif tel que le NaAOT (bis-2-éthylhexylsulfosuccinate de sodium ou dioctylsulfosuccinate de sodium) ou le lauropal. Une microémulsion ternaire est donc suffisante pour former des systèmes inverses. A titre de système ternaire convenant au procédé selon l'invention, on peut notamment citer le système eau/AOT/n-octane. La préparation de ces systèmes ternaires est connue en soi de l'homme du métier.

Plus particulièrement, le matériau à transition de spin, dopé selon l'invention peut être préparé par un procédé comprenant l'étape :
- d'ajout de l'agent fluorescent dopant à une solution d'un consituant du matériau à transition de spin, à savoir soit le sel métallique lorsque l'agent dopant est un centre métallique soit le ligand lorsque l'agent dopant est une molécule organique ou soit le mélange centre métallique/contre-ion lorsque l'agent dopant est un contre-ion,
- puis ajout d'un tensio-actif et
- ajout du mélange ansi obtenu à un mélange d'un autre constituant du matériau à transition de spin, à savoir soit le ligand lorsque l'agent dopant est un centre métallique ou un contre-ion,ou soit le sel métallique et contre-ion lorsque l'agent dopant est une molécule organique, respectivement, avec un tensio-actif.

Selon un autre objet, la présente invention concerne également une composition comprenant le matériau à transition de spin thermochrome dopé selon l'invention. Ladite composition comprenant le matériau à transition de spin thermochrome dopé peut être constituée par tout agent de formulation habituellement utilisé pour les traitements de surface. Ainsi, par exemple, le matériau selon l'invention sous forme de poudre peut être mélangé avec une base de type polymère notamment, tel que le polyvinylacétate dans un solvant tel que l'acétonitrile. La concentration du matériau à transition de spin dans ladite composition peut être généralement comprise entre 2% et 70% en poids par rapport au poids total de la composition. La composition selon l'invention peut être généralement réalisée par application ou adaptation de toute méthode connue, par exemple par simple mélange de ses constituants.

Selon un autre objet, la présente invention concerne également un procédé de détection de variation de température de part et d'autre d'une température donnée, au moyen d'une composition selon l'invention telle que le matériau présente une température de transition de spin correspondante à ladite température donnée. Ledit procédé de détection comprend la visualisation d'une variation de fluorescence de ladite composition.

Le procédé peut avantageusement être mis en oeuvre pour la détection de gel (transition de température de part et d'autre de 0°C), de fièvre (transition de la température de part et d'autre de 37°C) ou de façon générale pour la détection de toute variation de température autour d'une valeur seuil (détection de seuil).

Selon un autre de ses objets, la présente invention concerne également un procédé de détection de l'état verglacé ou susceptible d'être verglacé d'une chaussée comprenant l'exposition, dans l'environnement de la chaussée, d'une composition comprenant un matériau à transition de spin thermochrome, caractérisé en ce que la dite transition de spin dudit matériau a lieu à température comprise entre 0°C et +3°C.

L'utilisation d'un matériau à transition de spin est particulièrement avantageuse en ce que ledit matériau se présente sous forme de poudre, par exemple et peut être ainsi mélangé à toute base, telle que la peinture ou les polymères plastiques. Par ailleurs, le phénomène de transition de spin étant intramoléculaire et, de ce fait, spontané et parfaitement réversible, ce processus ne fragilise nullement la structure moléculaire du matériau. Ainsi, la durée de vie du procédé de détection est quasi illimitée.

Pour la mise en oeuvre de ce mode de réalisation, on préfère les matériaux à transition de spin thermochromes présentant une transition de spin à température comprise entre 0°C et +3°C, dopés par un agent fluorescent selon l'invention. Les matériaux à transition de spin thermochromes présentant une transition de spin à température comprise entre 0°C et +3°C sont connus en soi. Ainsi, on peut notamment citer les matériaux décrits par Roubeau et al., Chem. Mater., 2002, 14, 2559-2566. On peut ainsi citer des composés de formule :

[Fe(fatrz)₃](R)₂.xH₂O

dans laquelle R est un contre-ion anionique, fatrz désigne le ligand 4-(formylamino)-1,2,4-triazole, et x est un entier compris entre 0 et 10.

A titre de contre-ion R, on peut notamment citer les ligands triflate (trifluorométhanesulfonate), tétrafluoroborate, p-tolylsulfonate, nitrate, plus préférentiellement le ligand triflate. Un composé particulièrement avantageux pour le procédé selon l'invention répond à la formule [Fe(fatrz)₃](triflate)₂.3H₂O. Ce composé présente une transition de spin abrupte qui s'accompagne d'un changement de couleur réversible du blanc au rose avec une température de transition de 1°C.

Ces composés peuvent être préparés selon Roubeau et al., par exemple.

Les matériaux à transition de spin appropriés pour la mise en oeuvre du procédé de détection de gel selon l'invention ne sont pas limités et peuvent être choisis parmi tout matériau à transition de spin présentant une température de transition de spin comprise entre 0°C et +3°C, thermochrome, tel qu'il présente un changement de couleur lors de leur transition de spin. Plus préférentiellement, la température de transition de spin est comprise entre 0°C et +2°C, encore plus préférentiellement entre 0 et +1°C.

On peut également citer à titre de composés convenant à l'invention, les composés répondant à la formule générale :

FeyM_{(1-y)}(pz)[M'(CN)₄]

où M représente un métal tel que le Ni ou Co ; M' représente un métal, identique ou différent à M, choisi parmi Ni, Pd, Pt ; pz représente le ligand pyrazine, et y est strictement supérieur à 0 et strictement inférieur à 1.

Ces composés présentent une transition de spin qui s'accompagne d'un changement de couleur réversible du jaune au rouge lors d'un abaissement de température. En faisant varier la proportion de nickel, il est possible de modifier les températures de transition et d'obtenir ou non un cycle d'hystérésis. Le composé Fe_{0.5}Ni_{0.5}(pz)[Pt(CN)₄] présente une transition de spin abrupte avec une température de transition de 273 K (0°C) et une boucle hystérésis de 3°C. Ainsi, lorsque la température diminue, la transition se produit à 0°C et la réversibilité du phénomène se produit à une température de 3°C. Le dérivé du nickel pourrait aussi être utilisé dans le but de réduire considérablement le coût de fabrication du composé. Ces composés, ainsi que leur température de transition de spin et leur préparation ont notamment été décrits par Bousseksou et al J. Phys. Chem. B 2005,109, 14859 - 14867. Leur dépôt en couche mince a été décrit dans la demande WO 2007/107644.

Le procédé de détection selon la présente invention comprend l'application de la composition comprenant ledit matériau à transition de spin thermochrome sur ladite chaussée ou sur tout autre élément de signalétique, par exemple les panneaux indicateurs.

Ladite composition est de préférence exposée aux mêmes conditions climatiques que ladite chaussée. Ainsi, elle sera exposée dans l'environnement de la chaussée, par exemple elle peut être appliquée directement sur la chaussée ou exposée à une distance qui ne sera pas supérieure à 10 m de la chaussée. Généralement, on considèrera que la signalétique habituellement utilisée sur route ou autoroute est exposée aux mêmes conditions climatiques que la chaussée et que cet équipement convient à l'exposition de ladite composition selon l'invention.

Ladite composition comprenant le matériau à transition de spin thermochrome, notamment le matériau à transition de spin thermochrome dopé selon l'invention, peut être constituée par tout agent de formulation habituellement utilisé pour les compositions appliquées sur les chaussées ou sur éléments de signalétique. Ainsi, ladite composition peut être réalisée par application de toute méthode connue, par exemple par simple mélange de ses constituants. Par exemple, le matériau à transition de spin, sous forme de poudre peut être mélangé avec une base de type polymère notamment, tel que le polyvinylacétate, dans un solvant tel que l'acétonitrile ; la concentration du matériau à transition de spin dans la composition peut être généralement compris entre 5 et 70%, en poids par rapport au poids total de la composition.

Le procédé de détection selon l'invention est particulièrement avantageux en ce qu'il peut être mis en oeuvre de nuit et/ou dans des conditions de faible visibilité, grâce à la fluorescence émise.

La présente invention concerne également les dispositifs comprenant une composition selon l'invention pour la mise en oeuvre de ce procédé.

La composition comprenant le matériau de transition de spin, notamment dopé selon l'invention peut être appliquée au dit dispositif par tout moyen connu en soi. Ainsi, on peut par exemple effectuer un dépôt par spin coating tel que décrit dans EP 1 430 552. Ledit dispositif peut être constitué de n'importe quels matériaux, tels que ceux habituellement utilisés pour ce type d'application.

Selon un mode de réalisation particulier, la présente invention concerne également un dispositif de détection de gel ou verglas, tel qu'un élément de signalétique, notamment un panneau d'affichage ou un patch, ledit dispositif comprenant une composition comprenant un matériau à transition de spin thermochrome, notamment dopé selon l'invention, tel que ladite transition de spin dudit matériau a lieu à température comprise entre 0°C et +3°C.

Selon un autre objet, la présente invention concerne également un revêtement pour chaussée, tel qu'une peinture, comprenant une composition comprenant un matériau à transition de spin thermochrome, notamment dopé selon l'invention, tel que ladite transition de spin dudit matériau a lieu à température comprise entre 0°C et +3°C.

L'invention et les exemples ci-dessous seront mieux compris à l'aide des figures jointes :
La figure 1 représente la courbe illustrant l'émission et l'excitation du composé [Fe(NH₂trz](p-tol)₂ dopé avec du manganèse.
La figure 2 est une courbe représentant la variation thermique de l'intensité maximale d'émission dudit composé dopé.
La figure 3 est une courbe représentant l'émission et l'excitation du même composé dopé avec du cadmium.
La figure 4 est une courbe représentant la variation thermique de l'intensité maximale d'émission dudit composé dopé.
La figure 5 est une courbe représentant l'émission et l'excitation dudit composé dopé avec du NBD.
La figure 6 est une courbe représentant la variation thermique de l'intensité maximale d'émission dudit composé 1 dopé.
La figure 7 est une courbe représentant l'émission et l'excitation dudit composé dopé avec du Nile Blue.
La figure 8 est une courbe représentant la variation thermique de l'intensité maximale d'émission dudit composé dopé.
La figure 9 est une courbe représentant l'émission et l'excitation du composé dopé avec de la rhodamine. La courbe (a) représente le spectre d'absorption du composé seul dans l'état de bas spin.
La figure 10 est une courbe représentant la variation thermique de l'intensité maximale dudit composé dopé avec la rhodamine.
La figure 11 représente la variation de l'intensité d'émission de fluorescence d'une solution de nanoparticules dudit composé dopé avec la rhodamine 110 (1%) entre les deux états de spin. La courbe (a) représente l'emission à 15°C (état de bas spin) ; la courbe (b) représente l'emission à 47°C (état de haut spin) ; la courbe (c) représente l'emission à 15°C (retour à l'état de bas spin).
La figure 12 illustre la variation d'intensité d'émission de fluorescence d'une solution de nanoparticules du composé dopé avec la rhodamine 110 entre les deux états de spin (22 et 47°C) en fonction du pourcentage molaire de la rhodamine par rapport au fer. Les solutions sont éclairées à l'aide d'une lumière blanche.
La figure 13 représente l'apparition de la fluorescence sur un revêtement à base de nanoparticules du composé dopé avec la rhodamine 110, mélangée avec un surfactant et déposée sur un verre. Cette analyse par thermométrie démontre les applications pour la micro-électronique.
La figure 14 représente la thermométrie fluorescente d'une suspension de nanoparticules d'un complexe dopé par un agent fluorescent selon l'invention de l'exemple 4.
La figure 15 représente l'imagerie thermique de nanorésistances. Les images par microscopie par fluorescence de nanofils de nickel recouverts de nanoparticules de Fe(NH₂trz)₃(tos)₂ dopées par la rhodamine 110. Figures 15a : I=0 mA ; 15b: I=6mA; 15c=15b - 15a.
La Figure 16 représente les courbes de fluorescence en fonction de la température du complexe de l'exemple 5.
La Figure 17 représente les courbes de fluorescence en fonction de la température du complexe de l'exemple 6.

Les exemples suivants sont donnés à titre illustratif et non limitatif de la présente invention.

### Exemple 1 : synthèse d'un composé sous forme de poudre : [Fe(NH₂trz)₃](p-tol)₂ dopé

Dans un premier bécher, le sel de fer [Fe(H₂O)₆](tos)₂ est dissout, en présence d'acide ascorbique, et éventuellement l'agent dopant dans un mélange eau-éthanol (3-7 mL).

Dans un second bécher, dissoudre le ligand, éventuellement l'agent dopant dans 10 mL d'éthanol. Verser le contenu du second bécher dans le premier. Agiter durant 2 h. Obtention d'un précité, lavé à l'éthanol. Après séchage, on obtient une poudre, de couleur violette.

### Exemple 2 : synthèse d'un composé sous forme de nanoparticules

### Synthèse des nanoparticules [Fe(NH₂trz)₃](p-tol)₂

Ref : E. Coronado, J. R. Galán-Mascarós, M. Monrabal-Capilla, J. Garciía-Martínez, P. Pardo-Ibánez, Adv. Mater. 2007, 19, 1359.

Dans un premier bécher A de 400 mL, dissoudre 5 g de sel de dioctyl sulfosuccinate de sodium dans 50 mL d'octane et agiter fortement.

Dans un premier bécher B de 1000 mL, dissoudre 5 g de sel de dioctyl sulfosuccinate de sodium dans 50 mL d'octane et agiter fortement.

Dans un troisième bécher C de 50 mL, dissoudre le tosylate de fer dans 1 mL d'eau et 2 mL d'éthanol. Rajouter une pointe d'acide ascorbique. Mettre aux ultrasons pendant 10 minutes puis agiter pendant 10 minutes.

Dans un quatrième bécher D de 50 mL, dissoudre l'amino-triazole dans 3 mL d'éthanol puis agiter pendant 10 minutes.

Rajouter le dopant soit dans le bécher C, soit dans le bécher D (le choix du bécher dépend de la nature du dopant, molécule organique ou métal).

Verser le contenu du bécher C, goutte à goutte, dans le bécher A. Agitation forte pendant 10 minutes (préparation de la microémulsion du sel de fer).

Verser le contenu du bécher D, goutte à goutte, dans le bécher B. Agitation forte pendant 10 minutes (préparation de la microémulsion du ligand).
Mélanger les deux microémulsions et laisser agiter pendant 5 heures.

L'agent dopant est additionné en même temps que le sel de Fer lorsque l'agent dopant est un ion sel de cadmium (CdCl₂), sel de manganèse (MnCl₂) ou en même temps que le 1, 2, 4-triazole, lorsque l'agent dopant est une molécule organique (Nile Blue, rhodamine 110, NBD).

### Exemple 3 : étude fluorimétrique des nanoparticules [Fe(NH₂trz)₃](p-tol)₂ dopées

Les longueurs d'ondes d'excitation et d'émission de chaque solution ont été déterminées afin de pouvoir réaliser une étude en température. L'étude en température est réalisée de la façon suivante : une montée en température est effectuée, puis une descente et enfin une remontée (une mesure est effectuée tout les 3°C avec une stabilisation de température de 5 minutes). Les mesures ont été calibrées en prenant en compte l'écart de température entre celle affichée par le contrôleur de température et celle réellement mesurée dans la solution.

### Dopage avec le métal manganèse (1%)

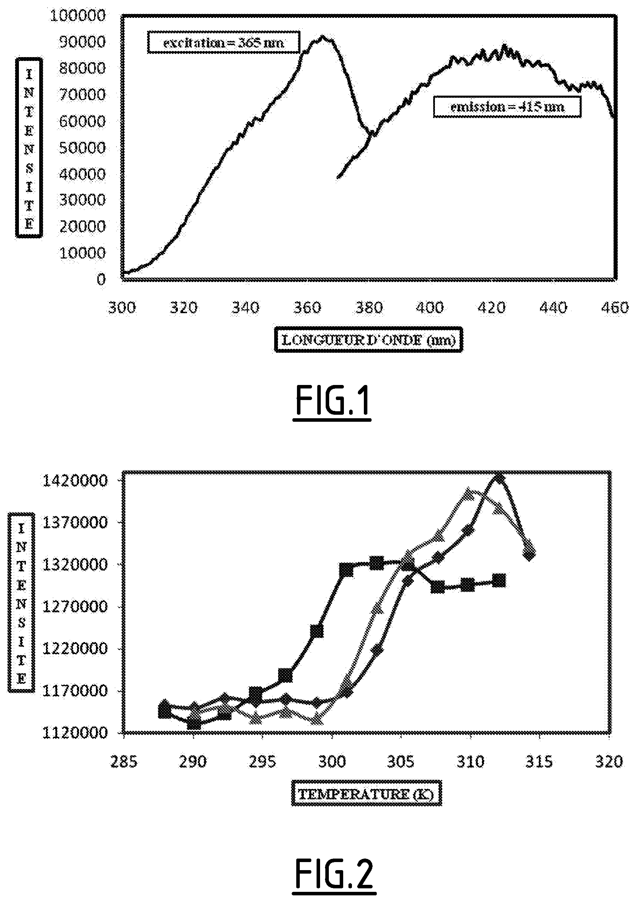

Comme illustré par la figure 1, deux bandes d'excitation et d'émission centrées respectivement à 365 nm et 415 nm sont observées.

La figure 2 démontre l'existence d'une transition autour de la température ambiante. Le dopant manganèse est intéressant car il ne possède pas de dépendance thermique significative mais la variation de l'intensité maximale d'émission n'est que d'environ 20%. A hautes températures, des fluctuations de l'intensité sont observées.

### Dopage avec le métal cadmium (1%)

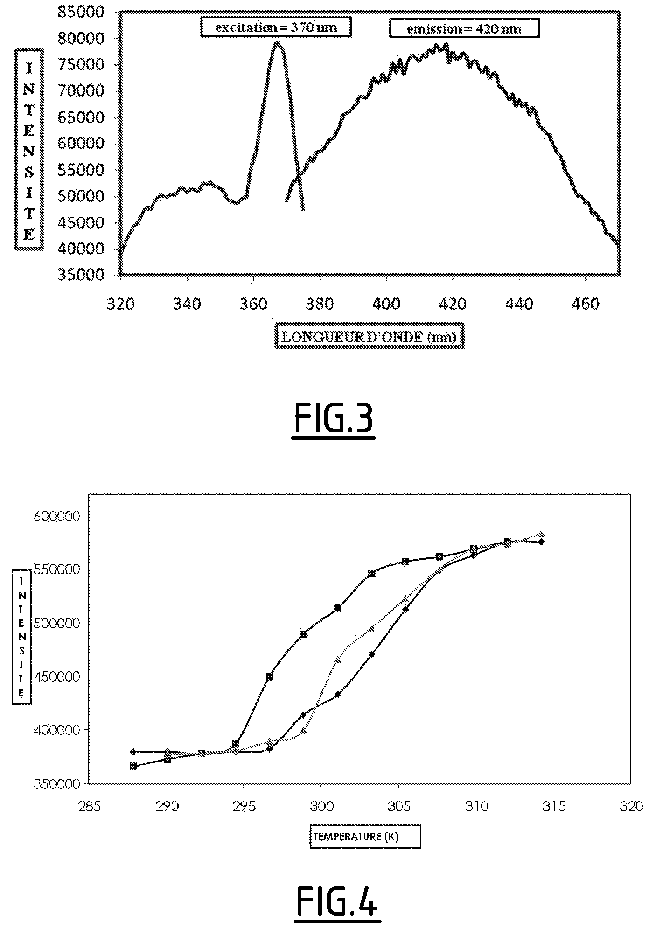

Sur la figure 3, on observe deux bandes d'excitation et d'émission centrées respectivement à 370 et 420 nm. Comme illustré sur la figure 4, la variation thermique montre bien la transition de spin autour de la température ambiante avec un cycle d'hystérésis. L'agent dopant cadmium est encore plus intéressant que le manganèse car, en plus de ne pas avoir de dépendance thermique importante en dehors de la transition, il possède une variation thermique de l'intensité maximale d'émission de 50%.

### Dopage avec le ligand NBD (3%)

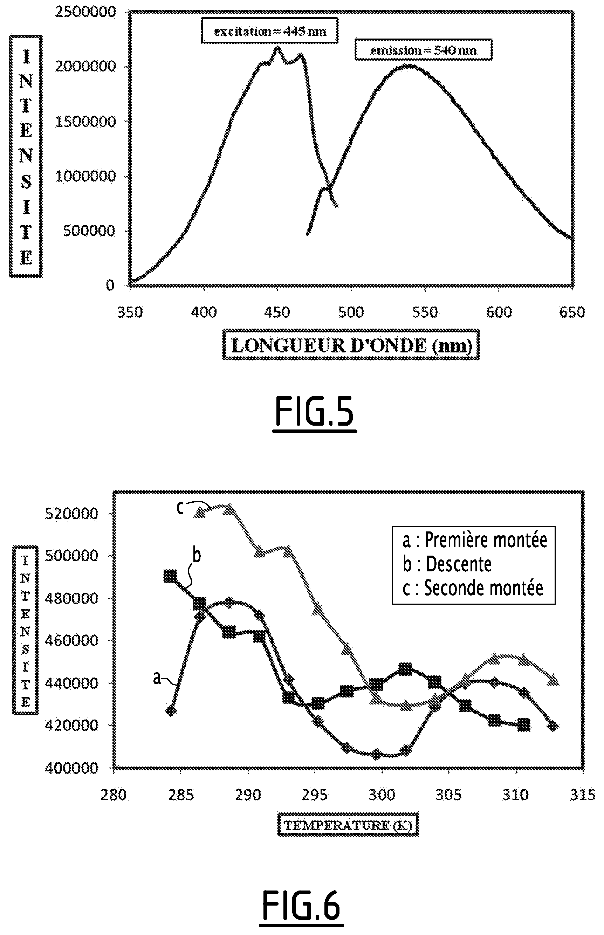

La figure 5 met en évidence deux bandes d'excitation et d'émission centrées respectivement à 445 nm et 540 nm. Pour l'étude en température, la variation thermique de l'intensité maximale d'émission a été reportée à 540 nm.

Dans la figure 6, la courbe (a) représente la première montée, la courbe (b) la descente et la courbe (c) représente la seconde montée. Pour la première montée, entre 275 et 293 K environ, la variation de l'intensité maximale de l'émission peut s'expliquer par une dépendance thermique intrinsèque à l'agent dopant (extinction thermique de la luminescence). Entre 293 et 308K, l'effet de la transition de spin se superpose et l'emporte sur l'effet de dépendance thermique (il semblerait que la variation de l'intensité d'émission du dopant soit de seulement 10%). Après la transition, au-delà de 308K, seule est à nouveau observée la dépendance thermique du dopant. Les mesures effectuées lors de la descente en température mettent en évidence un cycle d'hystérésis de quelques degrés. Lors de la deuxième montée, on observe les mêmes effets que lors de la première montée, le décalage entre les deux courbes pouvant s'expliquer par la perte de solvant.

### Dopage avec le ligand Nile Blue (3%)

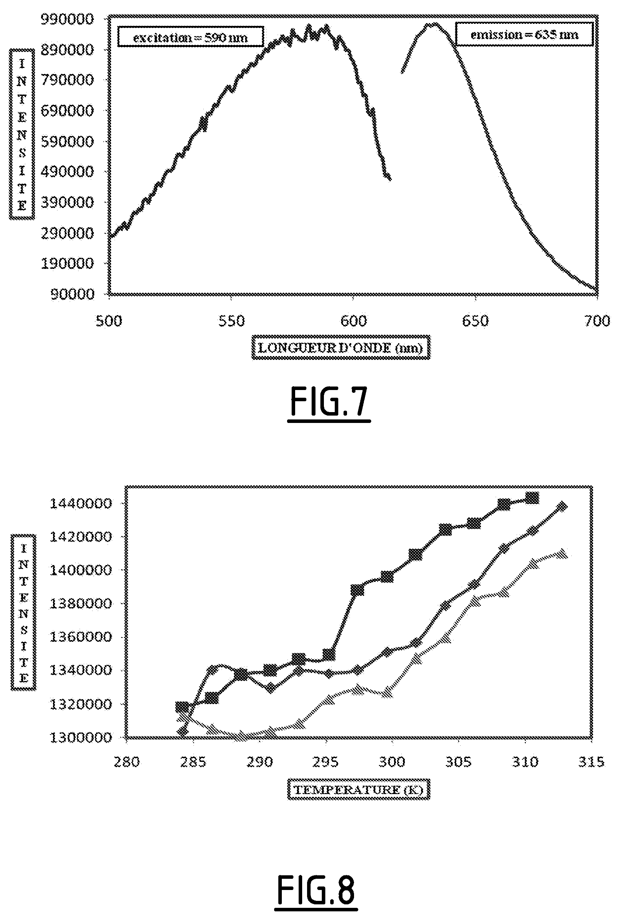

Comme illustré par la figure 7, deux bandes d'excitation et d'émission centrées respectivement à 590 nm et 635 nm sont observées. Pour l'étude en température, la variation thermique de l'intensité maximale d'émission a été reportée à 635 nm. La figure 8 démontre que, contrairement au dopant NBD, le dopant Nile Blue est intéressant car il ne montre pas de dépendance thermique ; en revanche, la variation thermique de l'intensité maximale d'émission n'est toujours que d'environ 10%.

### Dopage avec le ligand rhodamine 110 (3%)

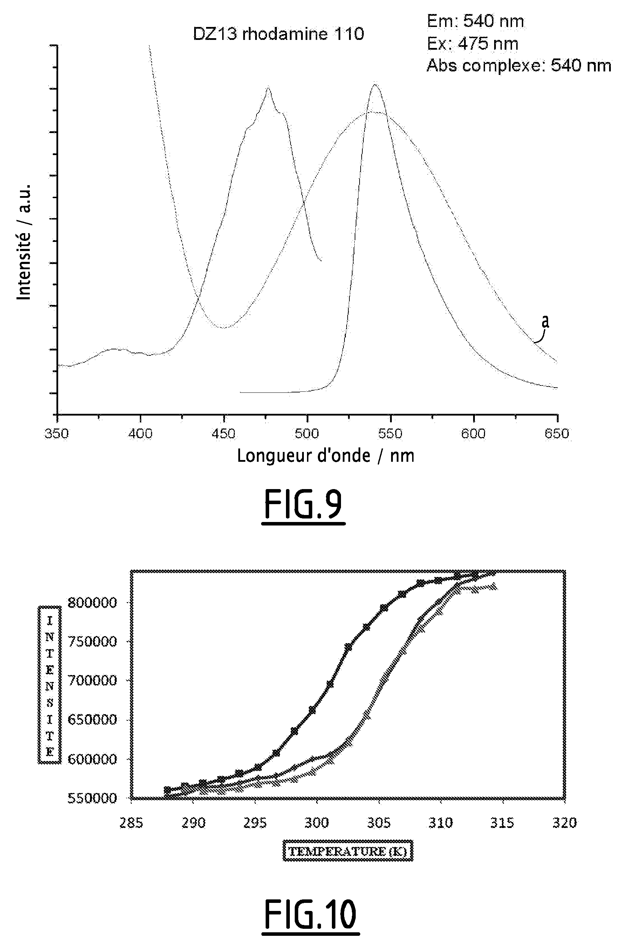

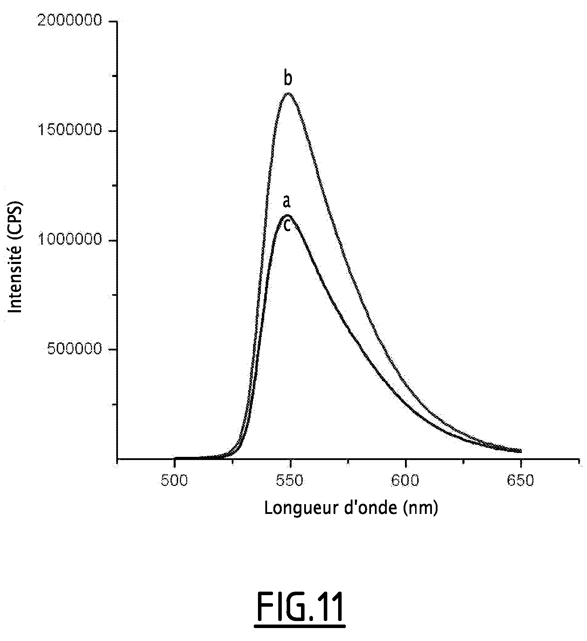

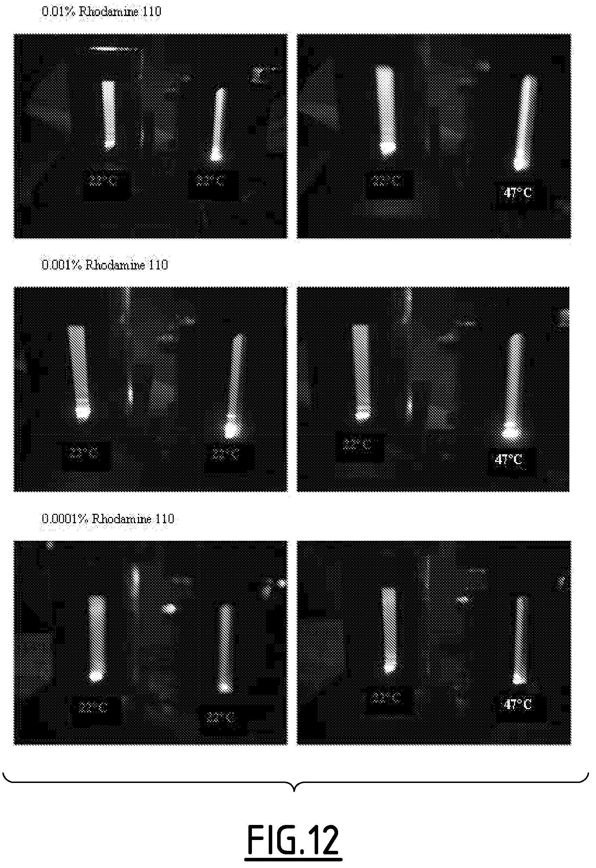

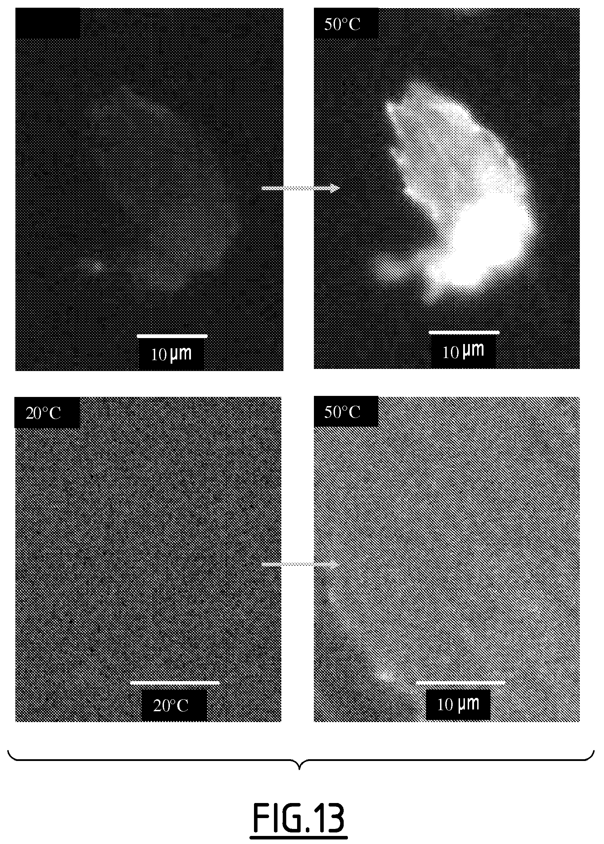

Comme visualisé sur la figure 9, deux bandes d'excitation et d'émission centrées respectivement à 475 nm et 540 nm sont observées. La figure 10 illustre la variation thermique avec une transition de spin autour de la température ambiante avec un cycle d'hystérésis. La rhodamine est encore plus intéressante que les deux agents dopants précédents car elle ne montre pas de dépendance thermique en dehors de la transition et la variation thermique de l'intensité maximale d'émission est de plus de 50%. Les mesures ont été répétées sur une solution de nanoparticules du composé [Fe(NH₂trz)₃](p-tol)₂ dopé avec la rhodamine 110 (dopage à 1 %). Ces mesures confirment une variation thermique de l'intensité maximale d'émission de plus de 50% également. La variation de l'intensité (fluorescence) de la solution de nanoparticules est illustrée à la figure 11. La variation d'intensité d'émission (fluorescence) de la solution de nanoparticules est observée à la figure 12 qui démontre notamment la visibilité du phénomène. En effet, sur les photos de gauche, les deux échantillons sont maintenus à une température de 22°C, dans laquelle l'état de bas spin est majoritaire. Sur les photos de droite, un des deux échantillons est chauffé à 47°C avec un état de haut spin majoritaire. Lorsque 0,0001% de dopant est introduit, l'intensité d'émission du dopant est visiblement amplifiée. Pour une concentration de 0,0001% du dopant, il y a passage d'un état où la fluorescence n'est pas perceptible à un état fluorescent visible (off/on de la fluorescence). Des mesures de thermométrie ont été réalisées sur un revêtement à base de nanoparticules. L'apparition de la fluorescence est illustrée par la figure 13. Sur les images de gauche, différentes zones du dépôt sont maintenues à 20°C. L'émission de fluorescence est absente ou très faible dans l'état de bas spin. Sur les images de droite, les mêmes zones de dépôt sont chauffées à 50°C. La fluorescence apparaît ou est amplifiée dans l'état de haut spin. Les couples de photos ont été réalisés dans les mêmes conditions.

### Exemple A : Préparation du composé [Fe(fatrz)₃](triflate)₂.3H₂O

*Etape 1* : Synthèse du ligand 4-(formylamino)-1,2,4-triazole (fatrz) : le ligand est préparé par réaction du 4-amino-1,2,4-triazole avec l'acide formique en quantité équimolaire dans l'éther diisopropylique selon Salazar et al. J. Chem. Soc. Perkin Trans 2 1993, 377-383.

*Etape 2 :* Synthèse du complexe [Fe(H₂O)₆](triflate)₂: le complexe est obtenu par réaction de la poudre de fer avec l'acide triflique en quantité équimolaire dans l'acétonitrile selon Hagen Inorg. Chem. 2000, 39, 5867-5869.

*Etape 3:* Synthèse du complexe [Fe(fatrz)₃](triflate)₂.3H₂O : le complexe est obtenu par addition d'une solution aqueuse du ligand fatrz (3 équivalents) à une solution aqueuse du complexe [Fe(H₂O)₆](triflate)₂ en présence d'acide ascorbique pour s'affranchir de l'oxydation du fer(II) selon Roubeau et al. Chem. Mater. 2002, 14, 2559-2566.

### Exemple B : Préparation en une étape du composé Fe_{0.5}Ni_{0.5}(pz)[Pt(CN)₄]

Une solution aqueuse contenant un demi équivalent de du sel de fer FeCl₂.4H₂0, un demi équivalent du sel de nickel NiCl₂.6H₂O et un équivalent du ligand pyrazine est additionnée à température ambiante à une solution aqueuse contenant le sel de platine K₂[Pt(CN)₄].

Exemple C : Dépôt du composé de l'exemple A sur un large choix de supports (métallique, plastique ou verre). Le matériau sous forme de poudre (5 %) est mélangé avec du polyvinylacétate dans un solvant tel que l'acétonitrile à température ambiante pour réaliser un dépôt par spin coating comme décris dans le brevet EP1430552.

### Exemple D : Démonstration du thermochromisme/transition de spin à +1°C

Le dépôt réalisé dans l'exemple C est introduit dans un bain de glace, il est alors possible d'observer le changement de couleur du blanc au rose.

### Exemple E : Etude de la résistance des matériaux à transition de spin

La résistance aux températures extrêmes a été mise en évidence de la façon suivante. Le dépôt de l'exemple C plongé dans de l'azote liquide pendant plusieurs heures conserve sa propriété thermochrome.

Le dépôt de l'exemple C présente une transition de spin associée au thermochromisme pendant une durée supérieure à 3 ans.

### Exemple F : Préparation de matériaux dopés avec un agent fluorescent :

### a. Préparation en deux étape du composé [(D)1%]{Fe_{0.5}Ni_{0.5}(pz)[Pt(CN)₄]} (D = chlorure de NBD).

*Etape 1* : A une solution aqueuse contenant un demi-équivalent de sel de fer FeCl₂.4H₂0, un demi-équivalent du sel de nickel NiCl₂.6H₂O et 1% en mole du chlorure de NBD (par rapport à la quantité de fer) est ajouté à température ambiante un équivalent du ligand pyrazine.

*Etape 2:* A la solution précédente est additionnée à température ambiante une solution aqueuse contenant le sel de platine K₂[Pt(CN)₄].

L'échantillon [(D)1%]{Fe_{0.5}Ni_{0.5}(pz)[Pt(CN)₄]} a été éclairé avec une lumière incidente monochromatique de longueur d'onde 254 nm. A température ambiante, une émission très intense autour de 410 nm (fluorescence) de l'agent dopant NBD est mesurée.

### b. Synthèse du complexe [(D)1%]{[Fe(trz)₃](NO₃)₂] (D = chlorure de Nile Blue, Trz = triazole)

Le complexe est obtenu par addition d'une solution aqueuse contenant le ligand trz et 1% en mole du chlorure de Nile Blue à une solution aqueuse contenant du sulfate de fer FeSO₄.7H₂0 et du nitrate de barium BaNO₃ en présence d'acide ascorbique pour s'affranchir de l'oxydation du fer (II).

L'échantillon [(D)1%]{[Fe(trz)₃](NO₃)₂] a été éclairé avec une lumière incidente monochromatique de longueur d'onde 532 nm (laser vert) à différentes températures. Une amplification d'un facteur 10 de l'intensité d'émission à 660 nm (fluorescence) de l'agent dopant est mesurée lors de la transition de l'état haut spin à l'état bas spin (de part et d'autre de la transition à 70°C).

### c. Préparation en deux étapes du composé [(D)1%]{Fe_{0.5}Ni_{0.5}(pz)[Pt(CN)₄]} (D = chlorure de Nile Blue).

*Etape 1* : A une solution aqueuse contenant un demi-équivalent de sel de fer FeCl₂.4H₂0, un demi-équivalent du sel de nickel NiCl₂.6H₂O et 1% en mole du chlorure de Nile Blue (par rapport à la quantité de fer) est ajouté à température ambiante un équivalent du ligand pyrazine.

### Etape 2: A la solution précédente est additionnée à température ambiante une solution aqueuse contenant le sel de platine K₂[Pt(CN)₄].

L'échantillon [(D)1%]{Fe_{0.5}Ni_{0.5}(pz)[Pt(CN)₄]} a été éclairé avec une lumière incidente monochromatique de longueur d'onde 532 nm (laser vert) à différentes températures. Une amplification d'un facteur 2 de l'intensité d'émission à 660 nm (fluorescence) de l'agent dopant est mesurée lors de la transition de l'état bas spin à l'état haut spin, c'est-à-dire de part et d'autre de la température de gel.

### Exemple G : Démonstration du thermochromisme dans l'obscurité

On peut mettre en évidence le thermochromisme dans l'obscurité de la façon suivante :

Un matériau dopé par un agent fluorescent selon l'exemple F est déposé selon l'exemple C. L'échantillon est alors placé dans l'obscurité et éclairé par une lumière blanche. On observe une émission lumineuse, dont l'intensité varie en fonction de l'état de spin du composé selon la température du dispositif : dans l'état de spin bas (température égale à environ 0°C), l'intensité lumineuse émise est supérieure celle émise dans l'état de spin haut (température ambiante).

### Exemple 4 : Etude de thermométrie au moyen du complexe [Fe(NH₂trz)₃](A)₂ où A = tosylate ou NO₃⁻, dopé par la rhodamine 110.

NH₂trz, le bis(2-éthylhexyl)sulfosuccinate de sodium (NaAOT) et l'octane sont disponibles commercialement chez Aldrich et ont été utilisés sans purification complémentaire. Le complexe [Fe(H₂O)₆](tos)₂ a été préparé selon la littérature (Fewings et al., Polyhedron 2001, 20, 643).

La synthèse des nanoparticules du complexe a été réalisée par la méthode des micelles inverses (microémulsions). Cette méthode consiste en une dispersion de gouttelettes de liquide polaire stabilisées par un surfactant qui contient à la fois des groupes à chaînes hydrophobes et des groupes à têtes hydrophiles (dans le cas présent, AOT⁻) en phase huileuse (ici, l'octane). [Fe(H₂O)₆](tos)₂ (0,380 mg, 0,25 M) a été dissous (avec de petites quantités d'acide ascorbique) dans de l'eau diminéralisée/éthanol (1+2 ml) en mélange, qui a été ajouté lentement à une solution de 5 g de NaAOT dans 50 ml d'octane et la solution claire résultante a été agitée pendant 10 mn. NH₂trz (0,190 g ; 0,75 M) a été dissous dans l'éthanol (3 ml), ajouté à une solution de 5 g de NaAOT dans 50 ml d'octane et la solution claire résultante a été agitée pendant 10 mn.

Les deux suspensions ont été mélangées et agitées vigoureusement pendant 5 heures à 35°C. Une partie du liquide a été laissée à reposer pendant la nuit puis filtrée avec un filtre à 0,2 µm pour fournir une suspension violette et limpide. La synthèse des nanoparticules de [Fe(NH₂trz)₃](N₂O₃)₂ a été réalisée de façon similaire à 25°C en utilisant 3 ml de solution aqueuse de Fe(NO₃)₂ préparée in situ par mélange de FeSO₄.7H₂O (209 mg) et Ba(NO)₃ (197 mg) tel que décrit par Lavrenova et al., Koord. Chim., 1986, 12, 207.

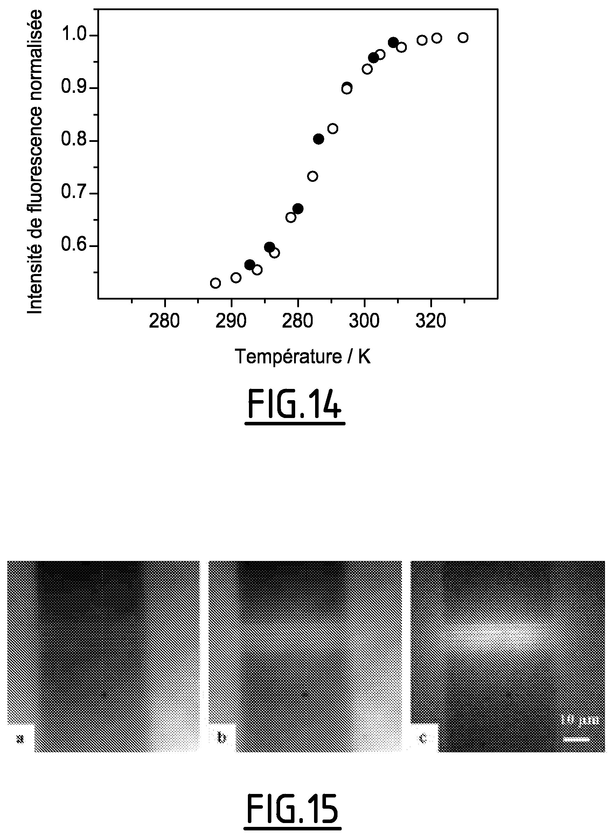

Dans les cas des synthèses avec l'agent dopant fluorescent, la quantité désirée de chlorure de rhodamine 110 (chlorure de 9-(2-carboxyphényl)-3,6-diamino-3*H*-xanthylium, Aldrich) a été introduite simultanément à l'ajout du ligand triazole. La concentration en dopant (en mol % par rapport à la concentration de sels de fer nominale) a varié entre 10⁻⁴ et 3%. La thermométrie fluorescente d'une suspension de nanoparticules (3 nm) de [Fe₂(NH₂trz)₃](NO₃)₂ dopé par la rhodamine 110 est représentée à la figure 14. La variation thermique de l'intensité de fluorescence à 540 nm est représentée dans les modes de chauffage (symbole ouvert) et de refroidissement (symbole fermé).

La suspension de nanoparticules dopées par la rhodamine 110 a également été déposée sur des nanofils de nickel (5 fils, 500 nm de largeur, 40 µm de longueur, distant de 4 µm) pour lesquels les changements de température ont été induits par chauffage par effet joule. Les images par microscopie de fluorescence du dispositif à nanofils ont été obtenues à température ambiante au moyen d'une caméra CCD. La figure 15 représente les images obtenues à l'état éteint (I=0) et à l'état allumé (I=6 mA) du chauffage des fils de nickel. On observe une augmentation significative de la luminescence lorsque le courant circule à travers les fils. La figure 15c révèle clairement que le changement de température est confiné à l'environnement proche des nanofils. Cette observation met en lumière le potentiel du dispositif pour la résolution par thermométrie dans l'espace.

### Exemple 5 : Synthèse d'un composé sous forme de nanoparticules, avec substittion partielle du ligand par un agent dopant fluorescent (acridine)

Dans un premier bécher, mélanger 15 mg de tosylate de fer, 200 mg de polymère polyethyleneglycol (PEG-3650) et une pointe d'acide ascorbique dans 2 ml d'eau.

Dans un deuxième bécher, mélanger 30 mg de ligand hptrz, 0.15 mg of acridine orange (1% en masse par rapport au fer), 200 mg de polymère polyethylene glycol (PEG-3650) dans 2 ml d'eau + 0.3 ml d'éthanol.

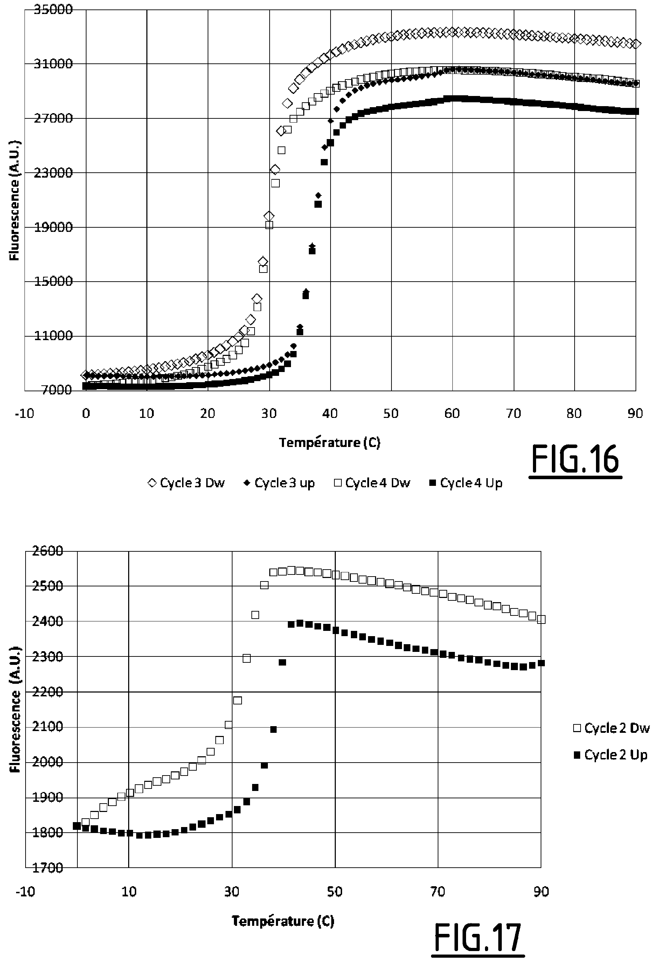

Les deux solutions sont mélangées et placées dans un bain à ultrason. Après quelques minutes un précipité contenant des nanoparticules du composé [Fe(hptrz)₃₋ₓ(acridine)ₓ](tos)₂ est obtenu. Les courbes de fluorescence en fonction de la température sont illustrées à la Figure 16.

### Exemple 6 : synthèse d'un composé sous forme de nanoparticules, avec substittion partielle du contre-ion par un agent dopant fluorescent (alizarine red)

Dans un premier bécher, mélanger 15 mg de tosylate de fer, 0.15 mg d'alizarine red S (1% en masse par rapport au fer), 200 mg de polymère polyethyleneglycol (PEG-3650) et une pointe d'acide ascorbique dans 2 ml d'eau.

Dans un deuxième bécher, mélanger 30 mg de ligand hptrz, (1% en masse par rapport au fer), 200 mg de polymère polyethylene glycol (PEG-3650) dans 2 ml d'eau + 0.3 ml d'éthanol.

Les deux solutions sont mélangées et placées dans un bain à ultrason. Après quelques minutes un précipité contenant des nanoparticules du composé [Fe(hptrz)₃](tos)₂₋ₓ(alyzarine)ₓ est obtenu. Les courbes de fluorescence en fonction de la température sont illustrées à la Figure 17.

## Revendications

1. Matériau à transition de spin thermochrome, dopé par un ou plusieurs agents fluorescents présentant une longueur d'onde d'excitation correspondante à la longueur d'onde d'absorption du matériau à transition de spin dans un de ses états (bas spin ou haut spin) et non dans l'autre de ses états (respectivement haut spin ou bas spin), le mélange résultant présentant :
- une transition de spin, et
- une émission de fluorescence distincte dans chacun des états de transition de spin, et tel que
l'agent dopant fluorescent est choisi parmi les molécules organiques, un élément des terres rares ou de transition, ainsi que leurs sels,
et les molécules organiques sont choisies parmi :
BM-Terphenyl (λ_{exc}= 251 nm; λₑₘᵢ= 335 nm); p-Terphenyl (λ_{exc}= 275 nm; λₑₘᵢ= 339 nm); TMQ (λ_{exc}= 266 nm; λₑₘᵢ= );BQM (λ_{exc}= 275 nm; λₑₘᵢ=); DMQ (λ_{exc}= 285 nm; λₑₘᵢ=); Butyl-PBD (λ_{exc}= 302 nm; λₑₘᵢ= 368 nm);PBD (λ_{exc}= 302 nm; λₑₘᵢ= 360); TMI (λ_{exc}= 295 nm; λₑₘᵢ=);QUI (λ_{exc}= 310 nm; λₑₘᵢ=); PPO (λ_{exc}= 303 nm; λₑₘᵢ= 365 nm); PPF (λ_{exc}= 324 nm; λₑₘᵢ= 368 nm); p-quaterphenyl (λ_{exc}= 297 nm; λₑₘᵢ=374 nm); BBD (λ_{exc}= 314 nm; λₑₘᵢ= 373 nm); Polyphenyl 1 (λ_{exc}= 308 nm; λₑₘᵢ=); Polyphenyl 2 (λ_{exc}= 308 nm; λₑₘᵢ=); BiBuQ (λ_{exc}= 313 nm; λₑₘᵢ=); Quinolon 390 (λ_{exc}= 355 nm; λₑₘᵢ=); TBS (λ_{exc}= 320 nm; λₑₘᵢ=); α-NPO (λ_{exc}= 333 nm; λₑₘᵢ= 396 nm); Furan 2 (λ_{exc}= 330 nm; λₑₘᵢ= 396 nm); PBBO (λ_{exc}= 327 nm; λₑₘᵢ= 403 nm); DPS (λ_{exc}= 340 nm; λₑₘᵢ=); Stilbene 1 (λ_{exc}= 350 nm; λₑₘᵢ=); BBO (λ_{exc}= 340 nm; λₑₘᵢ= 412 nm); Stilbene 3 (λ_{exc}= 350 nm; λₑₘᵢ=); Carbostyryl 7 (λ_{exc}= 350 nm; λₑₘᵢ= 400 nm); POPOP (λ_{exc}= 358 nm; λₑₘᵢ= 425 nm); Coumarin 4 (λ_{exc}= 372 nm; λₑₘᵢ=445 nm); Bis-MSB (λ_{exc}= 350 nm; λₑₘᵢ= 418 nm); Furan 1 (λ_{exc}= 355 nm; λₑₘᵢ=); Carbostyryl 3 (λ_{exc}= 360 nm; λₑₘᵢ= 425 nm); Coumarin 120 (λ_{exc}= 354 nm; λₑₘᵢ=435 nm); Coumarin 2 (λ_{exc}= 366 nm; λₑₘᵢ= 443 nm); DASPI (λ_{exc}= 472 nm; λₑₘᵢ=); Coumarin 466 (λ_{exc}= 380 nm; λₑₘᵢ=); Coumarin 47 (λ_{exc}= 373 nm; λₑₘᵢ= 450 nm); Coumarin 102 (λ_{exc}= 389 nm; λₑₘᵢ= 465 nm); Coumarin 152A (λ_{exc}= 405 nm; λₑₘᵢ= 510 nm); Coumarin 152 (λ_{exc}= 397 nm; λₑₘᵢ= 510 nm); Coumarin 151 (λ_{exc}= 382 nm; λₑₘᵢ= 480 nm); Coumarin 6H (λ_{exc}= 396 nm; λₑₘᵢ=); Coumarin 307 (λ_{exc}= 395 nm; λₑₘᵢ= 490 nm); Coumarin 500 (λ_{exc}= 395 nm; λₑₘᵢ=); Coumarin 314 (λ_{exc}= 436 nm; λₑₘᵢ= 480 nm); Coumarin 510 (λ_{exc}= 425 nm; λₑₘᵢ=); Coumarin 30 (λ_{exc}= 412 nm; λₑₘᵢ= 488 nm); Coumarin 334 (λ_{exc}= 450 nm; λₑₘᵢ= 495 nm); Coumarin 522 (λ_{exc}= 410 nm; λₑₘᵢ= 522 nm); DASBTI (λ_{exc}= 530 nm; λₑₘᵢ=); Coumarin 7 (λ_{exc}= 433 nm; λₑₘᵢ=493); Brillantsulfaflavin (λ_{exc}= 423 nm; λₑₘᵢ= 517 nm); Coumarin 6 (λ_{exc}= 458 nm; λₑₘᵢ=505 nm); Coumarin 153 (λ_{exc}= 423 nm; λₑₘᵢ= 530 nm); DOCI (λ_{exc}= 485 nm; λₑₘᵢ=); Pyrromethene 546 (λ_{exc}= 494 nm; λₑₘᵢ= 519 nm); DMETCI (λ_{exc}= 540 nm; λₑₘᵢ=); Uranin (λ_{exc}= 500 nm; λₑₘᵢ= 521 nm); Fluorescein 27 (λ_{exc}= 512 nm; λₑₘᵢ= 530 nm); Fluorol 7GA (λ_{exc}= 440 nm; λₑₘᵢ=); Pyrromethene 556 (λ_{exc}= 498 nm; λₑₘᵢ= 533 nm); Pyrromethene 567 (λ_{exc}= 518 nm; λₑₘᵢ= 547 nm); Rhodamine 19 (λ_{exc}= 528 nm; λₑₘᵢ= 544 nm); Pyrromethene 580 (λ_{exc}=519 nm; λₑₘᵢ= 550 nm); DQOCI (λ_{exc}= 592 nm; λₑₘᵢ=); DCI-2 (λ_{exc}= 606 nm; λₑₘᵢ=); Pyrromethene 597 (λ_{exc}= 524 nm; λₑₘᵢ= 557 nm); Sulforhodamine B (λ_{exc}= 556 nm; λₑₘᵢ= 575 nm); Malachit Green (λ_{exc}= 622 nm; λₑₘᵢ= 530 nm); DTCI (λ_{exc}= 557 nm; λₑₘᵢ=); DQTCI (λ_{exc}= 629 nm; λₑₘᵢ=); Rhodamine 101 (methanol) (λ_{exc}= 560 nm; λₑₘᵢ= 589 nm);DCM (λ_{exc}= 472 nm; λₑₘᵢ= 644 nm); Pyrromethene 650 (λ_{exc}= 590 nm; λₑₘᵢ= 612 nm); DODCI (λ_{exc}= 582 nm; λₑₘᵢ=); Sulforhodamine 101 (λ_{exc}= 578 nm; λₑₘᵢ=); Cresyl Violet (λ_{exc}= 601 nm; λₑₘᵢ= 632 nm); Phenoxazone 9 (λ_{exc}= 550 nm; λₑₘᵢ= 650 nm); Nile Blue (λ_{exc}= 633 nm; λₑₘᵢ= 672 nm); Oxazine 4 (λ_{exc}= 615 nm; λₑₘᵢ=); Rhodamine 700 (λ_{exc}= 643 nm; λₑₘᵢ= 673 nm); Pyridine (λ_{exc}= 480 nm; λₑₘᵢ=); Carbazine 122 (λ_{exc}= 655 nm; λₑₘᵢ=); Oxazine 170 (λ_{exc}= 627 nm; λₑₘᵢ= 650 nm); Oxazine 1 (λe_{xc}= 646 nm; λₑₘᵢ= 670 nm); DTDCI (λ_{exc}= 653 nm; λₑₘᵢ=); Oxazine 750 (λ_{exc}= 667 nm; λₑₘᵢ=); Pyridine 2 (λ_{exc}= 500 nm; λₑₘᵢ=); HIDCI (λ_{exc}= 639 nm; λₑₘᵢ=); Cryptocyanine (λ_{exc}= 708 nm; λₑₘᵢ=720 nm); Styryl 6 (λ_{exc}= 615 nm; λₑₘᵢ=); Styryl 8 (λ_{exc}= 570 nm; λₑₘᵢ=); DDI (λ_{exc}= 710 nm; λₑₘᵢ= 745 nm); Pyridine 4 (λ_{exc}= 550 nm; λₑₘᵢ=); Methly-DOTCI (λ_{exc}= 682 nm; λₑₘᵢ= 718 nm); Styryl 11 (λ_{exc}= 575 nm; λₑₘᵢ=); Rhodamine 800 (methanol) (λ_{exc}= 682 nm; λₑₘᵢ= 700 nm); Styryl 9M (λ_{exc}= 585 nm; λₑₘᵢ=); HITCI (λ_{exc}= 741 nm; λₑₘᵢ= 778 nm); IR 125 (λ_{exc}= 795 nm; λₑₘᵢ= 838 nm); DTTCI (λ_{exc}= 760 nm; λₑₘᵢ= 815 nm); IR 144 (λ_{exc}= 750 nm; λₑₘᵢ= 848 nm); Styryl 15 (λ_{exc}= 648 nm; λₑₘᵢ=); DNTTCI (λ_{exc}= 765 nm; λₑₘᵢ=); HDITCI (λ_{exc}= 780 nm; λₑₘᵢ=); DDTTCI (λ_{exc}= 798 nm; λₑₘᵢ=); DDCI-4 (λ_{exc}= 815 nm; λₑₘᵢ= 850 nm); IR 140 (λ_{exc}= 810 nm; λₑₘᵢ= 860 nm); Styryl 14 (λ_{exc}= 588 nm; λₑₘᵢ=); IR 132 (λ_{exc}= 830 nm; λₑₘᵢ= 861 nm); Styryl 20 (λ_{exc}= 645 nm; λₑₘᵢ=); IR 26 (λ_{exc}= 1080 nm; λₑₘᵢ= 1180 nm); IR 5 (λ_{exc}= 1090 nm; λₑₘᵢ=); Aspirin (λ_{exc}=240 nm; λₑₘᵢ=380 nm), Biphenyl (λ_{exc}=270 nm; λₑₘᵢ=385 nm), Ephedrine (λ_{exc}=260 nm; λₑₘᵢ=390 nm), Epinephrine (λ_{exc}=260 nm; λₑₘᵢ=412 nm), Estradiol (λ_{exc}=292 nm; λₑₘᵢ=403 nm), , Ethyl-p-dimethylaminobenzoate (λ_{exc}=310 nm; λₑₘᵢ=330 nm), Lidocaine (λ_{exc}=265 nm; λₑₘᵢ=400 nm), Naphthalene (λ_{exc}=275 nm; λₑₘᵢ=322 nm), Nicotine (λ_{exc}=270 nm; λₑₘᵢ=390 nm), Purine (λ_{exc}=272 nm; λₑₘᵢ=405 nm), Tryptophan (λ_{exc}=295 nm; λₑₘᵢ=340 nm), Tryrosine (λ_{exc}=253 nm; λₑₘᵢ=394 nm), 1,8-ANS (λ_{exc}=372 nm; λₑₘᵢ=480 nm); 4-methylumbelliferone (λ_{exc}=360 nm; λₑₘᵢ=440 nm); 7-amino-4-methylcoumarin (AMC) (λ_{exc}=346 nm; λₑₘᵢ=442 nm); 7-hydroxy-4-methylcoumarin (λ_{exc}=360 nm; λₑₘᵢ=449 nm); ABQ (λ_{exc}=344 nm; λₑₘᵢ=445 nm); Acridine (λ_{exc}=362 nm; λₑₘᵢ=462 nm);Alexa Fluor 350™ (λ_{exc}=346 nm; λₑₘᵢ=442 nm); Alexa Fluor 405™ (λ_{exc}=402 nm; λₑₘᵢ=421 nm); AMCA (Aminomethylcoumarin) (λ_{exc}=350 nm; λₑₘᵢ=450 nm); AMCA-X (λ_{exc}=353 nm; λₑₘᵢ=442 nm); Aminocoumarin (λ_{exc}=350 nm; λₑₘᵢ=445 nm); Anthrocyl stearate (λ_{exc}=370 nm; λₑₘᵢ=446 nm); ATTO 390 (λ_{exc}=390 nm; λₑₘᵢ=479 nm); Beta lactamase (λ_{exc}=409 nm; λₑₘᵢ=450 nm); BFP (Blue Fluorescent Protein) (λ_{exc}=380 nm; λₑₘᵢ=435 nm); Bimane (λ_{exc}=380 nm; λₑₘᵢ=461 nm); Bisbenzimide (Hoechst) (λ_{exc}=360 nm; λₑₘᵢ=461 nm); Blancophor FFG (λ_{exc}=390 nm; λₑₘᵢ=470 nm); Blancophor SV (λ_{exc}=370 nm; λₑₘᵢ=435 nm); Calcein Blue (λ_{exc}=373 nm; λₑₘᵢ=440 nm); Calcofluor White (λ_{exc}=350 nm; λₑₘᵢ=440 nm); Cascade Blue™ (λ_{exc}=401 nm; λₑₘᵢ=420 nm); Catecholamine (λ_{exc}=410 nm; λₑₘᵢ=470 nm); Coumarin Phalloidin (λ_{exc}=548 nm; λₑₘᵢ=559 nm); CPM Methylcoumarin (λ_{exc}=548 nm; λₑₘᵢ=559 nm); DAPI (λ_{exc}=359 nm; λₑₘᵢ=461 nm); EBFP (λ_{exc}=380 nm; λₑₘᵢ=440 nm); Fast Blue (λ_{exc}=360 nm; λₑₘᵢ=440 nm); FIF (Formaldehyde Induced Fluorescence) (λ_{exc}=405 nm; λₑₘᵢ=483 nm); Gloxalic Acid (λ_{exc}=405 nm; λₑₘᵢ=460 nm); Granular Blue (λ_{exc}=355 nm; λₑₘᵢ=425 nm); Hoechst 33258 (λ_{exc}=352 nm; λₑₘᵢ=455 nm); Hoechst 33342 (λ_{exc}=352 nm; λₑₘᵢ=455 nm); Hoechst 34580 (λ_{exc}=392 nm; λₑₘᵢ=440 nm); HPTS (λ_{exc}=355 nm; λₑₘᵢ=465 nm); Indo-1 (λ_{exc}=346 nm; λₑₘᵢ=475 nm); Intrawhite Cf (λ_{exc}=360 nm; λₑₘᵢ=430 nm); Laurodan (λ_{exc}=355 nm; λₑₘᵢ=460 nm); Leucophor PAF, SF, WS (λ_{exc}=370 nm; λₑₘᵢ=430 nm); LysoSensor Blue (λ_{exc}=374 nm; λₑₘᵢ=424 nm); LysoSensor Blue DND-167 (λ_{exc}=374 nm; λₑₘᵢ=425 nm); Lysosensor Blue DND-192 (λ_{exc}=374 nm; λₑₘᵢ=424 nm); LysoTracker Blue (λ_{exc}=373 nm; λₑₘᵢ=422 nm); Mag-Indo-1 (λ_{exc}=349 nm; λₑₘᵢ=480 nm); Marina Blue (λ_{exc}=365 nm; λₑₘᵢ=460 nm); Methoxycoumarin (λ_{exc}=360 nm; λₑₘᵢ=410 nm); Monochlorobimane (λ_{exc}=380 nm; λₑₘᵢ=461 nm); Pacific Blue™ (λ_{exc}=410 nm; λₑₘᵢ=455 nm); PBFI (λ_{exc}=360 nm; λₑₘᵢ=420 nm); Phorwite AR (λ_{exc}=360 nm; λₑₘᵢ=430 nm); Phorwite BKL (λ_{exc}=370 nm; λₑₘᵢ=430 nm); Phorwite Rev (λ_{exc}=380 nm; λₑₘᵢ=430 nm); Phorwite RPA (λ_{exc}=375 nm; λₑₘᵢ=430 nm); SBFI (λ_{exc}=360 nm; λₑₘᵢ=420 nm); sgBFP™ (λ_{exc}=387 nm; λₑₘᵢ=450 nm); SITS (Primuline) (λ_{exc}=410 nm; λₑₘᵢ=450 nm); SITS (Stilbene Isothiosulphonic Acid) (λ_{exc}=365 nm; λₑₘᵢ=460 nm); SPQ (6-methoxy-N-(3-sulfopropyl)quinolinium) (λ_{exc}=344 nm; λₑₘᵢ=433 nm); TagBFP (λ_{exc}=402 nm; λₑₘᵢ=457 nm); Thioflavin TCN (λ_{exc}=350 nm; λₑₘᵢ=460 nm); Thiolyte (λ_{exc}=378 nm; λₑₘᵢ=483 nm); Tinopol CBS (Calcofluor White) (λ_{exc}=390 nm; λₑₘᵢ=430 nm); True Blue (λ_{exc}=365 nm; λₑₘᵢ=425 nm); Uvitex SFC (λ_{exc}=365 nm; λₑₘᵢ=435 nm); Y66H (λ_{exc}=360 nm; λₑₘᵢ=442 nm); ACMA (9-amino-6-chloro-2-methoxyacridine) (λ_{exc}=421 nm; λₑₘᵢ=473 nm); AmCyan (λ_{exc}=454 nm; λₑₘᵢ=488 nm); AmCyanl (λ_{exc}=458 nm; λₑₘᵢ=489 nm); Astrazon Yellow 7 GLL (λ_{exc}=450 nm; λₑₘᵢ=480 nm); Atabrine (λ_{exc}=436 nm; λₑₘᵢ=490 nm); ATTO 425 (λ_{exc}=436 nm; λₑₘᵢ=484 nm); BOBO-1, BO-PRO-1 (λ_{exc}=462 nm; λₑₘᵢ=481 nm); Cerulean (λ_{exc}=434 nm; λₑₘᵢ=475 nm); CFP (cyan GFP) (λ_{exc}=434 nm; λₑₘᵢ=477 nm); Chromomycin A (λ_{exc}=448 nm; λₑₘᵢ=470 nm); Coelenterazine F (λ_{exc}=437 nm; λₑₘᵢ=473 nm); DEAC (λ_{exc}=432 nm; λₑₘᵢ=472 nm); ECFP (λ_{exc}=434 nm; λₑₘᵢ=477 nm); Genacryl Brilliant Yellow 10GF (λ_{exc}=430 nm; λₑₘᵢ=485 nm); Genacryl Yellow 5GF (λ_{exc}=430 nm; λₑₘᵢ=475 nm); Mitramycin (λ_{exc}=450 nm; λₑₘᵢ=470 nm); POPO-1, PO-PRO-1 (λ_{exc}=434 nm; λₑₘᵢ=456 nm); Sevron Yellow L (λ_{exc}=430 nm; λₑₘᵢ=490 nm); SpectrumAqua (λ_{exc}=433 nm; λₑₘᵢ=480 nm); SYTO Blue Fluorescent Nucleic Acid Stain 43 (λ_{exc}=436 nm; λₑₘᵢ=467 nm); SYTO Blue Fluorescent Nucleic Acid Stain 44 (λ_{exc}=446 nm; λₑₘᵢ=471 nm); SYTO Blue Fluorescent Nucleic Acid Stain 45 (λ_{exc}=452 nm; λₑₘᵢ=484 nm); SYTOX Blue (λ_{exc}=445 nm; λₑₘᵢ=470 nm); TagCFP (λ_{exc}=458 nm; λₑₘᵢ=480 nm); Thiozole Orange (λ_{exc}=453 nm; λₑₘᵢ=480 nm); Y66W (λ_{exc}=436 nm; λₑₘᵢ=485 nm); Cascade Yellow™ (λ_{exc}=402 nm; λₑₘᵢ=545 nm); EFL® 97 alcohol (λ_{exc}=345 nm; λₑₘᵢ=530 nm); ER-Tracker™ Blue-White DPX (λ_{exc}=372 nm; λₑₘᵢ=556 nm); Fura-2 363, 335 (λ_{exc}=512 nm; λₑₘᵢ=505 nm); LysoSensor Yellow/Blue (λ_{exc}=0 nm; λₑₘᵢ=0 nm); 2-dodecylresorufin-lipid (λ_{exc}=582 nm; λₑₘᵢ=595 nm); AcGFP1 (λ_{exc}=475 nm; λₑₘᵢ=505 nm); ATTO 465 (λ_{exc}=453 nm; λₑₘᵢ=508 nm); Aurophosphine (λ_{exc}=470 nm; λₑₘᵢ=515 nm); BCECF (low pH) (λ_{exc}=482 nm; λₑₘᵢ=520 nm); bis-BTC (λ_{exc}=455 nm; λₑₘᵢ=529 nm); CFP (cyan GFP) (λ_{exc}=434 nm; λₑₘᵢ=477 nm); Chromomycin A (λ_{exc}=448 nm; λₑₘᵢ=470 nm); Cy2™ (λ_{exc}=489 nm; λₑₘᵢ=506 nm); CyQuant Cell Proliferation Assay (λ_{exc}=480 nm; λₑₘᵢ=520 nm); DiO (λ_{exc}=475 nm; λₑₘᵢ=500 nm); DyLight 488 (λ_{exc}=491 nm; λₑₘᵢ=519 nm); EGFP (λ_{exc}=489 nm; λₑₘᵢ=508 nm); Emerald (λ_{exc}=490 nm; λₑₘᵢ=510 nm); GFP (EGFP) (λ_{exc}=489 nm; λₑₘᵢ=508 nm); NBD Amine (λ_{exc}=450 nm; λₑₘᵢ=530 nm); Nitrobenzoxadidole (λ_{exc}=465 nm; λₑₘᵢ=510 nm); Nylosan Brilliant Lavin E8G (λ_{exc}=460 nm; λₑₘᵢ=510 nm); S65C (λ_{exc}=479 nm; λₑₘᵢ=507 nm); S65L (λ_{exc}=484 nm; λₑₘᵢ=510 nm); S65T (λ_{exc}=488 nm; λₑₘᵢ=511 nm); sgGFP™ (super glow GFP) (λ_{exc}=474 nm; λₑₘᵢ=509 nm); SYTO Blue Fluorescent Nucleic Acid Stain 45 (λ_{exc}=452 nm; λₑₘᵢ=484 nm); SYTO Green Fluorescent Nucleic Acid Stains 12, 13, 16, 21, 23, 24 (λ_{exc}=494 nm; λₑₘᵢ=515 nm); SYTOX Blue (λ_{exc}=445 nm; λₑₘᵢ=470 nm); TagGFP2 (λ_{exc}=483 nm; λₑₘᵢ=506 nm); Thiozole Orange (λ_{exc}=453 nm; λₑₘᵢ=480 nm); TurboGFP (λ_{exc}=482 nm; λₑₘᵢ=502 nm); wtGFP (wild type GFP, non-UV excitation) (λ_{exc}=475 nm; λₑₘᵢ=509 nm); Y66W (λ_{exc}=436 nm; λₑₘᵢ=485 nm); YOYO-1, YO-PRO-1 (λ_{exc}=491 nm; λₑₘᵢ=509 nm); 2-dodecylresorufin-lipid (λ_{exc}=582 nm; λₑₘᵢ=595 nm); 5-carboxy-2,7-dichlorofluorescein (λ_{exc}=504 nm; λₑₘᵢ=529 nm); 5-FAM (5-carboxyfluorescein) (λ_{exc}=492 nm; λₑₘᵢ=518 nm); Acridine (λ_{exc}=362 nm; λₑₘᵢ=462 nm); Acridine Orange (λ_{exc}=500 nm; λₑₘᵢ=526 nm); Acridine Orange + DNA (λ_{exc}=500 nm; λₑₘᵢ=52675 nm); Acridine Yellow (λ_{exc}=470 nm; λₑₘᵢ=550 nm); Alexa Fluor 488™ (λ_{exc}=495 nm; λₑₘᵢ=519 nm); Alexa Fluor 500™ (λ_{exc}=503 nm; λₑₘᵢ=525 nm); Astrazon Orange R (λ_{exc}=470 nm; λₑₘᵢ=540 nm); ATTO 488 (λ_{exc}=501 nm; λₑₘᵢ=523 nm); ATTO 495 (λ_{exc}=495 nm; λₑₘᵢ=521 nm); ATTO-TAG™ CBQCA (λ_{exc}=465 nm; λₑₘᵢ=560 nm); Auramine (λ_{exc}=460 nm; λₑₘᵢ=550 nm); BCECF (high pH) (λ_{exc}=503 nm; λₑₘᵢ=528 nm); BCECF (low pH) (λ_{exc}=482 nm; λₑₘᵢ=520 nm); BODIPY (λ_{exc}=505 nm; λₑₘᵢ=513 nm); BODIPY 492/515 (λ_{exc}=490 nm; λₑₘᵢ=515 nm); BODIPY 505/515 (λ_{exc}=502 nm; λₑₘᵢ=510 nm); BODIPY FL (λ_{exc}=505 nm; λₑₘᵢ=513 nm); BTC (λ_{exc}=464 nm; λₑₘᵢ=530 nm); Calcein (λ_{exc}=494 nm; λₑₘᵢ=517 nm); CFDA (λ_{exc}=494 nm; λₑₘᵢ=520 nm); CMFDA (λ_{exc}=494 nm; λₑₘᵢ=520 nm); Cyclic AMP Fluorosensor (FiCRhR) (λ_{exc}=500 nm; λₑₘᵢ=517 nm); DCFDA (λ_{exc}=504 nm; λₑₘᵢ=529 nm); DTAF (λ_{exc}=494 nm; λₑₘᵢ=520 nm); DyLight 488 (λ_{exc}=491 nm; λₑₘᵢ=519 nm); Emerald (λ_{exc}=490 nm; λₑₘᵢ=510 nm); ER-Tracker™ Green (λ_{exc}=504 nm; λₑₘᵢ=511 nm); FAM (λ_{exc}=492 nm; λₑₘᵢ=518 nm); FDA (λ_{exc}=494 nm; λₑₘᵢ=520 nm); FITC (Fluorescein) (λ_{exc}=492 nm; λₑₘᵢ=520 nm); Fluo-4 (λ_{exc}=494 nm; λₑₘᵢ=516 nm); Fluoro-Emerald (λ_{exc}=495 nm; λₑₘᵢ=524 nm); FluorX (λ_{exc}=494 nm; λₑₘᵢ=520 nm); FluoSpheres Yellow-Green (λ_{exc}=503 nm; λₑₘᵢ=514 nm); HCS LipidTOX Green (λ_{exc}=504 nm; λₑₘᵢ=536 nm); HiLyte Fluor™ 488 (λ_{exc}=497 nm; λₑₘᵢ=525 nm); JC-1 (λ_{exc}=498 nm; λₑₘᵢ=525 nm); JC-9 (λ_{exc}=506 nm; λₑₘᵢ=525 nm); LIVE/DEAD Kit Animal Cells (λ_{exc}=494 nm; λₑₘᵢ=517 nm); LysoTracker Blue-White (λ_{exc}=466 nm; λₑₘᵢ=536 nm); LysoTracker Green (λ_{exc}=504 nm; λₑₘᵢ=511 nm); mHoneydew (λ_{exc}=478 nm; λₑₘᵢ=561 nm); MitoTracker™ Green (λ_{exc}=490 nm; λₑₘᵢ=516 nm); NBD (λ_{exc}=466 nm; λₑₘᵢ=539 nm); NBD-X (λ_{exc}=467 nm; λₑₘᵢ=538 nm); NeuroTrace 500/525 Green Fluorescent Nissl Stain (λ_{exc}=500 nm; λₑₘᵢ=525 nm); Nissl (λ_{exc}=497 nm; λₑₘᵢ=524 nm); Oregon Green™ (λ_{exc}=503 nm; λₑₘᵢ=522 nm); Oregon Green™ 488 (λ_{exc}=496 nm; λₑₘᵢ=524 nm); Oregon Green™ 500 (λ_{exc}=497 nm; λₑₘᵢ=517 nm); Oregon Green™ 514 (λ_{exc}=511 nm; λₑₘᵢ=530 nm); PicoGreen® (λ_{exc}=502 nm; λₑₘᵢ=522 nm); PKH67 (λ_{exc}=496 nm; λₑₘᵢ=520 nm); Rhod-123 (λ_{exc}=507 nm; λₑₘᵢ=529 nm); Rhodamine 110 (λ_{exc}=496 nm; λₑₘᵢ=520 nm); Rhodol Green (λ_{exc}=496 nm; λₑₘᵢ=523 nm); rsGFP (red shifted GFP, S65T) (λ_{exc}=498 nm; λₑₘᵢ=516 nm); Sodium Green (λ_{exc}=506 nm; λₑₘᵢ=532 nm); SYTO Green Fluorescent Nucleic Acid Stains 12,13,16,21,23,24 (λ_{exc}=494 nm; λₑₘᵢ=515 nm); SYTOX Green (λ_{exc}=504 nm; λₑₘᵢ=523 nm); TagGFP2 (λ_{exc}=483 nm; λₑₘᵢ=506 nm); TurboGFP (λ_{exc}=482 nm; λₑₘᵢ=502 nm); 6-Carboxyrhodamine 6G (λ_{exc}=525 nm; λₑₘᵢ=555 nm); Alexa Fluor 514™ (λ_{exc}=518 nm; λₑₘᵢ=543 nm); ATTO 488 (λ_{exc}=501 nm; λₑₘᵢ=523 nm); ATTO 495 (λ_{exc}=495 nm; λₑₘᵢ=527 nm); ATTO 520 (λ_{exc}=516 nm; λₑₘᵢ=538 nm); BCECF (high pH) (λ_{exc}=503 nm; λₑₘᵢ=528 nm); CAL Fluor® Gold 540 (λ_{exc}=522 nm; λₑₘᵢ=544 nm); Calcium Green-1 (λ_{exc}=506 nm; λₑₘᵢ=531 nm); Calcium Green-2 (including Ca2+) (λ_{exc}=506 nm; λₑₘᵢ=536 nm); Calcium Green-5N (including Ca2+) (λ_{exc}=506 nm; λₑₘᵢ=532 nm); CI-NERF, CL-NERF (λ_{exc}=509 nm; λₑₘᵢ=540 nm); DCFH (Dichlorodihydrofluorescein Diacetate) (λ_{exc}=505 nm; λₑₘᵢ=535 nm); DHR (Dihydrorhodamine 123) (λ_{exc}=505 nm; λₑₘᵢ=534 nm); DM-NERF (λ_{exc}=500 nm; λₑₘᵢ=540 nm); Eosin (λ_{exc}=525 nm; λₑₘᵢ=546 nm); EYFP (λ_{exc}=513 nm; λₑₘᵢ=527 nm); FlAsH-CCPFCC (λ_{exc}=511 nm; λₑₘᵢ=530 nm); Fluo-3 (λ_{exc}=506 nm; λₑₘᵢ=526 nm); HCS LipidTOX Green (λ_{exc}=504 nm; λₑₘᵢ=536 nm); JO-JO-1, JO-PRO-1 (λ_{exc}=530 nm; λₑₘᵢ=545 nm); Magnesium Green (λ_{exc}=506 nm; λₑₘᵢ=531 nm); mHoneydew (λ_{exc}=478 nm; λₑₘᵢ=561 nm); Rhodamine 123 (λ_{exc}=507 nm; λₑₘᵢ=529 nm); Rhodamine 6G (λ_{exc}=525 nm; λₑₘᵢ=555 nm); Rhodamine Green (λ_{exc}=502 nm; λₑₘᵢ=527 nm); SpectrumGreen (λ_{exc}=497 nm; λₑₘᵢ=538 nm); SYTO Green Fluorescent Nucleic Acid Stains 11,14,15,20,22,25 (λ_{exc}=515 nm; λₑₘᵢ=543 nm); SYTO Orange Fluorescent Nucleic Acid Stains 80,81,82,83 (λ_{exc}=537 nm; λₑₘᵢ=552 nm); TagYFP (λ_{exc}=508 nm; λₑₘᵢ=524 nm); TET (λ_{exc}=521 nm; λₑₘᵢ=536 nm); TOTO-1, TO-PRO-1 (λ_{exc}=509 nm; λₑₘᵢ=533 nm); TurboYFP (λ_{exc}=525 nm; λₑₘᵢ=538 nm); YFP (yellow GFP) (λ_{exc}=513 nm; λₑₘᵢ=527 nm); ZsYellow1 (λ_{exc}=529 nm; λₑₘᵢ=539 nm); 5-TAMRA (5-carboxytetramethylrhodamine, high pH) (λ_{exc}=542 nm; λₑₘᵢ=568 nm); Alexa Fluor 532™ (λ_{exc}=531 nm; λₑₘᵢ=554 nm); Alexa Fluor 546™ (λ_{exc}=556 nm; λₑₘᵢ=573 nm); Alizarin Red (λ_{exc}=540 nm; λₑₘᵢ=580 nm); Astrazon Brilliant Red 4G (λ_{exc}=500 nm; λₑₘᵢ=585 nm); BO-PRO™-3 (λ_{exc}=544 nm; λₑₘᵢ=570 nm); BODIPY 542/563 (λ_{exc}=543 nm; λₑₘᵢ=563 nm); BODIPY 558/568 (λ_{exc}=558 nm; λₑₘᵢ=569 nm); BODIPY TMR-X (λ_{exc}=542 nm; λₑₘᵢ=574 nm); CAL Fluor Orange 560 (λ_{exc}=464 nm; λₑₘᵢ=530 nm); DiI (λ_{exc}=551 nm; λₑₘᵢ=565 nm); Ethidium Bromide (λ_{exc}=518 nm; λₑₘᵢ=605 nm); Genacryl Brilliant Red B (λ_{exc}=520 nm; λₑₘᵢ=590 nm); HEX (λ_{exc}=535 nm; λₑₘᵢ=556 nm); HiLyte Fluor™ 555 (λ_{exc}=550 nm; λₑₘᵢ=566 nm); JOE (λ_{exc}=525 nm; λₑₘᵢ=555 nm); mOrange (λ_{exc}=548 nm; λₑₘᵢ=568 nm); mStrawberry (λ_{exc}=575 nm; λₑₘᵢ=596 nm); mTangerine (λ_{exc}=568 nm; λₑₘᵢ=585 nm); NED (λ_{exc}=546 nm; λₑₘᵢ=575 nm); Nile Red (λ_{exc}=549 nm; λₑₘᵢ=628 nm); OFP (λ_{exc}=547 nm; λₑₘᵢ=567 nm); pHrodo™ (λ_{exc}=560 nm; λₑₘᵢ=587 nm); PKH26 (Sigma) (λ_{exc}=551 nm; λₑₘᵢ=567 nm); PO-PRO-3 (λ_{exc}=539 nm; λₑₘᵢ=567 nm); POPO-3 (λ_{exc}=533 nm; λₑₘᵢ=574 nm); Pro-Q Diamond (λ_{exc}=556 nm; λₑₘᵢ=583 nm); Rhod-2 (λ_{exc}=552 nm; λₑₘᵢ=578 nm); Rhodamine (λ_{exc}=550 nm; λₑₘᵢ=573 nm); Rhodamine BB (λ_{exc}=540 nm; λₑₘᵢ=580 nm); Rhodamine BG (λ_{exc}=540 nm; λₑₘᵢ=572 nm); Rhodamine Phalloidine (λ_{exc}=542 nm; λₑₘᵢ=565 nm); Rose Bengal (λ_{exc}=533 nm; λₑₘᵢ=575 nm); Sevron Brilliant Red 2B (λ_{exc}=520 nm; λₑₘᵢ=595 nm); Sevron Brilliant Red B (λ_{exc}=530 nm; λₑₘᵢ=590 nm); SpectrumOrange (λ_{exc}=559 nm; λₑₘᵢ=588 nm); Sulphorhodamine B can C (λ_{exc}=520 nm; λₑₘᵢ=595 nm); SYTOX Orange (λ_{exc}=547 nm; λₑₘᵢ=570 nm); TagRFP (λ_{exc}=555 nm; λₑₘᵢ=584 nm); TMR (λ_{exc}=542 nm; λₑₘᵢ=574 nm); TRITC (Tetramethylrhodamine) (λ_{exc}=555 nm; λₑₘᵢ=580 nm); TurboRFP (λ_{exc}=553 nm; λₑₘᵢ=574 nm); Xylene Orange (λ_{exc}=546 nm; λₑₘᵢ=580 nm); Alexa Fluor 555™ (λ_{exc}=555 nm; λₑₘᵢ=565 nm); BOBO™-3 (λ_{exc}=570 nm; λₑₘᵢ=602 nm); BODIPY 558/568 (λ_{exc}=558 nm; λₑₘᵢ=569 nm); BODIPY 564/570 (λ_{exc}=564 nm; λₑₘᵢ=570 nm); CAL Fluor Red 590 (λ_{exc}=569 nm; λₑₘᵢ=591 nm); Calcium Orange (λ_{exc}=579 nm; λₑₘᵢ=575 nm); Carboxy SNARF Indicators (λ_{exc}=548 nm; λₑₘᵢ=587 nm); CoralHue Kusabira Orange (mKO) (λ_{exc}=548 nm; λₑₘᵢ=559 nm); Cy3™ (λ_{exc}=552 nm; λₑₘᵢ=570 nm); (λ_{exc}=360 nm; λₑₘᵢ=442 nm); DsRed Monomer (λ_{exc}=556 nm; λₑₘᵢ=586 nm); DsRed-Express(λ_{exc}=557 nm; λₑₘᵢ=579 nm); DsRed2 (λ_{exc}=563 nm; λₑₘᵢ=582 nm); dTomato (λ_{exc}=554 nm; λₑₘᵢ=581 nm); DyLight 549 (λ_{exc}=553 nm; λₑₘᵢ=569 nm); Ethidium Homodimer-1 (EthD-1) (λ_{exc}=528 nm; λₑₘᵢ=617 nm); Fluor-Ruby (λ_{exc}=555 nm; λₑₘᵢ=582 nm); Haematoporphyrin (λ_{exc}=545 nm; λₑₘᵢ=580 nm); ssamine Rhodamine (λ_{exc}=572 nm; λₑₘᵢ=591 nm) ; LO-PRO-1 (λ_{exc}=568 nm; λₑₘᵢ=581 nm); LOLO-1 (λ_{exc}=566 nm; λₑₘᵢ=580 nm); LysoTracker Red (λ_{exc}=577 nm; λₑₘᵢ=592 nm); LysoTracker Yellow (λ_{exc}=551 nm; λₑₘᵢ=576 nm); Mag-Fura Red (λ_{exc}=483 nm; λₑₘᵢ=659 nm); Magdala Red (Phloxin B) (λ_{exc}=524 nm; λₑₘᵢ=600 nm); Magnesium Orange (λ_{exc}=550 nm; λₑₘᵢ=575 nm); Merocyanin (λ_{exc}=555 nm; λₑₘᵢ=578 nm); MitoTracker™ Orange (λ_{exc}=551 nm; λₑₘᵢ=576 nm); mOrange (λ_{exc}=548 nm; λₑₘᵢ=568 nm); mStrawberry (λ_{exc}=575 nm; λₑₘᵢ=596 nm); mTangerine (λ_{exc}=568 nm; λₑₘᵢ=585 nm); OFP (λ_{exc}=547 nm; λₑₘᵢ=567 nm); Phloxin B (Magdala Red) (λ_{exc}=524 nm; λₑₘᵢ=600 nm); Phycoerythrin (PE) (λ_{exc}=565 nm; λₑₘᵢ=575 nm); PKH26 (λ_{exc}=559 nm; λₑₘᵢ=575 nm); Pontochrome Blue Black (λ_{exc}=545 nm; λₑₘᵢ=605 nm); Pyronine B (λ_{exc}=565 nm; λₑₘᵢ=605 nm); Quasar 570 (λ_{exc}=547 nm; λₑₘᵢ=570 nm); R-phycoerythrin (PE) (λ_{exc}=565 nm; λₑₘᵢ=575 nm); Resorufin (λ_{exc}=571 nm; λₑₘᵢ=585 nm); Rhodamine B 200 (λ_{exc}=540 nm; λₑₘᵢ=595 nm) Rhodamine Phallicidine (λ_{exc}=558 nm; λₑₘᵢ=575 nm); Rhodamine Red (λ_{exc}=560 nm; λₑₘᵢ=580 nm); ROX (λ_{exc}=568 nm; λₑₘᵢ=595 nm); SNARF (carboxy) 488 Excitation pH6 (λ_{exc}=549 nm; λₑₘᵢ=589 nm); SNARF (carboxy) 514 Excitation pH6 (λ_{exc}=549 nm; λₑₘᵢ=586 nm); SpectrumOrange (λ_{exc}=559 nm; λₑₘᵢ=588 nm); SYTO Orange Fluorescent Nucleic Acid Stains 84,85 (λ_{exc}=567 nm; λₑₘᵢ=583 nm); TAMRA (λ_{exc}=565 nm; λₑₘᵢ=580 nm); Tetramethylrhodamine, Rhodamine B (λ_{exc}=555 nm; λₑₘᵢ=580 nm); X-Rhodamine (λ_{exc}=570 nm; λₑₘᵢ=576 nm); 5-chloromethylfluorescein (λ_{exc}=491 nm; λₑₘᵢ=517 nm); 5-ROX (carboxy-X-rhodamine) (λ_{exc}=580 nm; λₑₘᵢ=605 nm); 7-AAD (λ_{exc}=546 nm; λₑₘᵢ=647 nm); 7-aminoactinomycin D (7-AAD) (λ_{exc}=546 nm; λₑₘᵢ=647 nm); Acid Fuchsin (λ_{exc}=540 nm; λₑₘᵢ=630 nm); Alexa Fluor 568™ (λ_{exc}=578 nm; λₑₘᵢ=603 nm); Alexa Fluor 594™ (λ_{exc}=590 nm; λₑₘᵢ=617 nm); Aminoactinomycin D (λ_{exc}=555 nm; λₑₘᵢ=655 nm); AsRed 2 (λ_{exc}=576 nm; λₑₘᵢ=592 nm); ATTO 565 (λ_{exc}=563 nm; λₑₘᵢ=592 nm); BODIPY TR (λ_{exc}=589 nm; λₑₘᵢ=617 nm); BODIPY TR ATP (λ_{exc}=591 nm; λₑₘᵢ=620 nm); BODIPY TR-X (λ_{exc}=589 nm; λₑₘᵢ=617 nm); BODIPY TR-X SE (λ_{exc}=588 nm; λₑₘᵢ=616 nm); CAL Fluor Red 610 (λ_{exc}=590 nm; λₑₘᵢ=610 nm); Calcium Crimson™ (λ_{exc}=588 nm; λₑₘᵢ=611 nm); Cy3.5™ (λ_{exc}=580 nm; λₑₘᵢ=591 nm); ER-Tracker™ Red (λ_{exc}=587 nm; λₑₘᵢ=615 nm); Feulgen (Pararosaniline) (λ_{exc}=570 nm; λₑₘᵢ=625 nm) FluoSpheres Red (λ_{exc}=656 nm; λₑₘᵢ=683 nm); Fura Red™ (high pH) (λ_{exc}=572 nm; λₑₘᵢ=657 nm); HcRed (λ_{exc}=590 nm; λₑₘᵢ=614 nm); HCS LipidTOX Red (λ_{exc}=582 nm; λₑₘᵢ=616 nm); LysoTracker Red DND-99 (L-7528) (λ_{exc}=577 nm; λₑₘᵢ=590 nm); mCherry (RFP) (λ_{exc}=587 nm; λₑₘᵢ=610 nm); MitoTracker™ Red (λ_{exc}=578 nm; λₑₘᵢ=599 nm); mKate2 (λ_{exc}=588 nm; λₑₘᵢ=633 nm); mPlum (λ_{exc}=594 nm; λₑₘᵢ=648 nm); Nile Red (λ_{exc}=549 nm; λₑₘᵢ=628 nm); Propidium Iodide (PI) (λ_{exc}=536 nm; λₑₘᵢ=617 nm); Rhodamine Red Dye (λ_{exc}=570 nm; λₑₘᵢ=590 nm); SNARF (carboxy) Excitation pH9 (λ_{exc}=576 nm; λₑₘᵢ=639 nm); SpectrumRed (λ_{exc}=587 nm; λₑₘᵢ=612 nm); SYTO 64 (λ_{exc}=599 nm; λₑₘᵢ=619 nm); SYTO Red Fluorescent Nucleic Acid Stain 64 (λ_{exc}=567 nm; λₑₘᵢ=583 nm); Texas Red-X® Conjugate (λ_{exc}=595 nm; λₑₘᵢ=615 nm); Texas Red® (λ_{exc}=595 nm; λₑₘᵢ=615 nm); Thiazine Red R (λ_{exc}=596 nm; λₑₘᵢ=615 nm); TRITC (Tetramethylrhodamine) (λ_{exc}=555 nm; λₑₘᵢ=580 nm); TurboFP602 (λ_{exc}=574 nm; λₑₘᵢ=620 nm); TurboFP635 (λ_{exc}=588 nm; λₑₘᵢ=635 nm); WW 781 (λ_{exc}=605 nm; λₑₘᵢ=639 nm); X-Rhod-1 Indicator (λ_{exc}=580 nm; λₑₘᵢ=602 nm); 5-carboxynapthofluorescein (pH 10) (λ_{exc}=555 nm; λₑₘᵢ=615 nm); 5-chloromethylfluorescein (λ_{exc}=491 nm; λₑₘᵢ=517 nm); ATTO 565 (λ_{exc}=563 nm; λₑₘᵢ=592 nm); FluoSpheres Red (λ_{exc}=656 nm; λₑₘᵢ=683 nm); HCS LipidTOX Red (λ_{exc}=582 nm; λₑₘᵢ=616 nm); mCherry (RFP) (λ_{exc}=587 nm; λₑₘᵢ=610 nm); mKate2 (λ_{exc}=588 nm; λₑₘᵢ=633 nm); TurboFP602 (λ_{exc}=574 nm; λₑₘᵢ=620 nm); TurboFP635 (λ_{exc}=588 nm; λₑₘᵢ=635 nm); 5-carboxynapthofluorescein (pH 10) (λ_{exc}=555 nm; λₑₘᵢ=615 nm); Alexa Fluor 647™ (λ_{exc}=650 nm; λₑₘᵢ=668 nm); Alexa Fluor 660™ (λ_{exc}=663 663 nm; λₑₘᵢ=690 nm); APC (Allophycocyanin) (λ_{exc}=651 nm; λₑₘᵢ=661 nm); ATTO 633 (λ_{exc}=629 nm; λₑₘᵢ=657 nm); ATTO 647 (λ_{exc}=645 nm; λₑₘᵢ=669 nm); BODIPY 650/665-X (λ_{exc}=650 nm; λₑₘᵢ=665 nm); Cy5™ (λ_{exc}=649 nm; λₑₘᵢ=666 nm); DiD (DiIC18(5)) - Lipophilic Tracer (λ_{exc}=644 nm; λₑₘᵢ=665 nm); DY-635-NHS (λ_{exc}=634 nm; λₑₘᵢ=664 nm); DyLight 649 (λ_{exc}=651 nm; λₑₘᵢ=673 nm); FluoSpheres Dark Red (λ_{exc}=656 nm; λₑₘᵢ=683 nm); HiLyte Fluor™ 647 (λ_{exc}=649 nm; λₑₘᵢ=672 nm); Indodicarbocyanine (DiD) (λ_{exc}=644 nm; λₑₘᵢ=665 nm); LIVE-DEAD Fixable Green (λ_{exc}=498 nm; λₑₘᵢ=526 nm); Quasar 670 (λ_{exc}=644 nm; λₑₘᵢ=670 nm); SpectrumFRed (Far Red) (λ_{exc}=655 655 nm; λₑₘᵢ=675 nm) SYTO Red Fluorescent Nucleic Acid Stains 60, 62, 63 (λ_{exc}=655 nm; λₑₘᵢ=675 nm); Thiadicarbocyanine (DiSC3) (λ_{exc}=651 nm; λₑₘᵢ=674 nm); TOTO-3, TO-PRO-3 (λ_{exc}=642 nm; λₑₘᵢ=661 nm); Ultralite (λ_{exc}=656 nm; λₑₘᵢ=678 nm); Alexa Fluor 680™ (λ_{exc}=679 nm; λₑₘᵢ=702 nm); ATTO 611X (λ_{exc}=611 nm; λₑₘᵢ=681 nm); ATTO 655 (λ_{exc}=663 nm; λₑₘᵢ=684 nm); ATTO 680 (λ_{exc}=680 nm; λₑₘᵢ=700 nm); Cy5.5™ (λ_{exc}=676 nm; λₑₘᵢ=690 nm); DyLight 680 (λ_{exc}=676 nm; λₑₘᵢ=705 nm); HiLyte Fluor™ 680 (λ_{exc}=688 nm; λₑₘᵢ=700 nm); Alexa Fluor 750™ (λ_{exc}=749 nm; λₑₘᵢ=775 nm); ATTO 725 (λ_{exc}=725 nm; λₑₘᵢ=752 nm); ATTO 740 (λ_{exc}=740 nm; λₑₘᵢ=764 nm); Cy7™ (λ_{exc}=753 nm; λₑₘᵢ=775 nm); ICG (λ_{exc}=768 nm; λₑₘᵢ=807 nm) ; le chlorure de Nile Blue, la rhodamine 110, le chlorure de nitrobenzoxadiazole (NBD), et plus particulièrement l'acridine orange, l'alizarine red ;
- l'élément des terres rares est un un lanthanide et notamment l'europium, le terbium, le dysprosium ;
- l'élément de transition est éventuellement sous forme de sel, tel que le ruthénium, le rhénium, l'osmium, l'iridium cadmium, manganese, chrome ;
et tel que ledit matériau à transition de spin dopé répond à la formule générale (III) ou (IV) suivante:
[(D)n%]{[Fe(L)₃](X)₂.xH₂O} (III)
dans laquelle :
- L représente un ligand tel que trz (1,2,4-triazole), NH₂trz (4-amino-triazole), Fatrz (4-formylamino-1,2,4-triazol), alkyltrz (4-alkyl-1,2,4-triazole) ;
- X représente un contre-ion anionique tel que OTf (triflate ou trifluorométhanesulfonate), p-tol ou tos (p-tolylsulfonate ou encore tosylate), tétrafluoroborate, nitrate, Br, Cl, etc. ;
- x est un entier compris entre 0 et 10 ;
- D est un agent dopant fluorescent tel que défini ci-dessus, de longueurs d'onde d'émission et d'excitation comprises entre 400 et 800 nm ; et
- n est le pourcentage en mole de dopant par rapport au nombre de mole d'atome de fer,
ou[(D)n%]{FeyM_{(1-y)}(L)[M'(CN)₄]} (IV)
où
M représente un métal tel que le Ni, Co ou Zn ;
M' représente un métal, identique ou différent à M, choisi parmi Ni, Pd, Pt ;
L représente le ligand pyrazine (pz) ou le ligand bis(4-pyridyl)acetylene (bpac) ou tout autre ligand azoté bidente ;
D représente un agent dopant fluorescent tel que défini ci-dessus, de longueurs d'onde d'émission et d'excitation comprises entre 400 et 800 nm ;et
y est compris entre 0 et 1.

2. Matériau à transition de spin dopé selon la revendication 1, tel que la fluorescence émise est modulée sélectivement selon la température.

3. Matériau à transition de spin selon la revendication 1 ou 2, tel que l'agent dopant présente une longueur d'onde d'émission de fluorescence correspondante à la longueur d'onde d'absorption du matériau à transition de spin dans un de ses états (bas spin ou haut spin) et non dans l'autre de ses états (respectivement haut spin ou bas spin).

4. Matériau à transition de spin dopé selon l'une quelconque des revendications précédentes, tel que lesdites longueurs d'onde d'excitation et/ou d'émission de l'agent dopant et du matériau à transition de spin sont dans le domaine visible, infra-rouge ou ultraviolet.

5. Matériau à transition de spin dopé selon l'une quelconque des revendications 1 à 4, répondant à la formule générale (IIIa) ou (IIIb) :
[(D)n%]{[Fe(NH₂trz)₃](p-tolyl)₂.xH₂O} (IIIa)
[(D)n%]{[Fe(trz)₃](NO₃)₂] (IIIb)
où trz représente le ligand triazole, D représente un agent dopant fluorescent défini comme en revendication 7.

6. Matériau à transition de spin dopé selon l'une quelconque des revendications 1 à 4 répondant à la formule (IVa)
[(D)n%]{Fe_{0.5}Ni_{0.5}(pz)[Pt(CN)₄]} (IVa)
où D représente le chlorure de Nile Blue.

7. Matériau à transition de spin dopé selon l'une quelconque des revendications précédentes, comprenant de 0.000001 à 10% en mole par rapport au nombre de mole d'atome de fer.

8. Procédé de préparation d'un matériau à transition de spin dopé selon l'une quelconque des revendications précédentes, comprenant l'étape consistant à mélanger l'agent dopant à au moins un des constituants du matériau à transition de spin.

9. Composition comprenant le matériau à transition de spin thermochrome dopé selon l'une quelconque des revendications 1 à 8.

10. Procédé de détection de variation de température de part et d'autre d'une température donnée, au moyen d'une composition selon la revendication 8 telle que le matériau présente une température de transition de spin correspondante à ladite température donnée.

11. Procédé de détection visuel de l'état verglacé ou susceptible d'être verglacé d'une chaussée comprenant l'exposition dans l'environnement de la chaussée d'une composition comprenant un matériau à transition de spin thermochrome dopé selon la revendication 9, **caractérisé en ce que** ladite transition de spin dudit matériau a lieu à température comprise entre 0°C et +3°C.

12. Procédé de détection selon la revendication 11 tel que ladite composition est appliquée sur ladite chaussée ou sur un élément de signalétique.

13. Dispositif de détection de l'état verglacé ou susceptible d'être verglacé d'une chaussée comprenant un matériau à transition de spin dopé selon l'une quelconque des revendications 1 à 8.

14. Dispositif selon la revendication 13, **caractérisé en ce qu'**il s'agit d'un élément de signalétique, tel qu'un panneau indicateur ou un patch.

15. Revêtement pour chaussée comprenant un matériau à transition de spin thermochrome dopé tel que défini selon l'une quelconque des revendications 1 à 8.

16. Revêtement selon la revendication 15 tel qu'il s'agit d'une peinture.

17. Utilisation d'un matériau à transition de spin dopé selon l'une quelconque des revendications 1 à 8 pour détecter l'état verglacé ou susceptible d'être verglacé d'une chaussée.

## Patentansprüche

1. Wärmeempfindliches, mit einem oder mehreren Leuchtstoffen dotiertes Spinübergangsmaterial mit einer Erregungswellenlänge, die der Absorptionswellenlänge des Spinübergangsmaterials in einem seiner Zustände (Low Spin oder High Spin) und nicht in dem anderen seiner Zustände (jeweils High Spin oder Low Spin) entspricht, wobei die resultierende Mischung aufweist:
- einen Spinübergang, und
- eine bestimmte Fluoreszenzemission in jedem der Spinübergangszustände,
und derart, dass
der dotierende Leuchtstoff aus den organischen Molekülen, einem Element der seltenen Erden oder Übergangselement sowie ihren Salzen ausgewählt ist,
und die organischen Moleküle ausgewählt sind aus:
BM-Terphenyl (λ_{exc}= 251 nm; λₑₘᵢ= 335 nm); p-Terphenyl (λ_{exc}= 275 nm; λₑₘᵢ= 339 nm); TMQ (λ_{exc}= 266 nm; λₑₘᵢ=); BQM (λ_{exc}= 275 nm; λₑₘᵢ=); DMQ (λ_{exc}= 285 nm; λₑₘᵢ=); Butyl-PBD (λ_{exc}= 302 nm; λₑₘᵢ= 368 nm); PBD (λ_{exc}= 302 nm; λₑₘᵢ= 360); TMI (λ_{exc}= 295 nm; λₑₘᵢ=), QUI (λ_{exc}=310 nm; λₑₘᵢ=); PPO (λ_{exc}= 303 nm; λₑₘᵢ= 365 nm); PPF (λ_{exc}= 324 nm; λₑₘᵢ= 368 nm); p-Quaterphenyl (λ_{exc}= 297 nm; λₑₘᵢ=374 nm); BBD (λ_{exc}= 314 nm; λₑₘᵢ= 373 nm); Polyphenyl 1 (λ_{exc}= 308 nm; λₑₘᵢ=); Polyphenyl 2 (λ_{exc}= 308 nm; λₑₘᵢ=); BiBuQ (λ_{exc}= 313 nm; λₑₘᵢ=); Quinolon 390 (λ_{exc}= 355 nm; λₑₘᵢ=); TBS (λ_{exc}= 320 nm; λₑₘᵢ=); α-NPO (λ_{exc}= 333 nm; λₑₘᵢ= 396 nm); Furan 2 (λ_{exc}= 330 nm; λₑₘᵢ= 396 nm); PBBO (λ_{exc}= 327 nm; λₑₘᵢ= 403 nm); DPS (λ_{exc}= 340 nm; λₑₘᵢ=); Stilbene 1 (λ_{exc}= 350 nm; λₑₘᵢ=); BBO (λ_{exc}= 340 nm; λₑₘᵢ= 412 nm); Stilbene 3 (λ_{exc}= 350 nm; λₑₘᵢ=); Carbostyryl 7 (λ_{exc}= 350 nm; λₑₘᵢ= 400 nm); POPOP (λ_{exc}= 358 nm; λₑₘᵢ= 425 nm); Coumarin 4 (λ_{exc}= 372 nm; λₑₘᵢ=445 nm); Bis-MSB (λ_{exc}= 350 nm; λₑₘᵢ= 418 nm); Furan 1 (λ_{exc}= 355 nm; λₑₘᵢ=); Carbostyryl 3 (λ_{exc}= 360 nm; λₑₘᵢ= 425 nm); Coumarin 120 (λ_{exc}= 354 nm; λₑₘᵢ=435 nm); Coumarin 2 (λ_{exc}= 366 nm; λₑₘᵢ= 443 nm); DASPI (λ_{exc}= 472 nm; λₑₘᵢ=); Coumarin 466 (λ_{exc}= 380 nm; λₑₘᵢ=); Coumarin 47 (λ_{exc}= 373 nm; λₑₘᵢ= 450 nm); Coumarin 102 (λ_{exc}= 389 nm; λₑₘᵢ= 465 nm); Coumarin 152A (λ_{exc}= 405 nm; λₑₘᵢ= 510 nm); Coumarin 152 (λ_{exc}= 397 nm; λₑₘᵢ= 510 nm); Coumarin 151 (λ_{exc}= 382 nm; λₑₘᵢ= 480 nm); Coumarin 6H (λ_{exc}= 396 nm; λₑₘᵢ=); Coumarin 307 (λ_{exc}= 395 nm; λₑₘᵢ= 490 nm); Coumarin 500 (λ_{exc}= 395 nm; λₑₘᵢ=); Coumarin 314 (λ_{exc}= 436 nm; λₑₘᵢ= 480 nm); Coumarin 510 (λ_{exc}= 425 nm; λₑₘᵢ=); Coumarin 30 (λ_{exc}= 412 nm; λₑₘᵢ= 488 nm); Coumarin 334 (λ_{exc}= 450 nm; λₑₘᵢ= 495 nm); Coumarin 522 (λ_{exc}= 410 nm; λₑₘᵢ= 522 nm); DASBTI (λ_{exc}= 530 nm; λₑₘᵢ=); Coumarin 7 (λ_{exc}= 433 nm; λₑₘᵢ=493); Brillantsulfaflavin (λ_{exc}= 423 nm; λₑₘᵢ= 517 nm); Coumarin 6 (λ_{exc}= 458 nm; λₑₘᵢ=505 nm); Coumarin 153 (λ_{exc}= 423 nm; λₑₘᵢ= 530 nm); DOCI (λ_{exc}= 485 nm; λₑₘᵢ=), Pyrromethen 546 (λ_{exc}= 494 nm; λₑₘᵢ= 519 nm); DMETCI (λ_{exc}= 540 nm; λₑₘᵢ=); Uranin (λ_{exc}= 500 nm; λₑₘᵢ= 521 nm); Fluorescein 27 (λ_{exc}= 512 nm; λₑₘᵢ= 530 nm); Fluorol 7GA (λ_{exc}= 440 nm; λₑₘᵢ=); Pyrromethen 556 (λ_{exc}= 498 nm; λₑₘᵢ= 533 nm); Pyrromethen 567 (λ_{exc}= 518 nm; λₑₘᵢ= 547 nm); Rhodamin 19 (λ_{exc}= 528 nm; λₑₘᵢ= 544 nm); Pyrromethen 580 (λ_{exc}=519 nm; λₑₘᵢ= 550 nm); DQOCI (λ_{exc}= 592 nm; λₑₘᵢ=); DCI-2 (λ_{exc}= 606 nm; λₑₘᵢ=); Pyrromethen 597 (λ_{exc}= 524 nm; λₑₘᵢ= 557 nm); Sulforhodamin B (λ_{exc}= 556 nm; λₑₘᵢ= 575 nm); Malachit Green (λ_{exc}= 622 nm; λₑₘᵢ= 530 nm); DTCI (λ_{exc}= 557 nm; λₑₘᵢ=); DQTCI (λ_{exc}= 629 nm; λₑₘᵢ=); Rhodamin 101 (Methanol) (λ_{exc}= 560 nm; λₑₘᵢ= 589 nm); DCM (λ_{exc}= 472 nm; λₑₘᵢ= 644 nm); Pyrromethen 650 (λ_{exc}= 590 nm; λₑₘᵢ= 612 nm); DODCI (λ_{exc}= 582 nm; λₑₘᵢ=); Sulforhodamin 101 (λ_{exc}= 578 nm; λₑₘᵢ=); Cresyl Violet (λ_{exc}= 601 nm; λₑₘᵢ= 632 nm); Phenoxazon 9 (λ_{exc}= 550 nm; λₑₘᵢ= 650 nm); Nile Blue (λ_{exc}= 633 nm; λₑₘᵢ= 672 nm); Oxazin 4 (λ_{exc}= 615 nm; λₑₘᵢ=); Rhodamin 700 (λ_{exc}= 643 nm; λₑₘᵢ= 673 nm); Pyridin (λ_{exc}= 480 nm; λₑₘᵢ=); Carbazin 122 (λ_{exc}= 655 nm; λₑₘᵢ=); Oxazin 170 (λ_{exc}= 627 nm; λₑₘᵢ= 650 nm); Oxazin 1 (λ_{exc}= 646 nm; λₑₘᵢ= 670 nm); DTDCI (λ_{exc}= 653 nm; λₑₘᵢ=); Oxazin 750 (λ_{exc}= 667 nm; λₑₘᵢ=); Pyridin 2 (λ_{exc}= 500 nm; λₑₘᵢ=); HIDCI (λ_{exc}= 639 nm; λₑₘᵢ=); Cryptocyanin (λ_{exc}= 708 nm; λₑₘᵢ=720 nm); Styryl 6 (λ_{exc}= 615 nm; λₑₘᵢ=); Styryl 8 (λ_{exc}= 570 nm; λₑₘᵢ=); DDI (λ_{exc}= 710 nm; λₑₘᵢ= 745 nm); Pyridin 4 (λ_{exc}= 550 nm; λₑₘᵢ=); Methly-DOTCI (λ_{exc}= 682 nm; λₑₘᵢ= 718 nm); Styryl 11 (λ_{exc}= 575 nm; λₑₘᵢ=); Rhodamin 800 (Methanol) (λ_{exc}= 682 nm; λₑₘᵢ= 700 nm); Styryl 9M (λ_{exc}= 585 nm; λₑₘᵢ=); HITCI (λ_{exc}= 741 nm; λₑₘᵢ= 778 nm); IR 125 (λ_{exc}= 795 nm; λₑₘᵢ= 838 nm); DTTCI (λ_{exc}= 760 nm; λₑₘᵢ= 815 nm); IR 144 (λ_{exc}= 750 nm; λₑₘᵢ= 848 nm); Styryl 15 (λ_{exc}= 648 nm; λₑₘᵢ=); DNTTCI (λ_{exc}= 765 nm; λₑₘᵢ=); HDITCI (λ_{exc}= 780 nm; λₑₘᵢ=); DDTTCI (λ_{exc}= 798 nm; λₑₘᵢ=); DDCI-4 (λ_{exc}= 815 nm; λₑₘᵢ= 850 nm); IR 140 (λ_{exc}= 810 nm; λₑₘᵢ= 860 nm); Styryl 14 (λ_{exc}= 588 nm; λₑₘᵢ=); IR 132 (λ_{exc}= 830 nm; λₑₘᵢ= 861 nm); Styryl 20 (λ_{exc}= 645 nm; λₑₘᵢ=); IR 26 (λ_{exc}= 1080 nm; λₑₘᵢ= 1180 nm); IR 5 (λ_{exc}= 1090 nm; λₑₘᵢ=); Aspirin (λ_{exc}=240 nm; λₑₘᵢ=380 nm), Biphenyl (λ_{exc}=270 nm; λₑₘᵢ=385 nm), Ephedrin (λ_{exc}=260 nm; λₑₘᵢ=390 nm), Epinephrin (λ_{exc}=260 nm; λₑₘᵢ=412 nm), Estradiol (λ_{exc}=292 nm; λₑₘᵢ=403 nm), Ethyl-p-dimethylaminobenzoat (λ_{exc}=310 nm; λₑₘᵢ=330 nm), Lidocain (λ_{exc}=265 nm; λₑₘᵢ=400 nm), Naphthalen (λ_{exc}=275 nm; λₑₘᵢ=322 nm), Nicotin (λ_{exc}=270 nm; λₑₘᵢ=390 nm), Purin (λ_{exc}=272 nm; λₑₘᵢ=405 nm), Tryptophan (λ_{exc}=295 nm; λₑₘᵢ=340 nm), Tryrosin (λ_{exc}=253 nm; λₑₘᵢ=394 nm), 1,8-ANS (λ_{exc}=372 nm; λₑₘᵢ=480 nm); 4-Methylumbelliferon (λ_{exc}=360 nm; λₑₘᵢ=440 nm); 7-Amino-4-methylcoumarin (AMC) (λ_{exc}=346 nm; λₑₘᵢ=442 nm); 7-Hydroxy-4-methylcoumarin (λ_{exc}=360 nm; λₑₘᵢ=449 nm); ABQ (λ_{exc}=344 nm; λₑₘᵢ=445 nm); Acridin (λ_{exc}=362 nm; λₑₘᵢ=462 nm); Alexa Fluor 350™ (λ_{exc}=346 nm; λₑₘᵢ=442 nm); Alexa Fluor 405™ (λ_{exc}=402 nm; λₑₘᵢ=421 nm); AMCA (Aminomethylcoumarin) (λ_{exc}=350 nm; λₑₘᵢ=450 nm); AMCA-X (λ_{exc}=353 nm; λₑₘᵢ=442 nm); Aminocoumarin (λ_{exc}=350 nm; λₑₘᵢ=445 nm); Anthrocyl stearat (λ_{exc}=370 nm; λₑₘᵢ=446 nm); ATTO 390 (λ_{exc}=390 nm; λₑₘᵢ=479 nm); Beta lactamase (λ_{exc}=409 nm; λₑₘᵢ=450 nm); BFP (Blue Fluorescent Protein) (λ_{exc}=380 nm; λₑₘᵢ=435 nm); Biman (λ_{exc}=380 nm; λₑₘᵢ=461 nm); Bisbenzimid (Hoechst) (λ_{exc}=360 nm; λₑₘᵢ=461 nm); Blancophor FFG (λ_{exc}=390 nm; λₑₘᵢ=470 nm); Blancophor SV (λ_{exc}=370 nm; λₑₘᵢ=435 nm); Calcein Blue (λ_{exc}=373 nm; λₑₘᵢ=440 nm); Calcofluor White (λ_{exc}=350 nm; λₑₘᵢ=440 nm); Cascade Blue™ (λ_{exc}=401 nm; λₑₘᵢ=420 nm); Catecholamin (λ_{exc}=410 nm; λₑₘᵢ=470 nm); Coumarin Phalloidin (λ_{exc}=548 nm; λₑₘᵢ=559 nm); CPM Methylcoumarin (λ_{exc}=548 nm; λₑₘᵢ=559 nm); DAPI (λ_{exc}=359 nm; λₑₘᵢ=461 nm); EBFP (λ_{exc}=380 nm; λₑₘᵢ=440 nm); Fast Blue (λ_{exc}=360 nm; λₑₘᵢ=440 nm); FIF (Formaldehyde Induced Fluorescence) (λ_{exc}=405 nm; λₑₘᵢ=483 nm); Gloxalic Acid (λ_{exc}=405 nm; λₑₘᵢ=460 nm); Granular Blue (λ_{exc}=355 nm; λₑₘᵢ=425 nm); Hoechst 33258 (λ_{exc}=352 nm; λₑₘᵢ=455 nm); Hoechst 33342 (λ_{exc}=352 nm; λₑₘᵢ=455 nm); Hoechst 34580 (λ_{exc}=392 nm; λₑₘᵢ=440 nm); HPTS (λ_{exc}=355 nm; λₑₘᵢ=465 nm); Indo-1 (λ_{exc}=346 nm; λₑₘᵢ=475 nm); Intrawhite Cf (λ_{exc}=360 nm; λₑₘᵢ=430 nm); Laurodan (λ_{exc}=355 nm; λₑₘᵢ=460 nm); Leucophor PAF, SF, WS (λ_{exc}=370 nm; λₑₘᵢ=430 nm); LysoSensor Blue (λ_{exc}=374 nm; λₑₘᵢ=424 nm); LysoSensor Blue DND-167 (λ_{exc}=374 nm; λₑₘᵢ=425 nm); Lysosensor Blue DND-192 (λ_{exc}=374 nm; λₑₘᵢ=424 nm); LysoTracker Blue (λ_{exc}=373 nm; λₑₘᵢ=422 nm); Mag-Indo-1 (λ_{exc}=349 nm; λₑₘᵢ=480 nm); Marina Blue (λ_{exc}=365 nm; λₑₘᵢ=460 nm); Methoxycoumarin (λ_{exc}=360 nm; λₑₘᵢ=410 nm); Monochlorobiman (λ_{exc}=380 nm; λₑₘᵢ=461 nm); Pacific Blue™ (λ_{exc}=410 nm; λₑₘᵢ=455 nm); PBFI (λ_{exc}=360 nm; λₑₘᵢ=420 nm); Phorwite AR (λ_{exc}=360 nm; λₑₘᵢ=430 nm); Phorwite BKL (λ_{exc}=370 nm; λₑₘᵢ=430 nm); Phorwite Rev (λ_{exc}=380 nm; λₑₘᵢ=430 nm); Phorwite RPA (λ_{exc}=375 nm; λₑₘᵢ=430 nm); SBFI (λ_{exc}=360 nm; λₑₘᵢ=420 nm); sgBFP™ (λ_{exc}=387 nm; λₑₘᵢ=450 nm); SITS (Primulin) (λ_{exc}=410 nm; λₑₘᵢ=450 nm); SITS (Stilbene Isothiosulphonic Acid) (λ_{exc}=365 nm; λₑₘᵢ=460 nm); SPQ (6-Methoxy-N-(3-sulfopropyl)quinolinium) (λ_{exc}=344 nm; λₑₘᵢ=433 nm); TagBFP (λ_{exc}=402 nm; λₑₘᵢ=457 nm); Thioflavin TCN (λ_{exc}=350 nm; λₑₘᵢ=460 nm); Thiolyt (λ_{exc}=378 nm; λₑₘᵢ=483 nm); Tinopol CBS (Calcofluor White) (λ_{exc}=390 nm; λₑₘᵢ=430 nm); True Blue (λ_{exc}=365 nm; λₑₘᵢ=425 nm); Uvitex SFC (λ_{exc}=365 nm; λₑₘᵢ=435 nm); Y66H (λ_{exc}=360 nm; λₑₘᵢ=442 nm); ACMA (9-Amino-6-chloro-2-methoxyacridin) (λ_{exc}=421 nm; λₑₘᵢ=473 nm); AmCyan (λ_{exc}=454 nm; λₑₘᵢ=488 nm); AmCyan 1 (λ_{exc}=458 nm; λₑₘᵢ=489 nm); Astrazon Yellow 7 GLL (λ_{exc}=450 nm; λₑₘᵢ=480 nm); Atabrin (λ_{exc}=436 nm; λₑₘᵢ=490 nm); ATTO 425 (λ_{exc}=436 nm; λₑₘᵢ=484 nm); BOBO-1, BO-PRO-1 (λ_{exc}=462 nm; λₑₘᵢ=481 nm); Cerulean (λ_{exc}=434 nm; λₑₘᵢ=475 nm); CFP (Cyan GFP) (λ_{exc}=434 nm; λₑₘᵢ=477 nm); Chromomycin A (λ_{exc}=448 nm; λₑₘᵢ=470 nm); Coelenterazin F (λ_{exc}=437 nm; λₑₘᵢ=473 nm); DEAC (λ_{exc}=432 nm; λₑₘᵢ=472 nm); ECFP (λ_{exc}=434 nm; λₑₘᵢ=477 nm); Genacryl Brilliant Yellow 10GF (λ_{exc}=430 nm; λₑₘᵢ=485 nm); Genacryl Yellow 5GF (λ_{exc}=430 nm; λₑₘᵢ=475 nm); Mitramycin (λ_{exc}=450 nm; λₑₘᵢ=470 nm); POPO-1, PO-PRO-1 (λ_{exc}=434 nm; λₑₘᵢ=456 nm); Sevron Yellow L (λ_{exc}=430 nm; λₑₘᵢ=490 nm); SpectrumAqua (λ_{exc}=433 nm; λₑₘᵢ=480 nm); SYTO Blue Fluorescent Nucleic Acid Stain 43 (λ_{exc}=436 nm; λₑₘᵢ=467 nm); SYTO Blue Fluorescent Nucleic Acid Stain 44 (λ_{exc}=446 nm; λₑₘᵢ=471 nm); SYTO Blue Fluorescent Nucleic Acid Stain 45 (λ_{exc}=452 nm; λₑₘᵢ=484 nm); SYTOX Blue (λ_{exc}=445 nm; λₑₘᵢ=470 nm); TagCFP (λ_{exc}=458 nm; λₑₘᵢ=480 nm); Thiozole Orange (λ_{exc}=453 nm; λₑₘᵢ=480 nm); Y66W (λ_{exc}=436 nm; λₑₘᵢ=485 nm); Cascade Yellow™ (λ_{exc}=402 nm; λₑₘᵢ=545 nm); EFL® 97 alcohol (λ_{exc}=345 nm; λₑₘᵢ=530 nm); ER-Tracker™ Blue-White DPX (λ_{exc}=372 nm; λₑₘᵢ=556 nm); Fura-2 363, 335 (λ_{exc}=512 nm; λₑₘᵢ=505 nm); LysoSensor Yellow/Blue (λ_{exc}=0 nm; λₑₘᵢ=0 nm); 2-Dodecylresorufin-lipid (λ_{exc}=582 nm; λₑₘᵢ=595 nm); AcGFP1 (λ_{exc}=475 nm; λₑₘᵢ=505 nm); ATTO 465 (λ_{exc}=453 nm; λₑₘᵢ=508 nm); Aurophosphin (λ_{exc}=470 nm; λₑₘᵢ=515 nm); BCECF (low pH) (λ_{exc}=482 nm; λₑₘᵢ=520 nm); bis-BTC (λ_{exc}=455 nm; λₑₘᵢ=529 nm); CFP (Cyan GFP) (λ_{exc}=434 nm; λₑₘᵢ=477 nm); Chromomycin A (λ_{exc}=448 nm; λₑₘᵢ=470 nm); Cy2™ (λ_{exc}=489 nm; λₑₘᵢ=506 nm); CyQuant Cell Proliferation Assay (λ_{exc}=480 nm; λₑₘᵢ=520 nm); DiO (λ_{exc}=475 nm; λₑₘᵢ=500 nm); DyLight 488 (λ_{exc}=491 nm; λₑₘᵢ=519 nm); EGFP (λ_{exc}=489 nm; λₑₘᵢ=508 nm); Emerald (λ_{exc}=490 nm; λₑₘᵢ=510 nm); GFP (EGFP) (λ_{exc}=489 nm; λₑₘᵢ=508 nm); NBD Amine (λ_{exc}=450 nm; λₑₘᵢ=530 nm); Nitrobenzoxadidol (λ_{exc}=465 nm; λₑₘᵢ=510 nm); Nylosan Brilliant Lavin E8G (λ_{exc}=460 nm; λₑₘᵢ=510 nm); S65C (λ_{exc}=479 nm; λₑₘᵢ=507 nm); S65L (λ_{exc}=484 nm; λₑₘᵢ=510 nm); S65T (λ_{exc}=488 nm; λₑₘᵢ=511 nm); sgGFP™ (super glow GFP) (λ_{exc}=474 nm; λₑₘᵢ=509 nm); SYTO Blue Fluorescent Nucleic Acid Stain 45 (λ_{exc}=452 nm; λₑₘᵢ=484 nm); SYTO Green Fluorescent Nucleic Acid Stains 12, 13, 16, 21, 23, 24 (λ_{exc}=494 nm; λₑₘᵢ=515 nm); SYTOX Blue (λ_{exc}=445 nm; λₑₘᵢ=470 nm); TagGFP2 (λ_{exc}=483 nm; λₑₘᵢ=506 nm); Thiozole Orange (λ_{exc}=453 nm; λₑₘᵢ=480 nm); TurboGFP (λ_{exc}=482 nm; λₑₘᵢ=502 nm); wtGFP (wild type GFP, non-UV excitation) (λ_{exc}=475 nm; λₑₘᵢ=509 nm); Y66W (λ_{exc}=436 nm; λₑₘᵢ=485 nm); YOYO-1, YO-PRO-1 (λ_{exc}=491 nm; λₑₘᵢ=509 nm); 2-Dodecylresorufin-lipid (λ_{exc}=582 nm; λₑₘᵢ=595 nm); 5-Carboxy-2,7-dichlorofluorescein (λ_{exc}=504 nm; λₑₘᵢ=529 nm); 5-FAM (5-Carboxyfluorescein) (λ_{exc}=492 nm; λₑₘᵢ=518 nm); Acridin (λ_{exc}=362 nm; λₑₘᵢ=462 nm); Acridine Orange (λ_{exc}=500 nm; λₑₘᵢ=526 nm); Acridine Orange + DNA (λ_{exc}=500 nm; λₑₘᵢ=52675 nm); Acridine Yellow (λ_{exc}=470 nm; λₑₘᵢ=550 nm); Alexa Fluor 488™ (λ_{exc}=495 nm; λₑₘᵢ=519 nm); Alexa Fluor 500™ (λ_{exc}=503 nm; λₑₘᵢ=525 nm); Astrazon Orange R (λ_{exc}=470 nm; λₑₘᵢ=540 nm); ATTO 488 (λ_{exc}=501 nm; λₑₘᵢ=523 nm); ATTO 495 (λ_{exc}=495 nm; λₑₘ=527 nm); ATTO-TAG™ CBQCA (λ_{exc}=465 nm; λₑₘᵢ=560 nm); Auramin (λ_{exc}=460 nm; λₑₘᵢ=550 nm); BCECF (high pH) (λ_{exc}=503 nm; λₑₘᵢ=528 nm); BCECF (low pH) (λ_{exc}=482 nm; λₑₘᵢ=520 nm); BODIPY (λ_{exc}=505 nm; λₑₘᵢ=513 nm); BODIPY 492/515 (λ_{exc}=490 nm; λₑₘᵢ=515 nm); BODIPY 505/515 (λ_{exc}=502 nm; λₑₘᵢ=510 nm); BODIPY FL (λ_{exc}=505 nm; λₑₘᵢ=513 nm); BTC (λ_{exc}=464 nm; λₑₘᵢ=530 nm); Calcein (λ_{exc}=494 nm; λₑₘᵢ=517 nm); CFDA (λ_{exc}=494 nm; λₑₘᵢ=520 nm); CMFDA (λ_{exc}=494 nm; λₑₘᵢ=520 nm); Cyclic AMP Fluorosensor (FiCRhR) (λ_{exc}=500 nm; λₑₘᵢ=517 nm); DCFDA xc(λ_{exc}=504 nm; λₑₘᵢ=529 nm); DTAF (λ_{exc}=494 nm; λₑₘᵢ=520 nm); DyLight 488 (λ_{exc}=491 nm; λₑₘᵢ=519 nm); Emerald (λ_{exc}=490 nm; λₑₘᵢ=510 nm); ER-Tracker™ Green (λ_{exc}=504 nm; λₑₘᵢ=511 nm); FAM (λ_{exc}=492 nm; λₑₘᵢ=518 nm); FDA (λ_{exc}=494 nm; λₑₘᵢ=520 nm); FITC (Fluorescein) (λ_{exc}=492 nm; λₑₘᵢ=520 nm); Fluo-4 (λ_{exc}=494 nm; λₑₘᵢ=516 nm); Fluoro-Emerald (λ_{exc}=495 nm; λₑₘᵢ=524 nm); FluorX (λ_{exc}=494 nm; λₑₘᵢ=520 nm); FluoSpheres Yellow-Green (λ_{exc}=503 nm; λₑₘᵢ=514 nm); HCS LipidTOX Green (λ_{exc}=504 nm; λₑₘᵢ=536 nm); HiLyte FIuor™ 488 (λ_{exc}=₄₉₇ nm; λₑₘᵢ=525 nm); JC-1 (λ_{exc}=498 nm; λₑₘᵢ=525 nm); JC-9 (λ_{exc}=506 nm; λₑₘᵢ=525 nm); LIVE/DEAD Kit Animal Cells (λ_{exc}=494 nm; λₑₘᵢ=517 nm); LysoTracker Blue-White (λ_{exc}=466 nm; λₑₘᵢ=536 nm); LysoTracker Green (λ_{exc}=504 nm; λₑₘᵢ=511 nm); mHoneydew (λ_{exc}=478 nm; λₑₘᵢ=561 nm); MitoTracker™Green (λ_{exc}=490 nm; λₑₘᵢ=1516 nm); NBD (λ_{exc}=466 nm; λₑₘᵢ=539 nm); NBD-X (λ_{exc}=467 nm; λₑₘᵢ=538 nm); NeuroTrace 500/525 Green Fluorescent Nissl Stain (λ_{exc}=500 nm; λₑₘᵢ=525 nm); Nissl (λ_{exc}=497 nm; λₑₘᵢ=524 nm); Oregon Green® (λ_{exc}=503 nm; λₑₘᵢ=522 nm); Oregon Green™ 488 (λ_{exc}=496 nm; λₑₘᵢ=524 nm); Oregon Green™ 500 (λ_{exc}=497 nm; λₑₘᵢ=517 nm); Oregon Green™ 514 (λ_{exc}=511 nm; λₑₘᵢ=530 nm); PicoGreen® (λ_{exc}=502 nm; λₑₘᵢ=522 nm); PKH67 (λ_{exc}=496 nm; λₑₘᵢ=520 nm); Rhod-123 (λ_{exc}=507 nm; λₑₘᵢ=529 nm); Rhodamin 110 (λ_{exc}=496 nm; λₑₘᵢ=520 nm); Rhodol Green (λ_{exc}=496 nm; λₑₘᵢ=523 nm); rsGFP (red shifted GFP, S65T) (λ_{exc}=498 nm; λₑₘᵢ=516 nm); Sodium Green (λ_{exc}=506 nm; λₑₘᵢ=532 nm); SYTO Green Fluorescent Nucleic Acid Stains 12,13,16,21,23,24 (λ_{exc}=494 nm; λₑₘᵢ=515 nm); SYTOX Green (λ_{exc}=504 nm; λₑₘᵢ=523 nm); TagGFP2 (λ_{exc}=483 nm; λₑₘᵢ=506 nm); TurboGFP (λ_{exc}=482 nm; λₑₘᵢ=502 nm); 6-Carboxyrhodamin 6G (λ_{exc}=525 nm; λₑₘᵢ=555 nm); Alexa Fluor 514™ (λ_{exc}=518 nm; λₑₘᵢ=543 nm); ATTO 488 (λ_{exc}=501 nm; λₑₘᵢ=523 nm); ATTO 495 (λ_{exc}=495 nm; λₑₘᵢ=527 nm); ATTO 520 (λ_{exc}=516 nm; λₑₘᵢ=538 nm); BCECF (high pH) (λ_{exc}=503 nm; λₑₘᵢ=528 nm); CAL Fluor® Gold 540 (λ_{exc}=522 nm; λₑₘᵢ=544 nm); Calcium Green-1 (λ_{exc}=506 nm; λₑₘᵢ=531 nm); Calcium Green-2 (including Ca2+) (λ_{exc}=506 nm; λₑₘᵢ=536 nm); Calcium Green-5N (including Ca2+) (λ_{exc}=506 nm; λₑₘᵢ=532 nm); CI-NERF, CL-NERF (λ_{exc}=509 nm; λₑₘᵢ=540 nm); DCFH (Dichlorodihydrofluorescein Diacetat) (λ_{exc}=505 nm; λₑₘᵢ=535 nm); DHR (Dihydrorhodamin 123) (λ_{exc}=505 nm; λₑₘᵢ=534 nm); DM-NERF (λ_{exc}=500 nm; λₑₘᵢ=540 nm); Eosin (λ_{exc}=525 nm; λₑₘᵢ=546 nm); EYFP (λ_{exc}=513 nm; λₑₘᵢ=527 nm); FIAsH-CCPFCC (λ_{exc}=511 nm; λₑₘᵢ=530 nm); Fluo-3 (λ_{exc}=506 nm; λₑₘᵢ=526 nm); HCS LipidTOX Green (λ_{exc}=504 nm; λₑₘᵢ=536 nm); JO-JO-1, JO-PRO-1 (λ_{exc}=530 nm; λₑₘᵢ=545 nm); Magnesium Green (λ_{exc}=506 nm; λₑₘᵢ=531 nm); mHoneydew (λ_{exc}=478 nm; λₑₘᵢ=561 nm); Rhodamin 123 (λ_{exc}=507 nm; λₑₘᵢ=529 nm); Rhodamin 6G (λ_{exc}=525 nm; λₑₘᵢ=555 nm); Rhodamine Green (λ_{exc}=502 nm; λₑₘᵢ=527 nm); SpectrumGreen (λ_{exc}=497 nm; λₑₘᵢ=538 nm); SYTO Green Fluorescent Nucleic Acid Stains 11,14,15,20,22,25 (λ_{exc}=515 nm; λₑₘᵢ=543 nm); SYTO Orange Fluorescent Nucleic Acid Stains 80,81,82,83 (λ_{exc}=537 nm; λₑₘᵢ=552 nm); TagYFP (λ_{exc}=508 nm; λₑₘᵢ=524 nm); TET (λ_{exc}=521 nm; λₑₘᵢ=536 nm); TOTO-1, TO-PRO-1 (λ_{exc}=509 nm; λₑₘᵢ=533 nm); TurboYFP (λ_{exc}=525 nm; λₑₘᵢ=538 nm); YFP (yellow GFP) (λ_{exc}=513 nm; λₑₘᵢ=527 nm); ZsYellow1 (λ_{exc}=529 nm; λₑₘᵢ=539 nm); 5-TAMRA (5-Carboxytetramethylrhodamin, high pH) (λ_{exc}=542 nm; λₑₘᵢ=568 nm); Alexa Fluor 532™ (λ_{exc}=531 nm; λₑₘᵢ=554 nm); Alexa Fluor 546™ (λ_{exc}=556 nm; λₑₘᵢ=573 nm); Alizarin Red (λ_{exc}=540 nm; λₑₘᵢ=580 nm); Astrazon Brilliant Red 4G (λ_{exc}=500 nm; λₑₘᵢ=585 nm); BO-PRO™-3 (λ_{exc}=544 nm; λₑₘᵢ=570 nm); BODIPY 542/563 (λ_{exc}=543 nm; λₑₘᵢ=563 nm); BODIPY 558/568 (λ_{exc}=558 nm; λₑₘᵢ=569 nm); BODIPY TMR-X (λ_{exc}=542 nm; λₑₘᵢ=574 nm); CAL Fluor Orange 560 (λ_{exc}=464 nm; λₑₘᵢ=530 nm); Dil (λ_{exc}=551 nm; λₑₘᵢ=565 nm); Ethidium Bromid (λ_{exc}=518 nm; λₑₘᵢ=605 nm); Genacryl Brilliant Red B (λ_{exc}=520 nm; λₑₘᵢ=590 nm); HEX (λ_{exc}=535 nm; λₑₘᵢ=556 nm); HiLyte Fluor™ 555 (λ_{exc}=550 nm; λₑₘᵢ=566 nm); JOE (λ_{exc}=525 nm; λₑₘᵢ=555 nm); mOrange (λ_{exc}=548 nm; λₑₘᵢ=568 nm); mStrawberry (λ_{exc}=575 nm; λₑₘᵢ=596 nm); mTangerine (λ_{exc}=568 nm; λₑₘᵢ=585 nm); NED (λ_{exc}=546 nm; λₑₘᵢ=575 nm); Nile Red (λ_{exc}=549 nm; λₑₘᵢ=628 nm); OFP (λ_{exc}=547 nm; λₑₘᵢ=567 nm); pHrodo™ (λ_{exc}=560 nm; λₑₘᵢ=587 nm); PKH26 (Sigma) (λ_{exc}=551 nm; λₑₘᵢ=567 nm); PO-PRO-3 (λ_{exc}=539 nm; λₑₘᵢ=567 nm); POPO-3 (λ_{exc}=533 nm; λₑₘᵢ=574 nm); Pro-Q Diamond (λ_{exc}=556 nm; λₑₘᵢ=583 nm); Rhod-2 (λ_{exc}=552 nm; λₑₘᵢ=578 nm); Rhodamin (λ_{exc}=550 nm; λₑₘᵢ=573 nm); Rhodamin BB (λ_{exc}=540 nm; λₑₘᵢ=580 nm); Rhodamin BG (λ_{exc}=540 nm; λₑₘᵢ=572 nm); Rhodamin Phalloidin (λ_{exc}=542 nm; λₑₘᵢ=565 nm); Rose Bengal (λ_{exc}=533 nm; λₑₘᵢ=575 nm); Sevron Brilliant Red 2B (λ_{exc}=520 nm; λₑₘᵢ=595 nm); Sevron Brilliant Red B (λ_{exc}=530 nm; λₑₘᵢ=590 nm); SpectrumOrange (λ_{exc}=559 nm; λₑₘᵢ=588 nm); Sulphorhodamin B can C (λ_{exc}=520 nm; λₑₘᵢ=595 nm); SYTOX Orange (λ_{exc}=547 nm; λₑₘᵢ=570 nm); TagRFP (λ_{exc}=555 nm; λₑₘᵢ=584 nm); TMR (λ_{exc}=542 nm; λₑₘᵢ=574 nm); TRITC (Tetramethylrhodamin) (λ_{exc}=555 nm; λₑₘᵢ=580 nm); TurboRFP (λ_{exc}=553 nm; λₑₘᵢ=574 nm); Xylene Orange (λ_{exc}=546 nm; λₑₘᵢ=580 nm); Alexa Fluor 555™ (λ_{exc}=555 nm; λₑₘᵢ=565 nm); BOBO™-3 (λ_{exc}=570 nm; λₑₘᵢ=602 nm); BODIPY 558/568 (λ_{exc}=558 nm; λₑₘᵢ=569 nm); BODIPY 564/570 (λ_{exc}=564 nm; λₑₘᵢ=570 nm); CAL Fluor Red 590 (λ_{exc}=569 nm; λₑₘᵢ=591 nm); Calcium Orange (λ_{exc}=579 nm; λₑₘᵢ=575 nm); Carboxy SNARF Indicators (λ_{exc}=548 nm; λₑₘᵢ=587 nm); CoralHue Kusabira Orange (mKO) (λ_{exc}=548 nm; λₑₘᵢ=559 nm); Cy3™ (λ_{exc}=552 nm; λₑₘᵢ=570 nm); (λ_{exc}=360 nm; λₑₘᵢ=442 nm); DsRed Monomer (λ_{exc}=556 nm; λₑₘᵢ=586 nm); DsRed-Express(λ_{exc}=557 nm; λₑₘᵢ=579 nm); DsRed2 (λ_{exc}=563 nm; λₑₘᵢ=582 nm); dTomato (λ_{exc}=554 nm; λₑₘᵢ=581 nm); DyLight 549 (λ_{exc}=553 nm; λₑₘᵢ=569 nm); Ethidium Homodimer-1 (EthD-1) (λ_{exc}=528 nm; λₑₘᵢ=617 nm); Fluor-Ruby (λ_{exc}=555 nm; λₑₘᵢ=582 nm); Haematoporphyrin (λ_{exc}=545 nm; λₑₘᵢ=580 nm); ssamine Rhodamin (λ_{exc}=572 nm; λₑₘᵢ=591 nm); LO-PRO-1 (λ_{exc}=568 nm; λₑₘᵢ=581 nm); LOLO-1 (λ_{exc}=566 nm; λₑₘᵢ=580 nm); LysoTracker Red (λ_{exc}=577 nm; λₑₘᵢ=592 nm); LysoTracker Yellow (λ_{exc}=551 nm; λₑₘᵢ=576 nm); Mag-Fura Red (λ_{exc}=483 nm; λₑₘᵢ=659 nm); Magdala Red (Phloxin B) (λ_{exc}=524 nm; λₑₘᵢ=600 nm); Magnesium Orange (λ_{exc}=550 nm; λₑₘᵢ=575 nm); Merocyanin (λ_{exc}=555 nm; λₑₘᵢ=578 nm); MitoTracker™ Orange (λ_{exc}=551 nm; λₑₘᵢ=576 nm); mOrange (λ_{exc}=548 nm; λₑₘᵢ=568 nm); mStrawberry (λ_{exc}=575 nm; λₑₘᵢ=596 nm); mTangerine (λ_{exc}=568 nm; λₑₘᵢ=585 nm); OFP (λ_{exc}=547 nm; λₑₘᵢ=567 nm); Phloxin B (Magdala Red) (λ_{exc}=524 nm; λₑₘᵢ=600 nm); Phycoerythrin (PE) (λ_{exc}=565 nm; λₑₘᵢ=575 nm); PKH26 (λ_{exc}=559 nm; λₑₘᵢ=575 nm); Pontochrome Blue Black (λ_{exc}=545 nm; λₑₘᵢ=605 nm); Pyronin B (λ_{exc}=565 nm; λₑₘᵢ=605 nm); Quasar 570 (λ_{exc}=547 nm; λₑₘᵢ=570 nm); R-phycoerythrin (PE) (λ_{exc}=565 nm; λₑₘᵢ=575 nm); Resorufin (λ_{exc}=571 nm; λₑₘᵢ=585 nm); Rhodamin B 200 (λ_{exc}=540 nm; λₑₘᵢ=595 nm) Rhodamin Phallicidin (λ_{exc}=558 nm; λₑₘᵢ=575 nm); Rhodamine Red (λ_{exc}=560 nm; λₑₘᵢ=580 nm); ROX (λ_{exc}=568 nm; λₑₘᵢ=595 nm); SNARF (carboxy) 488 Excitation pH6 (λ_{exc}=549 nm; λₑₘᵢ=589 nm); SNARF (carboxy) 514 Excitation pH6 (λ_{exc}=549 nm; λₑₘᵢ=586 nm); SpectrumOrange (λ_{exc}=559 nm; λₑₘᵢ=588 nm); SYTO Orange Fluorescent Nucleic Acid Stains 84,85 (λ_{exc}=567 nm; λₑₘᵢ=583 nm); TAMRA (λ_{exc}=565 nm; λₑₘᵢ=580 nm); Tetramethylrhodamin, Rhodamin B (λ_{exc}=555 nm; λₑₘᵢ=580 nm); X-Rhodamin (λ_{exc}=570 nm; λₑₘᵢ=576 nm); 5-Chloromethylfluorescein (λ_{exc}=491 nm; λₑₘᵢ=517 nm); 5-ROX (Carboxy-X-rhodamin) (λ_{exc}=580 nm; λₑₘᵢ=605 nm); 7-AAD (λ_{exc}=546 nm; λₑₘᵢ=647 nm); 7-Aminoactinomycin D (7-AAD) (λ_{exc}=546 nm; λₑₘᵢ=647 nm); Acid Fuchsin (λ_{exc}=540 nm; λₑₘᵢ=630 nm); Alexa Fluor 568™ (λ_{exc}=578 nm; λₑₘᵢ=603 nm); Alexa Fluor 594™ (λ_{exc}=590 nm; λₑₘᵢ=617 nm); Aminoactinomycin D (λ_{exc}=555 nm; λₑₘᵢ=655 nm); AsRed 2 (λ_{exc}=576 nm; λₑₘᵢ=592 nm); ATTO 565 (λ_{exc}=563 nm; λₑₘᵢ=592 nm); BODIPY TR (λ_{exc}=589 nm; λₑₘᵢ=617 nm); BODIPY TR ATP (λ_{exc}=591 nm; λₑₘᵢ=620 nm); BODIPY TR-X (λ_{exc}=589 nm; λₑₘᵢ=617 nm); BODIPY TR-X SE (λ_{exc}=588 nm; λₑₘᵢ=616 nm); CAL Fluor Red 610 (λ_{exc}=590 nm; λₑₘᵢ=610 nm); Calcium Crimson™ (λ_{exc}=588 nm; λₑₘᵢ=611 nm); Cy3.5™ (λ_{exc}=580 nm; λₑₘᵢ=591 nm); ER-Tracker™ Red (λ_{exc}=587 nm; λₑₘᵢ=615 nm); Feulgen (Pararosanilin) (λ_{exc}=570 nm; λₑₘᵢ=625 nm) FluoSpheres Red (λ_{exc}=656 nm; λₑₘᵢ=683 nm); Fura Red™ (high pH) (λ_{exc}=572 nm; λₑₘᵢ=657 nm); HcRed (λ_{exc}=590 nm; λₑₘᵢ=614 nm); HCS LipidTOX Red (λ_{exc}=582 nm; λₑₘᵢ=616 nm); LysoTracker Red DND-99 (L-7528) (λ_{exc}=577 nm; λₑₘᵢ=590 nm); mCherry (RFP) (λ_{exc}=587 nm; λₑₘᵢ=610 nm); MitoTracker™ Red (λ_{exc}=578 nm; λₑₘᵢ=599 nm); mKate2 (λ_{exc}=588 nm; λₑₘᵢ=633 nm); mPlum (λ_{exc}=594 nm; λₑₘᵢ=648 nm); Nile Red (λ_{exc}=549 nm; λₑₘᵢ=628 nm); Propidiumiodid (PI) (λ_{exc}=536 nm; λₑₘᵢ=617 nm); Rhodamine Red Dye (λ_{exc}=570 nm; λₑₘᵢ=590 nm); SNARF (carboxy) Excitation pH9 (λ_{exc}=576 nm; λₑₘᵢ=639 nm); SpectrumRed (λ_{exc}=587 nm; λₑₘᵢ=612 nm); SYTO 64 (λ_{exc}=599 nm; λₑₘᵢ=619 nm); SYTO Red Fluorescent Nucleic Acid Stain 64 (λ_{exc}=567 nm; λₑₘᵢ=583 nm); Texas Red-X® Conjugate (λ_{exc}=595 nm; λₑₘᵢ=615 nm); Texas Red® (λ_{exc}=595 nm; λₑₘᵢ=615 nm); Thiazine Red R (λ_{exc}=596 nm; λₑₘᵢ=615 nm); TRITC (Tetramethylrhodamin) (λ_{exc}=555 nm; λₑₘᵢ=580 nm); TurboFP602 (λ_{exc}=574 nm; λₑₘᵢ=620 nm); TurboFP635 (λ_{exc}=588 nm; λₑₘᵢ=635 nm); WW 781 (λ_{exc}=605 nm; λₑₘᵢ=639 nm); X-Rhod-1 Indicator (λ_{exc}=580 nm; λₑₘᵢ=602 nm); 5-Carboxynapthofluorescein (pH 10) (λ_{exc}=555 nm; λₑₘᵢ=615 nm); 5-Chloromethylfluorescein (λ_{exc}=491 nm; λₑₘᵢ=517 nm); ATTO 565 (λ_{exc}=563 nm; λₑₘᵢ=592 nm); FluoSpheres Red (λ_{exc}=656 nm; λₑₘᵢ=683 nm); HCS LipidTOX Red (λ_{exc}=582 nm; λₑₘᵢ=616 nm); mCherry (RFP) (λ_{exc}=587 nm; λₑₘᵢ=610 nm); mKate2 (λ_{exc}=588 nm; λₑₘᵢ=633 nm); TurboFP602 (λ_{exc}=574 nm; λₑₘᵢ=620 nm); TurboFP635 (λ_{exc}=588 nm; λₑₘᵢ=635 nm); 5-Carboxynapthofluorescein (pH 10) (λ_{exc}=555 nm; λₑₘᵢ=615 nm); Alexa Fluor 647™ (λ_{exc}=650 nm; λₑₘᵢ=668 nm); Alexa Fluor 660™ (λ_{exc}=663 nm; λₑₘᵢ=690 nm); APC (Allophycocyanin) (λ_{exc}=651 nm; λₑₘᵢ=661 nm); ATTO 633 (λ_{exc}=629 nm; λₑₘᵢ=657 nm); ATTO 647 (λ_{exc}=645 nm; λₑₘᵢ=669 nm); BODIPY 650/665-X (λ_{exc}=650 nm; λₑₘᵢ=665 nm); Cy5TM (λ_{exc}=649 nm; λₑₘᵢ=666 nm); DiD (DiIC18(5)) - Lipophilic Tracer (λ_{exc}=644 nm; λₑₘᵢ=665 nm); DY-635-NHS (λ_{exc}=634 nm; λₑₘᵢ=664 nm); DyLight 649 (λ_{exc}=651 nm; λₑₘᵢ=673 nm); FluoSpheres Dark Red (λ_{exc}=656 nm; λₑₘᵢ=683 nm); HiLyte Fluor™ 647 (λ_{exc}=649 nm; λₑₘᵢ=672 nm); Indodicarbocyanin (DiD) (λ_{exc}=644 nm; λₑₘᵢ=665 nm); LIVE-DEAD Fixable Green (λ_{exc}=498 nm; λₑₘᵢ=526 nm); Quasar 670 (λ_{exc}=644 nm; λₑₘᵢ=670 nm); SpectrumFRed (Far Red) (λ_{exc}=655 nm; λₑₘᵢ=675 nm) SYTO Red Fluorescent Nucleic Acid Stains 60, 62, 63 (λ_{exc}=655 nm; λₑₘᵢ=675 nm); Thiadicarbocyanin (DiSC3) (λ_{exc}=651 nm; λₑₘᵢ=674 nm); TOTO-3, TO-PRO-3 (λ_{exc}=642 nm; λₑₘᵢ=661 nm); Ultralite (λ_{exc}=656 nm; λₑₘᵢ=678 nm); Alexa Fluor 680™ (λ_{exc}=679 nm; λₑₘᵢ=702 nm); ATTO 611X (λ_{exc}=611 nm; λₑₘᵢ=681 nm); ATTO 655 (λ_{exc}=663 nm; λₑₘᵢ=684 nm); ATTO 680 (λ_{exc}=680 nm; λₑₘᵢ=700 nm); Cy5.5™ (λ_{exc}=676 nm; λₑₘᵢ=690 nm); DyLight 680 (λ_{exc}=676 nm; λₑₘᵢ=705 nm); HiLyte Fluor™ 680 (λ_{exc}=688 nm; λₑₘᵢ=700 nm); Alexa Fluor 750™ (λ_{exc}=749 nm; λₑₘᵢ=775 nm); ATTO 725 (λ_{exc}=725 nm; λₑₘᵢ=752 nm); ATTO 740 (λ_{exc}=740 nm; λₑₘᵢ=764 nm); Cy7™ (λ_{exc}=753 nm; λₑₘᵢ=775 nm); ICG (λ_{exc}=768 nm; λₑₘᵢ=807 nm);
dem Nile Blue-Chlorid, dem Rhodamin 110, dem Nitrobenzoxadiazolchlorid (NBD) und insbesondere dem Acridine Orange, dem Alizarine Red,
- wobei das Element der Seltenen Erden ein Lanthanid und vor allem das Europium, das Terbium, das Dysprosium ist,
- wobei das Übergangselement eventuell in Form von Salz wie das Ruthenium, das Rhenium, das Osmium, das Iridium Cadmium, Mangan, Chrom ist,
und derart, dass das dotierte Spinübergangsmaterial der folgenden allgemeinen Formel (III) oder (IV) entspricht:
[(D)n%]{[Fe(L)₃](X)₂.xH₂O} (III)
wobei:
- L einen Liganden wie trz (1,2,4-Triazol), NH₂trz (4-Amino-triazol), Fatrz (4-Formylamino-1,2,4-triazol), alkyltrz (4-Alkyl-1,2,4-triazol) darstellt,
- X ein anionisches Gegenion wie OTf (Triflat oder Trifluormethansulfonat), p-tol oder tos (p-Tolylsulfonat oder auch Tosylat), Tetrafluorborat, Nitrat, Br, Cl usw. darstellt,
- x eine Ganzzahl zwischen 0 und 10 inklusive ist,
- D ein wie oben definiertes dotierendes Leuchtmittel mit Sende- und Erregungswellenlängen zwischen 400 und 800 nm inklusive ist, und
- n der Prozentsatz in Mol Dotierungsmittel im Verhältnis zur Mol-Anzahl Eisenatom ist,
ou[(D)n%]{Fe_{y}M_{(1-y)}(L)[M'(CN)₄]} (IV)
wobei
M ein Metall wie Ni, Co oder Zn darstellt,
M' ein Metall, identisch oder unterschiedlich von M, darstellt, ausgewählt aus Ni, Pd, Pt,
L den Liganden Pyrazin (pz) oder den Liganden bis(4-Pyridyl)acetylen (bpac) oder einen anderen zweizähnigen stickstoffhaltigen Liganden darstellt,
D ein wie oben definiertes dotierendes Leuchtmittel mit Sende- und Erregungswellenlängen zwischen 400 und 800 nm inklusive darstellt, und
y zwischen 0 und 1 inklusive ist.

2. Dotiertes Spinübergangsmaterial nach Anspruch 1, wobei die gesendete Fluoreszenz selektiv nach Temperatur moduliert ist.

3. Spinübergangsmaterial nach Anspruch 1 oder 2, wobei das dotierende Mittel eine Fluoreszenzemissionswellenlänge aufweist, die der Absorptionswellenlänge des Spinübergangsmaterials in einem seiner Zustände (High Spin oder Low Spin) und nicht in dem anderen seiner Zustände (jeweils High Spin oder Low Spin) entspricht.

4. Dotiertes Spinübergangsmaterial nach einem der vorangehenden Ansprüche, wobei die Erregungs- und/oder Sendewellenlängen des dotierenden Mittels und des Spinübergangsmaterials im sichtbaren, Infrarot- oder ultravioletten Bereich liegen.

5. Dotiertes Spinübergangsmaterial nach einem der Ansprüche 1 bis 4, das der allgemeinen Formel (IIIa) oder (IIIb) entspricht:
[(D)n%]{[Fe(NH₂trz)₃](p-tolyl)₂.xH₂O} (IIIa)
[(D)n%]{[Fe(trz)₃](NO₃)₂] (IIIb)
wobei trz den Liganden Triazol darstellt, D ein dotierendes Leuchtmittel nach Anspruch 7 darstellt.

6. Dotiertes Spinübergangsmaterial nach einem der Ansprüche 1 bis 4, das der Formel (IVa)
[(D)n%]{Fe_{0.5}Ni_{0.5}(pz)[Pt(CN)₄]} (IVa)
entspricht, wobei D das Nile Blue-Chlorid darstellt.

7. Dotiertes Spinübergangsmaterial nach einem der vorangehenden Ansprüche, das 0,000001 bis 10 Mol% im Verhältnis zur Mol-Anzahl Eisenatom ist.

8. Herstellungsverfahren eines dotierten Spinübergangsmaterial nach einem der vorangehenden Ansprüche, das einen Schritt umfasst, der darin besteht, das dotierende Mittel mit mindestens einem der Bestandteile des Spinübergangsmaterials zu mischen.

9. Zusammensetzung, die das dotierte wärmeempfindliche Spinübergangsmaterial nach einem der Ansprüche 1 bis 8 umfasst.

10. Verfahren zum Ermitteln von Temperaturschwankung auf der einen und der anderen Seite einer bestimmten Temperatur mittels einer Zusammensetzung nach Anspruch 8, wobei das Material eine Spinübergangstemperatur aufweist, die der bestimmten Temperatur entspricht.

11. Verfahren zum visuellen Ermitteln des vereisten oder möglicherweise vereisten Zustands einer Straße, das im Umfeld der Straße die Exposition einer Zusammensetzung umfasst, die ein dotiertes wärmeempfindliches Spinübergangsmaterial nach Anspruch 9 umfasst, **dadurch gekennzeichnet, dass** der Spinübergang des Materials bei einer Temperatur zwischen 0 °C und +3 °C inklusive stattfindet.

12. Ermittlungsverfahren nach Anspruch 11, wobei die Zusammensetzung auf die Straße oder auf ein Hinweiselement aufgetragen wird.

13. Vorrichtung zum Ermitteln des vereisten oder möglicherweise vereisten Zustands einer Straße, die ein dotiertes Spinübergangsmaterial nach einem der Ansprüche 1 bis 8 umfasst.

14. Vorrichtung nach Anspruch 13, **dadurch gekennzeichnet, dass** es sich um ein Hinweiselement wie eine Anzeigetafel oder ein Patch handelt.

15. Beschichtung für eine Straße, die ein dotiertes wärmeempfindliches Spinübergangsmaterial nach einem der Ansprüche 1 bis 8 umfasst.

16. Beschichtung nach Anspruch 15, wobei es sich um eine Farbe handelt.

17. Verwendung eines dotierten Spinübergangsmaterials nach einem der Ansprüche 1 bis 8, um den vereisten oder möglicherweise vereisten Zustand einer Straße zu ermitteln.

## Claims

1. A thermochromic spin transition material, doped with one or several fluorescent agents having an excitation wavelength corresponding to the absorption wavelength of the spin transition material in one of its states (spin down or spin up) and not in the other of its states (spin up or spin down respectively), the resulting mixture exhibiting:
- a spin transition, and
- a distinct fluorescence emission in each of the spin transition states,
and such that
the fluorescent doping agents is selected from among organic molecules, a rare earth or transition element, as well as salts thereof,
and the organic molecules are selected from:
BM-Terphenyl (λ_{exc}= 251 nm; λₑₘᵢ= 335 nm); p-Terphenyl (λ_{exc}= 275 nm; λₑₘᵢ= 339 nm); TMQ (λ_{exc}= 266 nm; λₑₘᵢ= );BQM (λ_{exc}= 275 nm; λₑₘᵢ=); DMQ (λ_{exc}= 285 nm; λₑₘᵢ=); Butyl-PBD (λ_{exc}= 302 nm; λₑₘᵢ= 368 nm);PBD (λ_{exc}= 302 nm; λₑₘᵢ= 360); TMI (λ_{exc}= 295 nm; λₑₘᵢ=);QUI (λ_{exc}= 310 nm; λₑₘᵢ=); PPO (λ_{exc}= 303 nm; λₑₘᵢ= 365 nm); PPF (λ_{exc}= 324 nm; λₑₘᵢ= 368 nm); p-quaterphenyl (λ_{exc}= 297 nm; λₑₘᵢ=374 nm); BBD (λ_{exc}= 314 nm; λₑₘᵢ= 373 nm); Polyphenyl 1 (λ_{exc}= 308 nm; λₑₘᵢ=); Polyphenyl 2 (λ_{exc}= 308 nm; λₑₘᵢ=); BiBuQ (λ_{exc}= 313 nm; λₑₘᵢ=); Quinolon 390 (λ_{exc}= 355 nm; λₑₘᵢ=); TBS (λ_{exc}= 320 nm; λₑₘᵢ=); α-NPO (λ_{exc}= 333 nm; λₑₘᵢ= 396 nm); Furan 2 (λ_{exc}= 330 nm; λₑₘᵢ= 396 nm); PBBO (λ_{exc}= 327 nm; λₑₘᵢ= 403 nm); DPS (λ_{exc}= 340 nm; λₑₘᵢ=); Stilbene 1 (λ_{exc}= 350 nm; λₑₘᵢ=); BBO (λ_{exc}= 340 nm; λₑₘᵢ= 412 nm); Stilbene 3 (λ_{exc}= 350 nm; λₑₘᵢ=); Carbostyryl 7 (λ_{exc}= 350 nm; λₑₘᵢ= 400 nm); POPOP (λ_{exc}= 358 nm; λₑₘᵢ= 425 nm); Coumarin 4 (λ_{exc}= 372 nm; λₑₘᵢ=445 nm); Bis-MSB (λ_{exc}= 350 nm; λₑₘᵢ= 418 nm); Furan 1 (λ_{exc}= 355 nm; λₑₘᵢ=); Carbostyryl 3 (λ_{exc}= 360 nm; λₑₘᵢ= 425 nm); Coumarin 120 (λ_{exc}= 354 nm; λₑₘᵢ=435 nm); Coumarin 2 (λ_{exc}= 366 nm; λₑₘᵢ= 443 nm); DASPI (λ_{exc}= 472 nm; λₑₘᵢ=); Coumarin 466 (λ_{exc}= 380 nm; λₑₘᵢ=); Coumarin 47 (λ_{exc}= 373 nm; λₑₘᵢ= 450 nm); Coumarin 102 (λ_{exc}= 389 nm; λₑₘᵢ= 465 nm); Coumarin 152A (λ_{exc}= 405 nm; λₑₘᵢ= 510 nm); Coumarin 152 (λ_{exc}= 397 nm; λₑₘᵢ= 510 nm); Coumarin 151 (λ_{exc}= 382 nm; λₑₘᵢ= 480 nm); Coumarin 6H (λ_{exc}= 396 nm; λₑₘᵢ=); Coumarin 307 (λ_{exc}= 395 nm; λₑₘᵢ= 490 nm); Coumarin 500 (λ_{exc}= 395 nm; λₑₘᵢ=); Coumarin 314 (λ_{exc}= 436 nm; λₑₘᵢ= 480 nm); Coumarin 510 (λ_{exc}= 425 nm; λₑₘᵢ=); Coumarin 30 (λ_{exc}= 412 nm; λₑₘᵢ= 488 nm); Coumarin 334 (λ_{exc}= 450 nm; λₑₘᵢ= 495 nm); Coumarin 522 (λ_{exc}=410nm; λₑₘᵢ= 522 nm); DASBTI (λ_{exc}= 530 nm; λₑₘᵢ=); Coumarin 7 (λ_{exc}= 433 nm; λₑₘᵢ=493); Brillantsulfaflavin (λ_{exc}= 423 nm; λₑₘᵢ= 517 nm); Coumarin 6 (λ_{exc}= 458 nm; λₑₘᵢ=505 nm); Coumarin 153 (λ_{exc}= 423 nm; λₑₘᵢ= 530 nm); DOCI (λ_{exc}= 485 nm; λₑₘᵢ=); Pyrromethene 546 (λ_{exc}= 494 nm; λₑₘᵢ= 519 nm); DMETCI (λ_{exc}= 540 nm; λₑₘᵢ=); Uranin (λ_{exc}= 500 nm; λₑₘᵢ= 521 nm); Fluorescein 27 (λ_{exc}= 512 nm; λₑₘᵢ= 530 nm); Fluorol 7GA (λ_{exc}= 440 nm; λₑₘᵢ=); Pyrromethene 556 (λ_{exc}= 498 nm; λₑₘᵢ= 533 nm); Pyrromethene 567 (λ_{exc}= 518 nm; λₑₘᵢ= 547 nm); Rhodamine 19 (λ_{exc}= 528 nm; λₑₘᵢ= 544 nm); Pyrromethene 580 (λ_{exc}= 519 nm; λₑₘᵢ= 550 nm); DQOCI (λ_{exc}= 592 nm; λₑₘᵢ=); DCI-2 (λ_{exc}= 606 nm; λₑₘᵢ=); Pyrromethene 597 (λ_{exc}= 524 nm; λₑₘᵢ= 557 nm); Sulforhodamine B (λ_{exc}= 556 nm; λₑₘᵢ= 575 nm); Malachite Green (λ_{exc}= 622 nm; λₑₘᵢ= 530 nm); DTCI (λ_{exc}= 557 nm; λₑₘᵢ=); DQTCI (λ_{exc}= 629 nm; λₑₘᵢ=); Rhodamine 101 (methanol) (λ_{exc}= 560 nm; λₑₘᵢ= 589 nm);DCM (λ_{exc}= 472 nm; λₑₘᵢ= 644 nm); Pyrromethene 650 (λ_{exc}= 590 nm; λₑₘᵢ= 612 nm); DODCI (λ_{exc}= 582 nm; λₑₘᵢ=); Sulforhodamine 101 (λ_{exc}= 578 nm; λₑₘᵢ=); Cresyl Violet (λ_{exc}= 601 nm; λₑₘᵢ= 632 nm); Phenoxazone 9 (λ_{exc}= 550 nm; λₑₘᵢ= 650 nm); Nile Blue (λ_{exc}= 633 nm; λₑₘᵢ= 672 nm); Oxazine 4 (λ_{exc}= 615 nm; λₑₘᵢ=); Rhodamine 700 (λ_{exc}= 643 nm; λₑₘᵢ= 673 nm); Pyridine (λ_{exc}= 480 nm; λₑₘᵢ=); Carbazine 122 (λ_{exc}= 655 nm; λₑₘᵢ=); Oxazine 170 (λ_{exc}= 627 nm; λₑₘᵢ= 650 nm); Oxazine 1 (λ_{exc}= 646 nm; λₑₘᵢ= 670 nm); DTDCI (λ_{exc}= 653 nm; λₑₘᵢ=); Oxazine 750 (λ_{exc}= 667 nm; λₑₘᵢ=); Pyridine 2 (λ_{exc}= 500 nm; λₑₘᵢ=); HIDCI (λ_{exc}= 639 nm; λₑₘᵢ=); Cryptocyanine (λ_{exc}= 708 nm; λₑₘᵢ=720 nm); Styryl 6 (λ_{exc}=615 nm; λₑₘᵢ=); Styryl 8 (λ_{exc}= 570 nm; λₑₘᵢ=); DDI (λ_{exc}= 710 nm; λₑₘᵢ= 745 nm); Pyridine 4 (λ_{exc}= 550 nm; λₑₘᵢ=); Methyl-DOTCI (λ_{exc}= 682 nm; λₑₘᵢ= 718 nm); Styryl 11 (λ_{exc}= 575 nm; λₑₘᵢ=); Rhodamine 800 (methanol) (λ_{exc}= 682 nm; λₑₘᵢ= 700 nm); Styryl 9M (λ_{exc}= 585 nm; λₑₘᵢ=); HITCI (λ_{exc}= 741 nm; λₑₘᵢ= 778 nm); IR 125 (λ_{exc}= 795 nm; λₑₘᵢ= 838 nm); DTTCI (λ_{exc}= 760 nm; λₑₘᵢ= 815 nm); IR 144 (λ_{exc}= 750 nm; λₑₘᵢ= 848 nm); Styryl 15 (λ_{exc}= 648 nm; λₑₘᵢ=); DNTTCI (λ_{exc}= 765 nm; λₑₘᵢ=); HDITCI (λ_{exc}= 780 nm; λₑₘᵢ=); DDTTCI (λ_{exc}= 798 nm; λₑₘᵢ=); DDCI-4 (λ_{exc}= 815 nm; λₑₘᵢ= 850 nm); IR 140 (λ_{exc}= 810 nm; λₑₘᵢ= 860 nm); Styryl 14 (λ_{exc}= 588 nm; λₑₘᵢ=); IR 132 (λ_{exc}= 830 nm; λₑₘᵢ= 861 nm); Styryl 20 (λ_{exc}= 645 nm; λₑₘᵢ=); IR 26 (λ_{exc}= 1080 nm; λₑₘᵢ= 1180 nm); IR 5 (λ_{exc}= 1090 nm; λₑₘᵢ= ); Aspirin (λ_{exc}=240 nm; λₑₘᵢ=380 nm), Biphenyl (λ_{exc}=270 nm; λₑₘᵢ=385 nm), Ephedrine (λ_{exc}=260 nm; λₑₘᵢ=390 nm), Epinephrine (λ_{exc}=260 nm; λₑₘᵢ=412 nm), Estradiol (λ_{exc}=292 nm; λₑₘᵢ=403 nm), Ethyl p-dimethylaminobenzoate (λ_{exc}=310 nm; λₑₘᵢ=330 nm), Lidocaine (λ_{exc}=265 nm; λₑₘᵢ=400 nm), Naphthalene (λ_{exc}=275 nm; λₑₘᵢ=322 nm), Nicotine (λ_{exc}=270 nm; λₑₘᵢ=390 nm), Purine (λ_{exc}=272 nm; λₑₘᵢ=405 nm), Tryptophan (λ_{exc}=295 nm; λₑₘᵢ=340 nm), Tyrosine (λ_{exc}=253 nm; λₑₘᵢ=394 nm), 1,8-ANS (λ_{exc}=372 nm; λₑₘᵢ=480 nm); 4-methylumbelliferone (λ_{exc}=360 nm; λₑₘᵢ=440 nm); 7-amino-4-methylcoumarin (AMC) (λ_{exc}=346 nm; λₑₘᵢ=442 nm); 7-hydroxy-4-methylcoumarin (λ_{exc}=360 nm; λₑₘᵢ=449 nm); ABQ (λ_{exc}=344 nm; λₑₘᵢ=445 nm); Acridine (λ_{exc}=362 nm; λₑₘᵢ=462 nm);Alexa Fluor 350™ (λ_{exc}=346 nm; λₑₘᵢ=442 nm); Alexa Fluor 405™ (λ_{exc}=402 nm; λₑₘᵢ=421 nm); AMCA (Aminomethylcoumarin) (λ_{exc}=350 nm; λₑₘᵢ=450 nm); AMCA-X (λ_{exc}=353 nm; λₑₘᵢ=442 nm); Aminocoumarin (λ_{exc}=350 nm; λₑₘᵢ=445 nm); Anthrocyl stearate (λ_{exc}=370 nm; λₑₘᵢ=446 nm); ATTO 390 (λ_{exc}=390 nm; λₑₘᵢ=479 nm); Beta lactamase (λ_{exc}=409 nm; λₑₘᵢ=450 nm); BFP (Blue Fluorescent Protein) (λ_{exc}=380 nm; λₑₘᵢ=435 nm); Bimane (λ_{exc}=380 nm; λₑₘᵢ=461 nm); Bisbenzimide (Hoechst) (λ_{exc}=360 nm; λₑₘᵢ=461 nm); Blancophor FFG (λ_{exc}=390 nm; λₑₘᵢ=470 nm); Blancophor SV (λ_{exc}=370 nm; λₑₘᵢ=435 nm); Calcein Blue (λ_{exc}=373 nm; λₑₘᵢ=440 nm); Calcofluor White (λ_{exc}=350 nm; λₑₘᵢ=440 nm); Cascade Blue™ (λ_{exc}=401 nm; λₑₘᵢ=420 nm); Catecholamine (λ_{exc}=410 nm; λₑₘᵢ=470 nm); Coumarin Phalloidin (λ_{exc}=548 nm; λₑₘᵢ=559 nm); CPM Methylcoumarin (λ_{exc}=548 nm; λₑₘᵢ=559 nm); DAPI (λ_{exc}=359 nm; λₑₘᵢ=461 nm); EBFP (λ_{exc}=380 nm; λₑₘᵢ=440 nm); Fast Blue (λ_{exc}=360 nm; λₑₘᵢ=440 nm); FIF (Formaldehyde Induced Fluorescence) (λ_{exc}=405 nm; λₑₘᵢ=483 nm); Gloxalic Acid (λ_{exc}=405 nm; λₑₘᵢ=460 nm); Granular Blue (λ_{exc}=355 nm; λₑₘᵢ=425 nm); Hoechst 33258 (λ_{exc}=352 nm; λₑₘᵢ=455 nm); Hoechst 33342 (λ_{exc}=352 nm; λₑₘᵢ=455 nm); Hoechst 34580 (λ_{exc}=392 nm; λₑₘᵢ=440 nm); HPTS (λ_{exc}=355 nm; λₑₘᵢ=465 nm); Indo-1 (λ_{exc}=346 nm; λₑₘᵢ=475 nm); Intrawhite Cf (λ_{exc}=360 nm; λₑₘᵢ=430 nm); Laurodan (λ_{exc}=355 nm; λₑₘᵢ=460 nm); Leucophor PAF, SF, WS (λ_{exc}=370 nm; λₑₘᵢ=430 nm); LysoSensor Blue (λ_{exc}=374 nm; λₑₘᵢ=424 nm); LysoSensor Blue DND-167 (λ_{exc}=374 nm; λₑₘᵢ=425 nm); Lysosensor Blue DND-192 (λ_{exc}=374 nm; λₑₘᵢ=424 nm); LysoTracker Blue (λ_{exc}=373 nm; λₑₘᵢ=422 nm); Mag-Indo-1 (λ_{exc}=349 nm; λₑₘᵢ=480 nm); Marina Blue (λ_{exc}=365 nm; λₑₘᵢ=460 nm); Methoxycoumarin (λ_{exc}=360 nm; λₑₘᵢ=410 nm); Monochlorobimane (λ_{exc}=380 nm; λₑₘᵢ=461 nm); Pacific Blue™ (λ_{exc}=410 nm; λₑₘᵢ=455 nm); PBFI (λ_{exc}=360 nm; λₑₘᵢ=420 nm); Phorwite AR (λ_{exc}=360 nm; λₑₘᵢ=430 nm); Phorwite BKL (λ_{exc}=370 nm; λₑₘᵢ=430 nm); Phorwite Rev (λ_{exc}=380 nm; λₑₘᵢ=430 nm); Phorwite RPA (λ_{exc}=375 nm; λₑₘᵢ=430 nm); SBFI (λ_{exc}=360 nm; λₑₘᵢ=420 nm); sgBFP™ (λ_{exc}=387 nm; λₑₘᵢ=450 nm); SITS (Primuline) (λ_{exc}=410 nm; λₑₘᵢ=450 nm); SITS (Stilbene Isothiosulphonic Acid) (λ_{exc}=365 nm; λₑₘᵢ=460 nm); SPQ (6-methoxy-N-(3-sulfopropyl)quinolinium) (λ_{exc}=344 nm; λₑₘᵢ=433 nm); TagBFP (λ_{exc}=402 nm; λₑₘᵢ=457 nm); Thioflavin TCN (λ_{exc}=350 nm; λₑₘᵢ=460 nm); Thiolyte (λ_{exc}=378 nm; λₑₘᵢ=483 nm); Tinopol CBS (Calcofluor White) (λ_{exc}=390 nm; λₑₘᵢ=430 nm); True Blue (λ_{exc}=365 nm; λₑₘᵢ=425 nm); Uvitex SFC (λ_{exc}=365 nm; λₑₘᵢ=435 nm); Y66H (λ_{exc}=360 nm; λₑₘᵢ=442 nm); ACMA (9-amino-6-chloro-2-methoxyacridine) (λ_{exc}=421 nm; λₑₘᵢ=473 nm); AmCyan (λ_{exc}=454 nm; λₑₘᵢ=488 nm); AmCyan1 (λ_{exc}=458 nm; λₑₘᵢ=489 nm); Astrazon Yellow 7 GLL (λ_{exc}=450 nm; λₑₘᵢ=480 nm); Atabrine (λ_{exc}=436 nm; λₑₘᵢ=490 nm); ATTO 425 (λ_{exc}=436 nm; λₑₘᵢ=484 nm); BOBO-1, BO-PRO-1 (λ_{exc}=462 nm; λₑₘᵢ=481 nm); Cerulean (λ_{exc}=434 nm; λₑₘᵢ=475 nm); CFP (cyan GFP) (λ_{exc}=434 nm; λₑₘᵢ=477 nm); Chromomycin A (λ_{exc}=448 nm; λₑₘᵢ=470 nm); Coelenterazine F (λ_{exc}=437 nm; λₑₘᵢ=473 nm); DEAC (λ_{exc}=432 nm; λₑₘᵢ=472 nm); ECFP (λ_{exc}=434 nm; λₑₘᵢ=477 nm); Genacryl Brilliant Yellow 10GF (λ_{exc}=430 nm; λₑₘᵢ=485 nm); Genacryl Yellow 5GF (λ_{exc}=430 nm; λₑₘᵢ=475 nm); Mitramycin (λ_{exc}=450 nm; λₑₘᵢ=470 nm); POPO-1, PO-PRO-1 (λ_{exc}=434 nm; λₑₘᵢ=456 nm); Sevron Yellow L (λ_{exc}=430 nm; λₑₘᵢ=490 nm); SpectrumAqua (λ_{exc}=433 nm; λₑₘᵢ=480 nm); SYTO Blue Fluorescent Nucleic Acid Stain 43 (λ_{exc}=436 nm; λₑₘᵢ=467 nm); SYTO Blue Fluorescent Nucleic Acid Stain 44 (λ_{exc}=446 nm; λₑₘᵢ=471 nm); SYTO Blue Fluorescent Nucleic Acid Stain 45 (λ_{exc}=452 nm; λₑₘᵢ=484 nm); SYTOX Blue (λ_{exc}=445 nm; λₑₘᵢ=470 nm); TagCFP (λ_{exc}=458 nm; λₑₘᵢ=480 nm); Thiozole Orange (λ_{exc}=453 nm; λₑₘᵢ=480 nm); Y66W (λ_{exc}=436 nm; λₑₘᵢ=485 nm); Cascade Yellow™ (λ_{exc}=402 nm; λₑₘᵢ=545 nm); EFL® 97 alcohol (λ_{exc}=345 nm; λₑₘᵢ=530 nm); ER-Tracker™ Blue-White DPX (λ_{exc}=372 nm; λₑₘᵢ=556 nm); Fura-2 363, 335 (λ_{exc}=512 nm; λₑₘᵢ=505 nm); LysoSensor Yellow/Blue (λ_{exc}=0 nm; λₑₘᵢ=0 nm); 2-dodecylresorufin-lipid (λ_{exc}=582 nm; λₑₘᵢ=595 nm); AcGFP1 (λ_{exc}=475 nm; λₑₘᵢ=505 nm); ATTO 465 (λ_{exc}=453 nm; λₑₘᵢ=508 nm); Aurophosphine (λ_{exc}=470 nm; λₑₘᵢ=515 nm); BCECF (low pH) (λ_{exc}=482 nm; λₑₘᵢ=520 nm); bis-BTC (λ_{exc}=455 nm; λₑₘᵢ=529 nm); CFP (cyan GFP) (λ_{exc}=434 nm; λₑₘᵢ=477 nm); Chromomycin A (λ_{exc}=448 nm; λₑₘᵢ=470 nm); Cy2™ (λ_{exc}=489 nm; λₑₘᵢ=506 nm); CyQuant Cell Proliferation Assay (λ_{exc}=480 nm; λₑₘᵢ=520 nm); DiO (λ_{exc}=475 nm; λₑₘᵢ=500 nm); DyLight 488 (λ_{exc}=491 nm; λₑₘᵢ=519 nm); EGFP (λ_{exc}=489 nm; λₑₘᵢ=508 nm); Emerald (λ_{exc}=490 nm; λₑₘᵢ=510 nm); GFP (EGFP) (λ_{exc}=489 nm; λₑₘᵢ=508 nm); NBD Amine (λ_{exc}=450 nm; λₑₘᵢ=530 nm); Nitrobenzoxadidole (λ_{exc}=465 nm; λₑₘᵢ=510 nm); Nylosan Brilliant Lavin E8G (λ_{exc}=460 nm; λₑₘᵢ=510 nm); S65C (λ_{exc}=479 nm; λₑₘᵢ=507 nm); S65L (λ_{exc}=484 nm; λₑₘᵢ=510 nm); S65T (λ_{exc}=488 nm; λₑₘᵢ=511 nm); sgGFP™ (super glow GFP) (λ_{exc}=474 nm; λₑₘᵢ=509 nm); SYTO Blue Fluorescent Nucleic Acid Stain 45 (λ_{exc}=452 nm; λₑₘᵢ=484 nm); SYTO Green Fluorescent Nucleic Acid Stains 12, 13, 16, 21, 23, 24 (λ_{exc}=494 nm; λₑₘᵢ=515 nm); SYTOX Blue (λ_{exc}=445 nm; λₑₘᵢ=470 nm); TagGFP2 (λ_{exc}=483 nm; λₑₘᵢ=506 nm); Thiazole Orange (λ_{exc}=453 nm; λₑₘᵢ=480 nm); TurboGFP (λ_{exc}=482 nm; λₑₘᵢ=502 nm); wtGFP (wild type GFP, non-UV excitation) (λ_{exc}=475 nm; λₑₘᵢ=509 nm); Y66W (λ_{exc}=436 nm; λₑₘᵢ=485 nm); YOYO-1, YO-PRO-1 (λ_{exc}=491 nm; λₑₘᵢ=509 nm); 2-dodecylresorufin-lipid (λ_{exc}=582 nm; λₑₘᵢ=595 nm); 5-carboxy-2,7-dichlorofluorescein (λ_{exc}=504 nm; λₑₘᵢ=529 nm); 5-FAM (5-carboxyfluorescein) (λ_{exc}=492 nm; λₑₘᵢ=518 nm); Acridine (λ_{exc}=362 nm; λₑₘᵢ=462 nm); Acridine Orange (λ_{exc}=500 nm; λₑₘᵢ=526 nm); Acridine Orange + DNA (λ_{exc}=500 nm; λₑₘᵢ=52675 nm); Acridine Yellow (λ_{exc}=470 nm; λₑₘᵢ=550 nm); Alexa Fluor 488™ (λ_{exc}=495 nm; λₑₘᵢ=519 nm); Alexa Fluor 500™ (λ_{exc}=503 nm; λₑₘᵢ=525 nm); Astrazon Orange R (λ_{exc}=470 nm; λₑₘᵢ=540 nm); ATTO 488 (λ_{exc}=501 nm; λₑₘᵢ=523 nm); ATTO 495 (λ_{exc}=495 nm; λₑₘᵢ=527 nm); ATTO-TAG™ CBQCA (λ_{exc}=465 nm; λₑₘᵢ=560 nm); Auramine (λ_{exc}=460 nm; λₑₘᵢ=550 nm); BCECF (high pH) (λ_{exc}=503 nm; λₑₘᵢ=528 nm); BCECF (low pH) (λ_{exc}=482 nm; λₑₘᵢ=520 nm); BODIPY (λ_{exc}=505 nm; λₑₘᵢ=513 nm); BODIPY 492/515 (λ_{exc}=490 nm; λₑₘᵢ=515 nm); BODIPY 505/515 (λ_{exc}=502 nm; λₑₘᵢ=510 nm); BODIPY FL (λ_{exc}=505 nm; λₑₘᵢ=513 nm); BTC (λ_{exc}=464 nm; λₑₘᵢ=530 nm); Calcein (λ_{exc}=494 nm; λₑₘᵢ=517 nm); CFDA (λ_{exc}=494 nm; λₑₘᵢ=520 nm); CMFDA (λ_{exc}=494 nm; λₑₘᵢ=520 nm); Cyclic AMP Fluorosensor (FiCRhR) (λ_{exc}=500 nm; λₑₘᵢ=517 nm); DCFDA (λ_{exc}=504 nm; λₑₘᵢ=529 nm); DTAF (λ_{exc}=494 nm; λₑₘᵢ=520 nm); DyLight 488 (λ_{exc}=491 nm; λₑₘᵢ=519 nm); Emerald (λ_{exc}=490 nm; λₑₘᵢ=510 nm); ER-Tracker™ Green (λ_{exc}=504 nm; λₑₘᵢ=511 nm); FAM (λ_{exc}=492 nm; λₑₘᵢ=518 nm); FDA (λ_{exc}=494 nm; λₑₘᵢ=520 nm); FITC (Fluorescein) (λ_{exc}=492 nm; λₑₘᵢ=520 nm); Fluo-4 (λ_{exc}=494 nm; λₑₘᵢ=516 nm); Fluoro-Emerald (λ_{exc}=495 nm; λₑₘᵢ=524 nm); FluorX (λ_{exc}=494 nm; λₑₘᵢ=520 nm); FluoSpheres Yellow-Green (λ_{exc}=503 nm; λₑₘᵢ=514 nm); HCS LipidTOX Green (λ_{exc}=504 nm; λₑₘᵢ=536 nm); HiLyte Fluor™ 488 (λ_{exc}=497 nm; λₑₘᵢ=525 nm); JC-1 (λ_{exc}=498 nm; λₑₘᵢ=525 nm); JC-9 (λ_{exc}=506 nm; λₑₘᵢ=525 nm); LIVE/DEAD Kit Animal Cells (λ_{exc}=494 nm; λₑₘᵢ=517 nm); LysoTracker Blue-White (λ_{exc}=466 nm; λₑₘᵢ=536 nm); LysoTracker Green (λ_{exc}=504 nm; λₑₘᵢ=511 nm); mHoneydew (λ_{exc}=478 nm; λₑₘᵢ=561 nm); MitoTracker™ Green (λ_{exc}=490 nm; λₑₘᵢ=516 nm); NBD (λ_{exc}=466 nm; λₑₘᵢ=539 nm); NBD-X (λ_{exc}=467 nm; λₑₘᵢ=538 nm); NeuroTrace 500/525 Green Fluorescent Nissl Stain (λ_{exc}=500 nm; λₑₘᵢ=525 nm); Nissl (λ_{exc}=497 nm; λₑₘᵢ=524 nm); Oregon Green™ (λ_{exc}=503 nm; λₑₘᵢ=522 nm); Oregon Green™ 488 (λ_{exc}=496 nm; λₑₘᵢ=524 nm); Oregon Green™ 500 (λ_{exc}=497 nm; λₑₘᵢ=517 nm); Oregon Green™ 514 (λ_{exc}=511 nm; λₑₘᵢ=530 nm); PicoGreen® (λ_{exc}=502 nm; λₑₘᵢ=522 nm); PKH67 (λ_{exc}=496 nm; λₑₘᵢ=520 nm); Rhod-123 (λ_{exc}=507 nm; λₑₘᵢ=529 nm); Rhodamine 110 (λ_{exc}=496 nm; λₑₘᵢ=520 nm); Rhodol Green (λ_{exc}=496 nm; λₑₘᵢ=523 nm); rsGFP (red shifted GFP, S65T) (λ_{exc}=498 nm; λₑₘᵢ=516 nm); Sodium Green (λ_{exc}=506 nm; λₑₘᵢ=532 nm); SYTO Green Fluorescent Nucleic Acid Stains 12,13,16,21,23,24 (λ_{exc}=494 nm; λₑₘᵢ=515 nm); SYTOX Green (λ_{exc}=504 nm; λₑₘᵢ=523 nm); TagGFP2 (λ_{exc}=483 nm; λₑₘᵢ=506 nm); TurboGFP (λ_{exc}=482 nm; λₑₘᵢ=502 nm); 6-Carboxyrhodamine 6G (λ_{exc}=525 nm; λₑₘᵢ=555 nm); Alexa Fluor 514™ (λ_{exc}=518 nm; λₑₘᵢ=543 nm); ATTO 488 (λ_{exc}=501 nm; λₑₘᵢ=523 nm); ATTO 495 (λ_{exc}=495 nm; λₑₘᵢ=527 nm); ATTO 520 (λ_{exc}=516 nm; λₑₘᵢ=538 nm); BCECF (high pH) (λ_{exc}=503 nm; λₑₘᵢ=528 nm); CAL Fluor® Gold 540 (λ_{exc}=522 nm; λₑₘᵢ=544 nm); Calcium Green-1 (λ_{exc}=506 nm; λₑₘᵢ=531 nm); Calcium Green-2 (including Ca2+) (λ_{exc}=506 nm; λₑₘᵢ=536 nm); Calcium Green-5N (including Ca2+) (λ_{exc}=506 nm; λₑₘᵢ=532 nm); CI-NERF, CL-NERF (λ_{exc}=509 nm; λₑₘᵢ=540 nm); DCFH (Dichlorodihydrofluorescein Diacetate) (λ_{exc}=505 nm; λₑₘᵢ=535 nm); DHR (Dihydrorhodamine 123) (λ_{exc}=505 nm; λₑₘᵢ=534 nm); DM-NERF (λ_{exc}=500 nm; λₑₘᵢ=540 nm); Eosin (λ_{exc}=525 nm; λₑₘᵢ=546 nm); EYFP (λ_{exc}=513 nm; λₑₘᵢ=527 nm); FIAsH-CCPFCC (λ_{exc}=511 nm; λₑₘᵢ=530 nm); Fluo-3 (λ_{exc}=506 nm; λₑₘᵢ=526 nm); HCS LipidTOX Green (λ_{exc}=504 nm; λₑₘᵢ=536 nm); JO-JO-1, JO-PRO-1 (λ_{exc}=530 nm; λₑₘᵢ=545 nm); Magnesium Green (λ_{exc}=506 nm; λₑₘᵢ=531 nm); mHoneydew (λ_{exc}=478 nm; λₑₘᵢ=561 nm); Rhodamine 123 (λ_{exc}=507 nm; λₑₘᵢ=529 nm); Rhodamine 6G (λ_{exc}=525 nm; λₑₘᵢ=555 nm); Rhodamine Green (λ_{exc}=502 nm; λₑₘᵢ=527 nm); SpectrumGreen (λ_{exc}=497 nm; λₑₘᵢ=538 nm); SYTO Green Fluorescent Nucleic Acid Stains 11,14,15,20,22,25 (λ_{exc}=515 nm; λₑₘᵢ=543 nm); SYTO Orange Fluorescent Nucleic Acid Stains 80,81,82,83 (λ_{exc}=537 nm; λₑₘᵢ=552 nm); TagYFP (λ_{exc}=508 nm; λₑₘᵢ=524 nm); TET (λ_{exc}=521 nm; λₑₘᵢ=536 nm); TOTO-1, TO-PRO-1 (λ_{exc}=509 nm; λₑₘᵢ=533 nm); TurboYFP (λ_{exc}=525 nm; λₑₘᵢ=538 nm); YFP (yellow GFP) (λ_{exc}=513 nm; λₑₘᵢ=527 nm); ZsYellow1 (λ_{exc}=529 nm; λₑₘᵢ=539 nm); 5-TAMRA (5-carboxytetramethylrhodamine, high pH) (λ_{exc}=542 nm; λₑₘᵢ=568 nm); Alexa Fluor 532™ (λ_{exc}=531 nm; λₑₘᵢ=554 nm); Alexa Fluor 546™ (λ_{exc}=556 nm; λₑₘᵢ=573 nm); Alizarin Red (λ_{exc}=540 nm; λₑₘᵢ=580 nm); Astrazon Brilliant Red 4G (λ_{exc}=500 nm; λₑₘᵢ=585 nm); BO-PRO™-3 (λ_{exc}=544 nm; λₑₘᵢ=570 nm); BODIPY 542/563 (λ_{exc}=543 nm; λₑₘᵢ=563 nm); BODIPY 558/568 (λ_{exc}=558 nm; λₑₘᵢ=569 nm); BODIPY TMR-X (λ_{exc}=542 nm; λₑₘᵢ=574 nm); CAL Fluor Orange 560 (λ_{exc}=464 nm; λₑₘᵢ=530 nm); Dil (λ_{exc}=551 nm; λₑₘᵢ=565 nm); Ethidium Bromide (λ_{exc}=518 nm; λₑₘᵢ=605 nm); Genacryl Brilliant Red B (λ_{exc}=520 nm; λₑₘᵢ=590 nm); HEX (λ_{exc}=535 nm; λₑₘᵢ=556 nm); HiLyte Fluor™ 555 (λ_{exc}=550 nm; λₑₘᵢ=566 nm); JOE (λ_{exc}=525 nm; λₑₘᵢ=555 nm); mOrange (λ_{exc}=548 nm; λₑₘᵢ=568 nm); mStrawberry (λ_{exc}=575 nm; λₑₘᵢ=596 nm); mTangerine (λ_{exc}=568 nm; λₑₘᵢ=585 nm); NED (λ_{exc}=546 nm; λₑₘᵢ=575 nm); Nile Red (λ_{exc}=549 nm; λₑₘᵢ=628 nm); OFP (λ_{exc}=547 nm; λₑₘᵢ=567 nm); pHrodo™ (λ_{exc}=560 nm; λₑₘᵢ=587 nm); PKH26 (Sigma) (λ_{exc}=551 nm; λₑₘᵢ=567 nm); PO-PRO-3 (λ_{exc}=539 nm; λₑₘᵢ=567 nm); POPO-3 (λ_{exc}=533 nm; λₑₘᵢ=574 nm); Pro-Q Diamond (λ_{exc}=556 nm; λₑₘᵢ=583 nm); Rhod-2 (λ_{exc}=552 nm; λₑₘᵢ=578 nm); Rhodamine (λ_{exc}=550 nm; λₑₘᵢ=573 nm); Rhodamine BB (λ_{exc}=540 nm; λₑₘᵢ=580 nm); Rhodamine BG (λ_{exc}=540 nm; λₑₘᵢ=572 nm); Rhodamine Phalloidin (λ_{exc}=542 nm; λₑₘᵢ=565 nm); Rose Bengal (λ_{exc}=533 nm; λₑₘᵢ=575 nm); Sevron Brilliant Red 2B (λ_{exc}=520 nm; λₑₘᵢ=595 nm); Sevron Brilliant Red B (λ_{exc}=530 nm; λₑₘᵢ=590 nm); SpectrumOrange (λ_{exc}=559 nm; λₑₘᵢ=588 nm); Sulphorhodamine B can C (λ_{exc}=520 nm; λₑₘᵢ=595 nm); SYTOX Orange (λ_{exc}=547 nm; λₑₘᵢ=570 nm); TagRFP (λ_{exc}=555 nm; λₑₘᵢ=584 nm); TMR (λ_{exc}=542 nm; λₑₘᵢ=574 nm); TRITC (Tetramethylrhodamine) (λ_{exc}=555 nm; λₑₘᵢ=580 nm); TurboRFP (λ_{exc}=553 nm; λₑₘᵢ=574 nm); Xylene Orange (λ_{exc}=546 nm; λₑₘᵢ=580 nm); Alexa Fluor 555™ (λ_{exc}=555 nm; λₑₘᵢ=565 nm); BOBO™-3 (λ_{exc}=570 nm; λₑₘᵢ=602 nm); BODIPY 558/568 (λ_{exc}=558 nm; λₑₘᵢ=569 nm); BODIPY 564/570 (λ_{exc}=564 nm; λₑₘᵢ=570 nm); CAL Fluor Red 590 (λ_{exc}=569 nm; λₑₘᵢ=591 nm); Calcium Orange (λ_{exc}=579 nm; λₑₘᵢ=575 nm); Carboxy SNARF Indicators (λ_{exc}=548 nm; λₑₘᵢ=587 nm); CoralHue Kusabira Orange (mKO) (λ_{exc}=548 nm; λₑₘᵢ=559 nm); Cy3™ (λ_{exc}=552 nm; λₑₘᵢ=570 nm); (λ_{exc}=360 nm; λₑₘᵢ=442 nm); DsRed Monomer (λ_{exc}=556 nm; λₑₘᵢ=586 nm); DsRed-Express(λ_{exc}=557 nm; λₑₘᵢ=579 nm); DsRed2 (λ_{exc}=563 nm; λₑₘᵢ=582 nm); dTomato (λ_{exc}=554 nm; λₑₘᵢ=581 nm); DyLight 549 (λ_{exc}=553 nm; λₑₘᵢ=569 nm); Ethidium Homodimer-1 (EthD-1) (λ_{exc}=528 nm; λₑₘᵢ=617 nm); Fluor-Ruby (λ_{exc}=555 nm; λₑₘᵢ=582 nm); Hematoporphyrin (λ_{exc}=545 nm; λₑₘᵢ=580 nm); ssamine Rhodamine (λ_{exc}=572 nm; λₑₘᵢ=591 nm) ; LO-PRO-1 (λ_{exc}=568 nm; λₑₘᵢ=581 nm); LOLO-1 (λ_{exc}=566 nm; λₑₘᵢ=580 nm); LysoTracker Red (λ_{exc}=577 nm; λₑₘᵢ=592 nm); LysoTracker Yellow (λ_{exc}=551 nm; λₑₘᵢ=576 nm); Mag-Fura Red (λ_{exc}=483 nm; λₑₘᵢ=659 nm); Magdala Red (Phloxin B) (λ_{exc}=524 nm; λₑₘᵢ=600 nm); Magnesium Orange (λ_{exc}=550 nm; λₑₘᵢ=575 nm); Merocyanin (λ_{exc}=555 nm; λₑₘᵢ=578 nm); MitoTracker™ Orange (λ_{exc}=551 nm; λₑₘᵢ=576 nm); mOrange (λ_{exc}=548 nm; λₑₘᵢ=568 nm); mStrawberry (λ_{exc}=575 nm; λₑₘᵢ=596 nm); mTangerine (λ_{exc}=568 nm; λₑₘᵢ=585 nm); OFP (λ_{exc}=547 nm; λₑₘᵢ=567 nm); Phloxin B (Magdala Red) (λ_{exc}=524 nm; λₑₘᵢ=600 nm); Phycoerythrin (PE) (λ_{exc}=565 nm; λₑₘᵢ=575 nm); PKH26 (λ_{exc}=559 nm; λₑₘᵢ=575 nm); Pontochrome Blue Black (λ_{exc}=545 nm; λₑₘᵢ=605 nm); Pyronine B (λ_{exc}=565 nm; λₑₘᵢ=605 nm); Quasar 570 (λ_{exc}=547 nm; λₑₘᵢ=570 nm); R-phycoerythrin (PE) (λ_{exc}=565 nm; λₑₘᵢ=575 nm); Resorufin (λ_{exc}=571 nm; λₑₘᵢ=585 nm); Rhodamine B 200 (λ_{exc}=540 nm; λₑₘᵢ=595 nm) Rhodamine Phallicidine (λ_{exc}=558 nm; λₑₘᵢ=575 nm); Rhodamine Red (λ_{exc}=560 nm; λₑₘᵢ=580 nm); ROX (λ_{exc}=568 nm; λₑₘᵢ=595 nm); SNARF (carboxy) 488 Excitation pH6 (λ_{exc}=549 nm; λₑₘᵢ=589 nm); SNARF (carboxy) 514 Excitation pH6 (λ_{exc}=549 nm; λₑₘᵢ=586 nm); SpectrumOrange (λ_{exc}=559 nm; λₑₘᵢ=588 nm); SYTO Orange Fluorescent Nucleic Acid Stains 84,85 (λ_{exc}=567 nm; λₑₘᵢ=583 nm); TAMRA (λ_{exc}=565 nm; λₑₘᵢ=580 nm); Tetramethylrhodamine, Rhodamine B (λ_{exc}=555 nm; λₑₘᵢ=580 nm); X-Rhodamine (λ_{exc}=570 nm; λₑₘᵢ=576 nm); 5-chloromethylfluorescein (λ_{exc}=491 nm; λₑₘᵢ=517 nm); 5-ROX (carboxy-X-rhodamine) (λ_{exc}=580 nm; λₑₘᵢ=605 nm); 7-AAD (λ_{exc}=546 nm; λₑₘᵢ=647 nm); 7-aminoactinomycin D (7-AAD) (λ_{exc}=546 nm; λₑₘᵢ=647 nm); Acid Fuchsin (λ_{exc}=540 nm; λₑₘᵢ=630 nm); Alexa Fluor 568™ (λ_{exc}=578 nm; λₑₘᵢ=603 nm); Alexa Fluor 594™ (λ_{exc}=590 nm; λₑₘᵢ=617 nm); Aminoactinomycin D (λ_{exc}=555 nm; λₑₘᵢ=655 nm); AsRed 2 (λ_{exc}=576 nm; λₑₘᵢ=592 nm); ATTO 565 (λ_{exc}=563 nm; λₑₘᵢ=592 nm); BODIPY TR (λ_{exc}=589 nm; λₑₘᵢ=617 nm); BODIPY TR ATP (λ_{exc}=591 nm; λₑₘᵢ=620 nm); BODIPY TR-X (λ_{exc}=589 nm; λₑₘᵢ=617 nm); BODIPY TR-X SE (λ_{exc}=588 nm; λₑₘᵢ=616 nm); CAL Fluor Red 610 (λ_{exc}=590 nm; λₑₘᵢ=610 nm); Calcium Crimson™ (λ_{exc}=588 nm; λₑₘᵢ=611 nm); Cy3.5™ (λ_{exc}=580 nm; λₑₘᵢ=591 nm); ER-Tracker™ Red (λ_{exc}=587 nm; λₑₘᵢ=615 nm); Feulgen (Pararosaniline) (λ_{exc}=570 nm; λₑₘᵢ=625 nm) FluoSpheres Red (λ_{exc}=656 nm; λₑₘᵢ=683 nm); Fura Red™ (high pH) (λ_{exc}=572 nm; λₑₘᵢ=657 nm); HcRed (λ_{exc}=590 nm; λₑₘᵢ=614 nm); HCS LipidTOX Red (λ_{exc}=582 nm; λₑₘᵢ=616 nm); LysoTracker Red DND-99 (L-7528) (λ_{exc}=577 nm; λₑₘᵢ=590 nm); mCherry (RFP) (λ_{exc}=587 nm; λₑₘᵢ=610 nm); MitoTracker™ Red (λ_{exc}=578 nm; λₑₘᵢ=599 nm); mKate2 (λ_{exc}=588 nm; λₑₘᵢ=633 nm); mPlum (λ_{exc}=594 nm; λₑₘᵢ=648 nm); Nile Red (λ_{exc}=549 nm; λₑₘᵢ=628 nm); Propidium Iodide (PI) (λ_{exc}=536 nm; λₑₘᵢ=617 nm); Rhodamine Red Dye (λ_{exc}=570 nm; λₑₘᵢ=590 nm); SNARF (carboxy) Excitation pH9 (λ_{exc}=576 nm; λₑₘᵢ=639 nm); SpectrumRed (λ_{exc}=587 nm; λₑₘᵢ=612 nm); SYTO 64 (λ_{exc}=599 nm; λₑₘᵢ=619 nm); SYTO Red Fluorescent Nucleic Acid Stain 64 (λ_{exc}=567 nm; λₑₘᵢ=583 nm); Texas Red-X® Conjugate (λ_{exc}=595 nm; λₑₘᵢ=615 nm); Texas Red® (λ_{exc}=595 nm; λₑₘᵢ=615 nm); Thiazine Red R (λ_{exc}=596 nm; λₑₘᵢ=615 nm); TRITC (Tetramethylrhodamine) (λ_{exc}=555 nm; λₑₘᵢ=580 nm); TurboFP602 (λ_{exc}=574 nm; λₑₘᵢ=620 nm); TurboFP635 (λ_{exc}=588 nm; λₑₘᵢ=635 nm); WW 781 (λ_{exc}=605 nm; λₑₘᵢ=639 nm); X-Rhod-1 Indicator (λ_{exc}=580 nm; λₑₘᵢ=602 nm); 5-carboxynapthofluorescein (pH 10) (λ_{exc}=555 nm; λₑₘᵢ=615 nm); 5-chloromethylfluorescein (λ_{exc}=491 nm; λₑₘᵢ=517 nm); ATTO 565 (λ_{exc}=563 nm; λₑₘᵢ=592 nm); FluoSpheres Red (λ_{exc}=656 nm; λₑₘᵢ=683 nm); HCS LipidTOX Red (λ_{exc}=582 nm; λₑₘᵢ=616 nm); mCherry (RFP) (λ_{exc}=587 nm; λₑₘᵢ=610 nm); mKate2 (λ_{exc}=588 nm; λₑₘᵢ=633 nm); TurboFP602 (λ_{exc}=574 nm; λₑₘᵢ=620 nm); TurboFP635 (λ_{exc}=588 nm; λₑₘᵢ=635 nm); 5-carboxynaphthofluorescein (pH 10) (λ_{exc}=555 nm; λₑₘᵢ=615 nm); Alexa Fluor 647™ (λ_{exc}=650 nm; λₑₘᵢ=668 nm); Alexa Fluor 660™ (λ_{exc}=663 nm; λₑₘᵢ=690 nm); APC (Allophycocyanin) (λ_{exc}=651 nm; λₑₘᵢ=661 nm); ATTO 633 (λ_{exc}=629 nm; λₑₘᵢ=657 nm); ATTO 647 (λ_{exc}=645 nm; λₑₘᵢ=669 nm); BODIPY 650/665-X (λ_{exc}=650 nm; λₑₘᵢ=665 nm); Cy5™ (λ_{exc}=649 nm; λₑₘᵢ=666 nm); DiD (DiIC18(5)) - Lipophilic Tracer (λ_{exc}=644 nm; λₑₘᵢ=665 nm); DY-635-NHS (λ_{exc}=634 nm; λₑₘᵢ=664 nm); DyLight 649 (λ_{exc}=651 nm; λₑₘᵢ=673 nm); FluoSpheres Dark Red (λ_{exc}=656 nm; λₑₘᵢ=683 nm); HiLyte Fluor™ 647 (λ_{exc}=649 nm; λₑₘᵢ=672 nm); Indodicarbocyanine (DiD) (λ_{exc}=644 nm; λₑₘᵢ=665 nm); LIVE-DEAD Fixable Green (λ_{exc}=498 nm; λₑₘᵢ=526 nm); Quasar 670 (λ_{exc}=644 nm; λₑₘᵢ=670 nm); SpectrumFRed (Far Red) (λ_{exc}=655 nm; λₑₘᵢ=675 nm) SYTO Red Fluorescent Nucleic Acid Stains 60, 62, 63 (λ_{exc}=655 nm; λₑₘᵢ=675 nm); Thiadicarbocyanine (DiSC3) (λ_{exc}=651 nm; λₑₘᵢ=674 nm); TOTO-3, TO-PRO-3 (λ_{exc}=642 nm; λₑₘᵢ=661 nm); Ultralite (λ_{exc}=656 nm; λₑₘᵢ=678 nm); Alexa Fluor 680™ (λ_{exc}=679 nm; λₑₘᵢ=702 nm); ATTO 611 X (λ_{exc}=611 nm; λₑₘᵢ=681 nm); ATTO 655 (λ_{exc}=663 nm; λₑₘᵢ=684 nm); ATTO 680 (λ_{exc}=680 nm; λₑₘᵢ=700 nm); Cy5.5™ (λ_{exc}=676 nm; λₑₘᵢ=690 nm); DyLight 680 (λ_{exc}=676 nm; λₑₘᵢ=705 nm); HiLyte Fluor™ 680 (λ_{exc}=688 nm; λₑₘᵢ=700 nm); Alexa Fluor 750™ (λ_{exc}=749 nm; λₑₘᵢ=775 nm); ATTO 725 (λ_{exc}=725 nm; λₑₘᵢ=752 nm); ATTO 740 (λ_{exc}=740 nm; λₑₘᵢ=764 nm); Cy7™ (λ_{exc}=753 nm; λₑₘᵢ=775 nm); ICG (λ_{exc}=768 nm; λₑₘᵢ=807 nm) ; Nile Blue chloride, rhodamine 110, nitrobenzoxadiazole (NBD) chloride, and more particularly acridine orange, alizarin red;
- the rare earth element is a lanthanide and notably europium, terbium, dysprosium;
- the transition element is optionally in salt form, such as ruthenium, rhenium, osmium, iridium, cadmium, manganese, chromium;
and such that said doped spin transition material fits the following general formula (III) or (IV):
[(D)n%]{[Fe(L)₃](X)₂.xH₂O} (III)
wherein:
- L represents a ligand such as trz (1,2,4-triazole), NH₂trz (4-amino-triazole), Fatrz (4-formylamino-1,2,4-triazole), alkyltrz (4-alkyl-1,2,4-triazole) ;
- X represents an anionic counter ion such as OTf (triflate or trifluorométhanesulfonate), p-tol or tos (p-tolylsulfonate or further tosylate), tetrafluoroborate, nitrate, Br, Cl, etc. ;
- x is an integer comprised between 0 and 10;
- D is fluorescent dopant as defined above, with emission and excitation wavelengths comprised between 400 and 800 nm; and
- n is the percentage by moles of dopant based on the number of moles of iron atoms,
or [(D)n%]{Fe_{y}M_{(1-y)}(L)[M)'(CN)₄]} (IV)
wherein
M represents a metal such as Ni, Co or Zn;
M' represents a metal, identical with or different from M, selected from among Ni, Pd, Pt;
L represents the ligand pyrazine (pz) or the ligand bis(4-pyridyl)acetylene (bpac) or any other bidentate nitrogen-containing ligand;
D represents a fluorescent dopant as defined above, with emission and excitation wavelengths comprised between 400 and 800 nm; and
y is comprised between 0 and 1.

2. The doped spin transition material according to claim 1, such that the emitted fluorescence is electively modulated according to the temperature.

3. The spin transition material according to claim 1 or 2, such that the dopant has a fluorescence emission wavelength corresponding to the absorption wavelength of the spin transition material in one of its states (spin down or spin up) and not in the other of its states (spin down or spin up respectively).

4. The doped spin transition material according to any of the preceding claims, such that said excitation and/or emission wavelengths of the dopant and of the spin transition material are in visible, infrared or ultraviolet range.

5. The doped spin transition material according to any of claims 1 to 4, fitting the general formula (IIIa) or (IIIb):
[(D)n%]{[Fe(NH₂trz)₃](p-tolyl)₂.xH₂O} (IIIa)
[(D)n%]{[Fe(trz)₃](NO₃)₂] (IIIb)
wherein trz represents the triazole ligand, D represents a fluorescent dopant defined as in claim 7.

6. The doped spin transition material according to any of claims 1 to 4 fitting the formula (IVa)
[(D)n%]{Fe_{0.5}Ni_{0.5}(pz)[Pt(CN)₄]} (IVa)
wherein D represents Nile Blue chloride.

7. The doped spin transition material according to any of the preceding claims, comprising from 0.000001 to 10% by moles based on the number of moles of iron atoms.

8. A method for preparing a doped spin transition material according to any of the preceding claims, comprising the step consisting of mixing the dopant with at least one of the constituents of the spin transition material.

9. A composition comprising the thermochromic spin transition material according to any of claims 1 to 8.

10. A method for detecting a temperature variation on either side of a given temperature, by means of a composition according to claim 8, such that the material has a spin transition temperature corresponding to said given temperature.

11. A method for visually detecting the iced condition or which may be iced of a roadway comprising the exposure in the environment of the roadway of a composition comprising a doped thermochromic spin transition material according to claim 9, **characterized in that** said spin transition of said material occurs at a temperature comprised between 0°C and +3°C.

12. A detection method according to claim 11 such that said composition is applied on said roadway or on a signage element.

13. A device for detecting the iced condition or which may be iced of a roadway comprising a doped spin transition material according to any of claims 1 to 8.

14. The device according to claim 13, **characterized in that** this is a signage element, such as an indicator panel or a patch.

15. A roadway coating comprising a doped thermochromic spin transition material as defined according to any of claims 1 to 8.

16. The coating according to claim 15, such that it is a paint.

17. The use of a doped to the spin transition material according to any of claims 1 to 8 for detecting the iced condition or which may be iced of a roadway.
